(19) Europäisches Patentamt
European Patent Office
Office européen des brevets

(11) EP 4 503 831 A1

(12) **EUROPEAN PATENT APPLICATION**
published in accordance with Art. 153(4) EPC

(43) Date of publication:
**05.02.2025 Bulletin 2025/06**

(21) Application number: **23791244.9**

(22) Date of filing: **18.04.2023**

(51) International Patent Classification (IPC):
***H04W 74/08*** *(2024.01)*

(52) Cooperative Patent Classification (CPC):
**H04W 72/0446; H04W 74/08**

(86) International application number:
**PCT/CN2023/089041**

(87) International publication number:
**WO 2023/202589 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.04.2022 CN 202210417982**

(71) Applicant: **Huawei Technologies Co., Ltd.**
**Shenzhen, Guangdong 518129 (CN)**

(72) Inventors:
- **SHI, Meng**
  **Shenzhen, Guangdong 518129 (CN)**
- **ZHANG, Jiayin**
  **Shenzhen, Guangdong 518129 (CN)**
- **LIU, Rongkuan**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **INITIAL ACCESS METHOD AND COMMUNICATION APPARATUS**

(57) This application provides an initial access method and a communication apparatus to reduce an initial access delay and improve access efficiency, and can be applied to various communication systems such as a 5G system, a 6G system, a satellite communication system, an internet of vehicles system, and a V2X system. The method includes: A network device and a terminal device receive one or more SSBs on a time domain resource that carries a synchronization signal/physical broadcast channel SS/PBCH block SSB set in one SSB period, and access a network based on the received SSB. The SSB set is a set including one or more SSBs, a maximum value of a quantity of SSBs in the SSB set is $L_{max}$, $L_{max}$>64, and a time-frequency resource of the one or more SSBs is related to an SFN that carries the SSB.

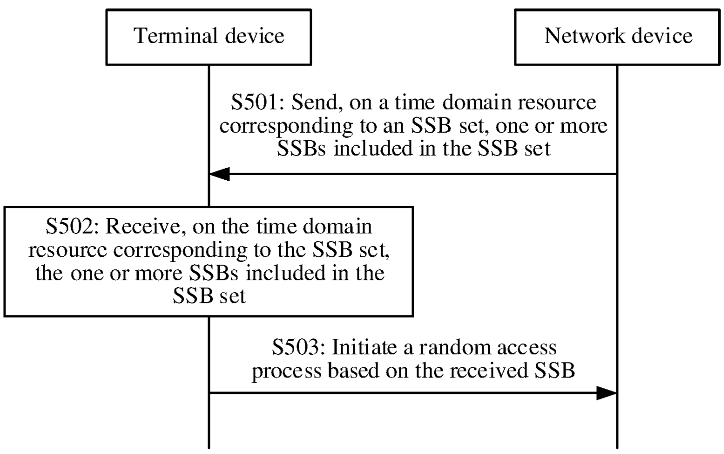


FIG. 5

EP 4 503 831 A1

## Description

This application claims priority to Chinese Patent Application No. 202210417982.9, filed with the China National Intellectual Property Administration on April 20, 2022 and entitled "INITIAL ACCESS METHOD AND COMMUNICATION APPARATUS", which is incorporated herein by reference in its entirety.

## TECHNICAL FIELD

This application relates to the communication field, and in particular, to an initial access method and a communication apparatus.

## BACKGROUND

At present, a terminal device obtains downlink synchronization and a master information block (master information block, MIB) by receiving a synchronization signal/physical broadcast channel block (synchronization signal/physical broadcast channel block, SSB) sent by a network device; obtains location information of a system information block (system information block, SIB) 1 and remaining minimum system information (remaining minimum system information, RMSI) based on the MIB; obtains, based on the location information, information about a type0 physical downlink control channel (type0 physical downlink control channel, type0-PDCCH) carrying a control resource set 0 (control resource set, CORESETO) and information about a physical downlink shared channel (physical downlink shared channel, PDSCH) carrying the SIB1; demodulates the SIB1 to obtain random access configuration information; and then initiates a random access process to the network device to complete initial access.

In the foregoing initial access process, downlink signaling such as the SSB, the CORESETO, and the SIB1 may be sent by using beams. Generally, a plurality of beams are usually configured for one cell, different beams cover different areas in the cell, and all beams cover all areas in the cell, to meet initial access requirements of terminal devices located in different areas in the cell.

However, in an existing protocol, a maximum of 64 beams can be supported. When a cell needs large coverage but coverage of a single beam is limited, beams with an existing quantity are insufficient to support an initial access requirement of the entire cell. In addition, in an unlicensed band (unlicensed band), initial access needs to be completed by using a listen before talk (listen before talk, LBT) mechanism. If the LBT on a beam fails, the beam may fail to send an SSB in a current SSB period, increasing an initial access delay of a terminal device in a coverage area of the beam.

## SUMMARY

Embodiments of this application provide an initial access method and a communication apparatus, to reduce an initial access delay and improve access efficiency.

To achieve the foregoing objective, the following technical solutions are used in this application.

According to a first aspect, an initial access method is provided and is applicable to a terminal device. The method includes: receiving, on a time domain resource corresponding to a synchronization signal/physical broadcast channel SS/PBCH block SSB set, one or more SSBs included in the SSB set. A maximum value of a quantity of SSBs in the SSB set is $L_{max}$, $L_{max}$>64, and a time-frequency resource of the one or more SSBs is related to a system frame number (system frame number, SFN) that carries the one or more SSBs.

Based on the methods according to the first aspect and the following second aspect, the time domain resource corresponding to the SSB set is related to the SFN and is not limited by a half frame (half frame, a first half frame or a latter half frame), so that cross-frame transmission of SSBs can be implemented, to support a larger quantity of SSBs. A network device may send some or all of the SSBs in the SSB set on the time domain resource by using more beams than those in an existing solution, to cover signals in an entire area of the network device, and enhance a signal coverage capability of the network device in a large area. In this way, a terminal device located at any location in the coverage area of the network device learns a specific location of the time domain resource, quickly receives an SSB on the time domain resource, and quickly completes initial access based on the received SSB, thereby reducing an initial access delay and improving access efficiency.

In a possible design solution, the time domain resource is in one or more earliest consecutive system frames in time domain in the SSB period.

Further, the system frame includes a plurality of consecutive slots, and at least one of the plurality of slots is capable of supporting transmission of at least two SSBs. It can be understood that a maximum of $L_{max}$ SSBs are transmitted in one SSB period. Specifically, that one slot is capable of supporting transmission of at least two SSBs can be understood as follows: Two or more SSBs can be transmitted in one slot. That at least one of the plurality of slots is capable of supporting transmission of at least two SSBs may include the following cases:

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of some SSBs cross two slots. In a case in which SSBs cross two slots, if five SSBs are transmitted in two slots, it may be considered that 2.5 SSBs are transmitted in one slot or that more than two SSBs are transmitted in one slot.

The system frame includes a plurality of consecutive slots, at least one of the plurality of slots is capable of supporting transmission of at least two SSBs, and a maximum of $L_{max}$ SSBs are transmitted in one SSB period. In other words, SSB sending may be completed in a start period of time of one SSB period, to reserve a sufficient processing time period for subsequent downlink signaling such as a CORESETO, a SIB1, a random access response (random access response, RAR), and a message 4 (Msg4), and subsequent uplink signaling such as a physical random access channel (physical random access channel, PRACH) and a message 5 (Msg5). This can ensure that any terminal device can complete an initial access process in one SSB period, thereby further reducing the initial access delay and improving access efficiency.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

It should be noted that a quantity of slots (slots) in one system frame (system frame) is usually related to a subcarrier spacing (subcarrier spacing, SCS). Therefore, after the maximum quantity $L_{max}$ of SSBs supported by the SSB set increases, for example, the maximum quantity may be 128 or 256, corresponding SSB patterns (patterns), that is, the following solution 1 to solution 5, are designed in this embodiment of this application, to provide resources for a larger quantity of SSBs. The following uses examples for description.

Solution 1: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu}$$

. When

$$SFN_{SSB} \bmod (T_{SSB_period}/T_{frame,\mu}) = \{0,1,\ldots,\left\lfloor \frac{L_{max}}{N_{SSB}^{frame,\mu}} \right\rfloor - 1\}, \quad n = \{0,1,2,\ldots,N_{slot}^{frame,\mu} - 1\}$$

; or when

$$SFN_{SSB} \bmod (T_{SSB_period}/T_{frame,\mu}) = \left\lfloor \frac{L_{max}}{N_{SSB}^{frame,\mu}} \right\rfloor, \quad n = \{0,1,2,\ldots,\left\lfloor \frac{L_{max} \bmod N_{SSB}^{frame,\mu}}{N_{SSB}^{slot,\mu}} \right\rfloor - 1\}$$

. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,8}, and {2,8} indicates that start symbols of two SSBs in one slot are a symbol 2 and a symbol 8, respectively.

Solution 2: A subcarrier spacing SCS may be 120 kilohertz kHz, and a symbol location of the time domain resource in the one or more consecutive system frames may satisfy the following:

$$(X+28*n+N_{slot}^{frame,\mu}*14*SFN_{SSB}) \bmod N_{symbol}^{frame,\mu}$$

. When

$$SFN_{SSB} \bmod (T_{SSB_{period}}/T_{frame,\mu}) = \{0,1,\ldots,\left\lfloor \frac{L_{max}}{N_{SSB}^{frame,\mu}} \right\rfloor - 1\}, \quad n = \{0,1,2,\ldots,N_{slot}^{frame,\mu} - 1\}$$

; or when

$$SFN_{SSB} \bmod (T_{SSB_{period}}/T_{frame,\mu}) = \left\lfloor \frac{L_{max}}{N_{SSB}^{frame,\mu}} \right\rfloor, \quad n = \{0,1,2,\ldots,\left\lfloor \frac{L_{max} \bmod N_{SSB}^{frame,\mu}}{N_{SSB}^{slot,\mu}} \right\rfloor - 1\}$$

. n is a slot number, $N_{symbol}^{frame,\mu}$ is a quantity of symbols in one system frame corresponding to a corresponding subcarrier spacing,

$N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

Solution 3: A subcarrier spacing SCS may be 480 kilohertz kHz or 960 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu}$$

. When

$$SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\},\quad n=\{0,1,2,\ldots,N_{slot}^{frame,\mu}-1\}$$

; or when

$$SFN_{SSB} \bmod (T_{SSB_period}/T_{frame,\mu})=\left\lfloor\frac{L_{max}}{N_{SSB}^{frame,\mu}}\right\rfloor,\quad n=\{0,1,2,\ldots,\left\lfloor\frac{L_{max} \bmod N_{SSB}^{frame,\mu}}{N_{SSB}^{slot,\mu}}\right\rfloor-1\}$$

. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Solution 4: A subcarrier spacing SCS may be 240 kilohertz kHz, and a symbol location of the time domain resource in the one or more consecutive system frames may satisfy the following:

$$(X+56*n+N_{slot}^{frame,\mu}*14*SFN_{SSB}) \bmod N_{symbol}^{frame,\mu}$$

. When

$$SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\},\quad n=\{0,1,2,\ldots,N_{slot}^{frame,\mu}-1\}$$

; or when

$$SFN_{SSB} \bmod (T_{SSB_period}/T_{frame,\mu})=\left\lfloor\frac{L_{max}}{N_{SSB}^{frame,\mu}}\right\rfloor,\quad n=\{0,1,2,\ldots,\left\lfloor\frac{L_{max} \bmod N_{SSB}^{frame,\mu}}{N_{SSB}^{slot,\mu}}\right\rfloor-1\}$$

. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

It should be noted that, only a quantity of slots for transmitting SSBs is increased in the foregoing solution 1 to solution 4 without a half-frame limitation in the existing solution. However, an SSB pattern in a slot, that is, a symbol-level SSB pattern, is the same as that in an existing protocol, has a small change, and is technically easier to implement.

Solution 5: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu}$$

. When

$$SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\},\quad n=\{0,1,2,\ldots,N_{slot}^{frame,\mu}-1\}$$

; or

when $SFN_{SSB}\ mod(T_{SSB_period}/T_{frame,\mu}) = \left\lfloor \frac{L_{max}}{N_{SSB}^{frame,\mu}} \right\rfloor,\ n = \{0,1,2,\ldots,\ \left\lceil \frac{L_{max}\ mod\ N_{SSB}^{frame,\mu}}{N_{SSB}^{slot,\mu}} \right\rceil - 1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

The solution 5 is different from the solution 1 to the solution 4 in that, a half-frame limitation is removed, a quantity of slots for transmitting SSBs is increased, and a quantity of symbols for transmitting SSBs in one slot is increased. In other words, in the solution 5, an equal quantity of SSBs can be sent in a shorter time, so that the initial access delay of the terminal device is further reduced and access efficiency is further improved.

Because the quantity of SSBs increases, a data volume of SSB-related indication information also increases accordingly. In this case, it is necessary to improve a transmission mode of the indication information. The SSB-related indication information may include a currently transmitted SSB index (SSB index), and a quantity of SSBs and an index of the SSB that are actually sent in one SSB period. It should be understood that in one SSB period, the quantity of actually sent SSBs is less than or equal to the maximum value $L_{max}$ of SSBs that can be supported by the SSB set. The following provides detailed descriptions.

In a possible design solution, the method according to the first aspect may further include: receiving SSB indexes. Values of the SSB indexes may be {0,1, ..., $L_{max}$ - 1}, and each of the SSB indexes is used to uniquely indicate an SSB, so that the terminal device distinguishes between different SSBs.

Optionally, some bits of the SSB index may be carried by reusing some information elements (information elements, IEs) in a master information block MIB and/or in a physical broadcast channel PBCH, to reduce resources used and further improve efficiency.

For example, some bits of the SSB index are carried by reusing a first information element in the master information block MIB and/or a second information element in the physical broadcast channel PBCH. The first information element may include one or more of the following: a 4th least significant bit of a system frame number SFN (4th LSB of SFN) or a spare (spare) bit in the MIB. The second information element may include one or more of the following: a half-frame indication (half frame indication) $a_{\bar{A}+4}$ or 6th to 4th least significant bits $a_{\bar{A}+5}$, $a_{\bar{A}+6}$, $a_{\bar{A}+7}$ of the SSB index (6th-4th LSB bits of candi. SSB index) in a payload (payload) of the PBCH.

In a possible design solution, the method according to the first aspect may further include: receiving a quantity of first SSBs and an index of the first SSB. The first SSB is an actually sent SSB in the $L_{max}$ SSBs in one SSB period, and the quantity of first SSBs is not greater than $L_{max}$, so that the terminal device learns which SSBs are actually sent in one SSB period, and correspondingly adjusts an access policy. This further reduces the initial access delay and improves access efficiency.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in a group index (inoneGroup) and an intra-group index (groupPresence) of the RRC signaling.

It should be noted that the SSB-related indication information may be alternatively transmitted by reusing another information element in the MIB and/or in the PBCH, and/or reusing an information element in other signaling, and/or adding signaling, and/or adding an information element in existing signaling, and/or the like. A specific transmission mode of the SSB-related indication information is not limited in this embodiment of this application, provided that transmission of indication information of all actually sent SSBs can be completed in one SSB period.

In a possible design solution, the $L_{max}$ SSBs may include an SSB#i whose index is i, i is a natural number, and $0 \leq i \leq L_{max} - 1$. Optionally, the SSB#i and a control resource set CORESET0#i corresponding to the SSB#i occupy a same time domain resource and different frequency domain resources, and the SSB#i and a system information block SIB1#i corresponding to the SSB#i occupy a same time domain resource and different frequency domain resources. In other words, the SSB, the CORESETO, and the SIB1 may occupy a same time domain resource through frequency division multiplexing. For example, when time domain resources are limited and frequency domain resources are relatively sufficient, the SSB, the CORESETO, and the SIB1 may be simultaneously transmitted (for example, transmitted in a same symbol) to reserve a sufficient time period for subsequent initial access-related downlink signaling and uplink signaling, or may be transmitted in advance. This further reduces the initial access delay.

Alternatively, the SSB#i and a control resource set CORESET0#i corresponding to the SSB#i occupy different time domain resources, and the SSB#i and a system information block SIB1#i corresponding to the SSB#i occupy different time domain resources. In other words, the SSB, the CORESETO, and the SIB1 may occupy resources through time division multiplexing. For example, when frequency domain resources are limited and time domain resources are relatively sufficient, the SSB, the CORESETO, and the SIB1 may be transmitted in different time periods, so that a sufficient signal transmission/processing time period can be reserved for a terminal device that is far away from a cell center and/or that has a poor processing capability. This improves a success rate and robustness of initial access.

Further, that the SSB#i and a system information block SIB1#i corresponding to the SSB#i occupy different time domain resources may include: Time domain resources occupied by the system information block SIB1#i corresponding to the SIB1#i include and are more than time domain resources occupied by the SSB#i. Because the quantity of SSBs increases, a data volume of information that needs to be transmitted in SIB1s corresponding to the SSBs also increases. In this case, more time domain resources are reserved for the SIB1s, to ensure that transmission of the SSBs and the SIB1s can be completed as soon as possible. This further reduces the initial access delay.

In a possible design solution, the method according to the first aspect may further include: receiving, twice in one SSB period, two CORESET0#i and two SIB1#i that are corresponding to the SSB#i.In this way, the terminal device can perform combined decoding on the CORESETOs or the SIB1s received twice, thereby improving a decoding success rate and improving initial access reliability and efficiency.

Optionally, resources used for receiving twice the two CORESET0#i and the two SIB1#i that are corresponding to the SSB#i may satisfy the following: $n_0 = (O * 2^{\mu} + \lfloor i * M \rfloor) \bmod N_{slot}^{frame,\mu}$, $n_1 = n_0 + Y$, $SFNc_n_0 = \lfloor (O * 2^{\mu} + \lfloor i * M \rfloor) / N_{slot}^{frame,\mu} \rfloor$, and $SFN_{C_n1} = \lfloor (O * 2^{\mu} + \lfloor i * M \rfloor + Y) / N_{slot}^{frame,\mu} \rfloor$. $n_0$ is a start slot number of the CORESET0#i that is corresponding to the SSB#i and that is received for the first time, $n_1$ is a start slot number of the CORESET0#i that is corresponding to the SSB#i and that is received for the second time, Y is a slot difference between start slots of the two CORESET0#i that are corresponding to the SSB#i and that are received twice, and Y is an integer greater than or equal to 0. O is an offset, relative to a start moment of an even-numbered system frame, of the start slot of the CORESET0#i that is corresponding to the SSB#i and that is received for the first time, and is measured in milliseconds ms. $2^{\mu}$ is a quantity of slots in one millisecond ms corresponding to different SCSs, and SCS = {15 kHz, 30 kHz, 60 kHz,..} is respectively corresponding to $\mu$ = {0,1,2, ...}. M is a time interval between search spaces of CORESETOs corresponding to two adjacent SSBs. $SFNc_n_0$ is a system frame number of the start slot of the CORESET0#i that is corresponding to the SSB#i and that is received for the first time. $SFNc_n_1$ is a system frame number of the start slot of the CORESET0#i that is corresponding to the SSB#i and that is received for the second time. $N_{slot}^{frame,\mu}$ is a quantity of slots in one system frame. In other words, a period of time is reserved between two transmissions of the CORESETOs and the SIB1s, so that a sufficient time period is reserved for a terminal device that is far away from a cell center and/or that has a limited processing capability. This improves a success rate and robustness of initial access.

In a possible design solution, the method according to the first aspect may further include: sending random access channels PRACHs on ROs corresponding to the $L_{max}$ SSBs. A quantity Z of subframes including an RO in one system frame is one or more of 1, 2, 4, and 8, and/or a subframe including an RO in one system frame is one or more earliest consecutive subframes in time domain in the system frame and is in a same SSB period in time domain as the ROs corresponding to the $L_{max}$ SSBs. Similar to transmission of SSBs as early as possible in one SSB period, a period of time as early as possible in one RO period may be reserved for setting the ROs, so that any terminal device in the coverage area of the network device can select, from the ROs, an RO temporally closest to a moment at which downlink signaling is successfully demodulated, to initiate a random access process without waiting for an excessively long time. This further reduces the initial access delay.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, $N_{RO}^{group}$ is a quantity of ROs in one RO group, different RO groups are inconsecutive, and ROs in a same RO group are consecutive.

Further, different RO groups are inconsecutive, and ROs in a same RO group are consecutive. This can ensure that ROs in a same group are continuously transmitted and that a time interval is reserved between different RO groups, so that both a low delay requirement and a robustness requirement of initial access can be fulfilled.

In a possible design solution, there is an offset between a start slot of a time domain resource corresponding to an SSB and a start slot of an RO time domain resource corresponding to the SSB. The offset is greater than or equal to an uplink and downlink round trip time (round trip time, RTT) between the terminal device and an access network. This can ensure that a sufficient time period is reserved for a terminal device that is far away from a cell center and/or that has a limited processing capability. This improves a success rate and robustness of initial access.

The offset is used to represent a time interval between the SSB and the corresponding RO, and may be represented by using any time unit: a symbol (symbol), a slot (slot), a system frame (frame), a microsecond (micro-second, μs), a millisecond (mili-second, ms), a second (second, s), or the like. A value of the offset may be greater than or equal to the uplink and downlink round trip time RTT between the terminal device and the access network.

In a possible design solution, pieces of downlink signaling corresponding to a same SSB are transmitted in a same slot in a same beam direction. The downlink signaling may include one or more of the following: a control resource set 0 CORESETO, a system information block 1, a random access response RAR, a Msg4, paging, or other system information OSI. In this way, various pieces of downlink signaling corresponding to a same SSB may be transmitted in a same period of time by using a same beam, so that a beam switching probability can be reduced, and a switching delay problem caused by beam switching can be alleviated. This further reduces the initial access delay.

Similarly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5. In this way, various pieces of uplink signaling corresponding to a same SSB may also be transmitted in a same period of time by using a same beam, so that the beam switching probability can be reduced, and the switching delay problem caused by beam switching can be alleviated. This further reduces the initial access delay.

According to a second aspect, an initial access method is provided. The method includes: sending, on a time domain resource corresponding to a synchronization signal/physical broadcast channel SS/PBCH block SSB set, one or more SSBs in the SSB set. A maximum value of a quantity of SSBs in the SSB set is $L_{max}$, $L_{max}$>64, and a time-frequency resource of the one or more SSBs is related to a system frame number SFN that carries the one or more SSBs.

In a possible design solution, the time domain resource is in one or more earliest consecutive system frames in time domain in the SSB period.

Further, the system frame includes a plurality of consecutive slots, and at least one of the plurality of slots is capable of supporting transmission of at least two SSBs. It can be understood that a maximum of $L_{max}$ SSBs are transmitted in one SSB period. Specifically, that one slot is capable of supporting transmission of at least two SSBs can be understood as follows: Two or more SSBs can be transmitted in one slot. That at least one of the plurality of slots is capable of supporting transmission of at least two SSBs may include the following cases:

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of some SSBs cross two slots. In a case in which SSBs cross two slots, if five SSBs are transmitted in two slots, it may be considered that 2.5 SSBs are transmitted in one slot or that more than two SSBs are transmitted in one slot.

The system frame includes a plurality of consecutive slots, at least one of the plurality of slots is capable of supporting transmission of at least two SSBs, and a maximum of $L_{max}$ SSBs are transmitted in one SSB period.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

Solution 1: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu}$$

. When

$$SFN_{SSB} \bmod (T_{SSB_period}/T_{frame,\mu}) = \{0,1,\ldots,\left\lfloor \frac{L_{max}}{N_{SSB}^{frame,\mu}} \right\rfloor - 1\}, \quad n = \{0,1,2,\ldots,N_{slot}^{frame,\mu} - 1\}$$

; or when

$$SFN_{SSB} \bmod (T_{SSB_period}/T_{frame,\mu}) = \left\lfloor \frac{L_{max}}{N_{SSB}^{frame,\mu}} \right\rfloor, \quad n = \{0,1,2,\ldots,\left\lfloor \frac{L_{max} \bmod N_{SSB}^{frame,\mu}}{N_{SSB}^{slot,\mu}} \right\rfloor - 1\}$$

. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,8}, and {2,8} indicates that start symbols of two SSBs in one slot are a symbol 2 and a symbol 8, respectively.

Solution 2: A subcarrier spacing SCS may be 120 kilohertz kHz, and a symbol location of the time domain resource in the one or more consecutive system frames may satisfy the following: $(X+28*n+N_{slot}^{frame,\mu}*14*SFN_{SSB}) \bmod N_{symbol}^{frame,\mu}$. When $SFN_{SSB} \bmod (T_{SSB_{period}}/T_{frame,\mu})=\{0,1,\ldots,\left\lfloor \frac{L_{max}}{N_{SSB}^{frame,\mu}} \right\rfloor - 1\},\ n=\{0,1,2,\ldots,N_{slot}^{frame,\mu}-1\}$; or when $SFN_{SSB} \bmod (T_{SSB_{period}}/T_{frame,\mu})=\left\lfloor \frac{L_{max}}{N_{SSB}^{frame,\mu}} \right\rfloor,\ n=\{0,1,2,\ldots,\left\lfloor \frac{L_{max} \bmod N_{SSB}^{frame,\mu}}{N_{SSB}^{slot,\mu}} \right\rfloor - 1\}$. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

Solution 3: A subcarrier spacing SCS may be 480 kilohertz kHz or 960 kilohertz kHz, and a symbol location of the time domain resource in the one or more consecutive system frames may satisfy the following: $(X+14*n+N_{slot}^{frame,\mu}*14*SFN_{SSB}) \bmod N_{symbol}^{frame,\mu}$. When $SFN_{SSB} \bmod (T_{SSB_period}/T_{frame,\mu})=\{0,1,\ldots,\left\lfloor \frac{L_{max}}{N_{SSB}^{frame,\mu}} \right\rfloor - 1\},\ n=\{0,1,2,\ldots,N_{slot}^{frame,\mu}-1\}$; or when $SFN_{SSB} \bmod (T_{SSB_period}/T_{frame,\mu})=\left\lfloor \frac{L_{max}}{N_{SSB}^{frame,\mu}} \right\rfloor,\ n=\{0,1,2,\ldots,\left\lfloor \frac{L_{max} \bmod N_{SSB}^{frame,\mu}}{N_{SSB}^{slot,\mu}} \right\rfloor - 1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Solution 4: A subcarrier spacing SCS may be 240 kilohertz kHz, and a symbol location of the time domain resource in the one or more consecutive system frames may satisfy the following: $(X+56*n+N_{slot}^{frame,\mu}*14*SFN_{SSB}) \bmod N_{symbol}^{frame,\mu}$. When $SFN_{SSB} \bmod (T_{SSB_period}/T_{frame,\mu})=\{0,1,\ldots,\left\lfloor \frac{L_{max}}{N_{SSB}^{frame,\mu}} \right\rfloor - 1\},\ n=\{0,1,2,\ldots,N_{slot}^{frame,\mu}-1\}$; or

when $SFN_{SSB}\ mod(T_{SSB_period}/T_{frame,\mu})=\left\lfloor \frac{L_{max}}{N_{SSB}^{frame,\mu}} \right\rfloor,\ n=\{0,1,2,...,\ \left\lfloor \frac{L_{max}\ mod\ N_{SSB}^{frame,\mu}}{N_{SSB}^{slot,\mu}} \right\rfloor -1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

Solution 5: A subcarrier spacing SCS may be 30 kilohertz kHz, and a symbol location of the time domain resource in the one or more consecutive system frames may satisfy the following: $(X+14*n+N_{slot}^{frame,\mu}*14*SFN_{SSB})\ mod\ N_{symbol}^{frame,\mu}$. When $SFN_{SSB}\ mod(T_{SSB_period}/T_{frame,\mu})=\{0,1,...,\left\lfloor \frac{L_{max}}{N_{SSB}^{frame,\mu}} \right\rfloor -1\}$, $n=\{0,1,2,...,N_{slot}^{frame,\mu}-1\}$; or when $SFN_{SSB}\ mod(T_{SSB_period}/T_{frame,\mu})=\left\lfloor \frac{L_{max}}{N_{SSB}^{frame,\mu}} \right\rfloor,\ n=\{0,1,2,...,\ \left\lceil \frac{L_{max}\ mod\ N_{SSB}^{frame,\mu}}{N_{SSB}^{slot,\mu}} \right\rceil -1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

In a possible design solution, the method according to the second aspect may further include: sending SSB indexes. Values of the SSB indexes may be {0,1, ..., $L_{max}$ - 1}, and each of the SSB indexes is used to uniquely indicate an SSB.

Optionally, some bits of the SSB index may be carried by reusing some information elements in a master information block MIB and/or in a physical broadcast channel PBCH.

For example, some bits of the SSB index are carried by reusing a first information element in the master information block MIB and/or a second information element in the physical broadcast channel PBCH. The first information element may include one or more of the following: a $4^{th}$ least significant bit of a system frame number SFN ($4^{th}$ LSB of SFN) or a spare (spare) bit in the MIB. The second information element may include one or more of the following: a half-frame indication (half frame indication) $a_{\bar{A}+4}$ or $6^{th}$ to $4^{th}$ least significant bits $a_{\bar{A}+5}$, $a_{\bar{A}+6}$, $a_{\bar{A}+7}$ of the SSB index ($6^{th}$-$4^{th}$ LSB bits of candi. SSB index) in a payload of the PBCH.

In a possible design solution, the method according to the second aspect may further include: sending a quantity of first SSBs and an index of the first SSB. The first SSB is an actually sent SSB in the $L_{max}$ SSBs in one SSB period, and the quantity of first SSBs is not greater than $L_{max}$.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in a group index (inoneGroup) and an intra-group index (groupPresence) of the RRC signaling.

In a possible design solution, the $L_{max}$ SSBs may include an SSB#i whose index is i, i is a natural number, and $0 \le i \le L_{max} - 1$. Optionally, the SSB#i and a control resource set CORESET0#i corresponding to the SSB#i occupy a same time domain resource and different frequency domain resources, and the SSB#i and a system information block SIB1#i corresponding to the SSB#i occupy a same time domain resource and different frequency domain resources. Alternatively, the SSB#i and a control resource set CORESET0#i corresponding to the SSB#i occupy different time domain resources, and the SSB#i and a system information block SIB1#i corresponding to the SSB#i occupy different time domain resources.

Further, that the SSB#i and a system information block SIB1#i corresponding to the SSB#i occupy different time domain resources may include: Time domain resources occupied by the system information block SIB1#i corresponding to the SIB1#i include and are more than time domain resources occupied by the SSB#i.

In a possible design solution, the method according to the second aspect may further include: sending, twice in one SSB period, two CORESET0#i and two SIB1#i that are corresponding to the SSB#i.

Optionally, resources used for sending twice the two CORESET0#i and the two SIB1#i that are corresponding to the SSB#i may satisfy the following: $n_0 = (O * 2^{\mu} + \lfloor i * M \rfloor) \bmod N_{slot}^{frame,\mu}$, $n_1 = n_0 + Y$, $SFNc_n_0 = \lfloor (O * 2^{\mu} + \lfloor i * M \rfloor) / N_{slot}^{frame,\mu} \rfloor$, and $SFN_{C_n_1} = \lfloor (O * 2^{\mu} + \lfloor i * M \rfloor + Y) / N_{slot}^{frame,\mu} \rfloor$. $n_0$ is a start slot number of the CORESET0#i that is corresponding to the SSB#i and that is sent for the first time, $n_1$ is a start slot number of the CORESET0#i that is corresponding to the SSB#i and that is sent for the second time, Y is a slot difference between start slots of the two CORESET0#i that are corresponding to the SSB#i and that are sent twice, and Y is an integer greater than or equal to 0. O is an offset, relative to a start moment of an even-numbered system frame, of the start slot of the CORESET0#i that is corresponding to the SSB#i and that is sent for the first time, and is measured in milliseconds ms. $2^{\mu}$ is a quantity of slots in one millisecond ms corresponding to different SCSs, and SCS = {15 kHz, 30 kHz, 60 kHz,..} is respectively corresponding to $\mu$ = {0,1,2, ...}. M is a time interval between search spaces of CORESETOs corresponding to two adjacent SSBs. $SFNc_n_0$ is a system frame number of the start slot of the CORESET0#i that is corresponding to the SSB#i and that is sent for the first time. $SFNc_n_1$ is a system frame number of the start slot of the CORESET0#i that is corresponding to the SSB#i and that is sent for the second time. $N_{slot}^{frame,\mu}$ is a quantity of slots in one system frame.

In a possible design solution, the method according to the second aspect may further include: sending random access channels PRACHs on random access occasions ROs corresponding to the $L_{max}$ SSBs. A quantity Z of subframes including an RO in one system frame is one or more of 1, 2, 4, and 8, and/or subframes including ROs in one system frame are a plurality of earliest consecutive subframes in time domain in the system frame and are in a same SSB period in time domain as the ROs corresponding to the $L_{max}$ SSBs.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, $N_{RO}^{group}$ is a quantity of ROs in one RO group, different RO groups are inconsecutive, and ROs in a same RO group are consecutive.

Further, different RO groups are inconsecutive, and ROs in a same RO group are consecutive.

In a possible design solution, there is an offset between a start slot of a time domain resource corresponding to an SSB and a start slot of an RO time domain resource corresponding to the SSB. The offset is greater than or equal to an uplink and downlink round trip time RTT between a terminal device and an access network.

In a possible design solution, pieces of downlink signaling corresponding to a same SSB are transmitted in a same slot in a same beam direction. The downlink signaling may include one or more of the following: a control resource set 0 CORESE0, a system information block 1 SIB1, a random access response RAR, a Msg4, paging, or other system information OSI.

Similarly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5.

In addition, for technical effects of the initial access method according to the second aspect, refer to the technical effects of the initial access method according to the first aspect. Details are not described herein again.

According to a third aspect, a communication apparatus is provided, including a receiving module. The receiving module is configured to receive, on a time domain resource of a synchronization signal/physical broadcast channel SS/PBCH block SSB set, one or more SSBs included in the SSB set. A maximum value of a quantity of SSBs in the SSB set is $L_{max}$, $L_{max}$>64, and a time-frequency resource of the one or more SSBs is related to a system frame number SFN that carries the one or more SSBs.

In a possible design solution, the time domain resource is in one or more earliest consecutive system frames in time domain in the SSB period.

Further, the system frame includes a plurality of consecutive slots, and at least one of the plurality of slots is capable of supporting transmission of at least two SSBs. It can be understood that a maximum of $L_{max}$ SSBs are transmitted in one SSB period. Specifically, that one slot is capable of supporting transmission of at least two SSBs can be understood as follows: Two or more SSBs can be transmitted in one slot. That at least one of the plurality of slots is capable of supporting transmission of at least two SSBs may include the following cases:

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of some SSBs cross two slots. In a case in which SSBs cross two slots, if five SSBs are transmitted in two slots, it may be considered that 2.5 SSBs are transmitted in one slot or that more than two SSBs are transmitted in one slot.

The system frame includes a plurality of consecutive slots, at least one of the plurality of slots is capable of supporting transmission of at least two SSBs, and a maximum of $L_{max}$ SSBs are transmitted in one SSB period.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

It should be noted that a quantity of slots (slots) in one system frame (system frame) is usually related to a subcarrier spacing (subcarrier spacing, SCS). Therefore, after the maximum quantity $L_{max}$ of SSBs supported by the SSB set increases, for example, the maximum quantity may be 128 or 256, corresponding SSB patterns (patterns), that is, the following solution 1 to solution 5, are designed in this embodiment of this application, to provide resources for a larger quantity of SSBs. The following uses examples for description.

Solution 1: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu}$$

. When

$$SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\}\ ,\quad n=\{0,1,2,\ldots,N_{slot}^{frame,\mu}-1\}$$

; or when

$$SFN_{SSB} \bmod (T_{SSB_period}/T_{frame,\mu})=\left\lfloor\frac{L_{max}}{N_{SSB}^{frame,\mu}}\right\rfloor,\ n=\{0,1,2,\ldots,\left\lceil\frac{L_{max} \bmod N_{SSB}^{frame,\mu}}{N_{SSB}^{slot,\mu}}\right\rceil-1\}$$

. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,8}, and {2,8} indicates that start symbols of two SSBs in one slot are a symbol 2 and a symbol 8, respectively.

Solution 2: A subcarrier spacing SCS may be 120 kilohertz kHz, and a symbol location of the time domain resource in the one or more consecutive system frames may satisfy the following:

$$(X+28*n+N_{slot}^{frame,\mu}*14*SFN_{SSB}) \bmod N_{symbol}^{frame,\mu}$$

. When

$$SFN_{SSB} \bmod (T_{SSB_{period}}/T_{frame,\mu})=\{0,1,\ldots,\left\lfloor\frac{L_{max}}{N_{SSB}^{frame,\mu}}\right\rfloor-1\},\ n=\{0,1,2,\ldots,N_{slot}^{frame,\mu}-1\}$$

; or when

$$SFN_{SSB} \bmod (T_{SSB_{period}}/T_{frame,\mu})=\left\lfloor\frac{L_{max}}{N_{SSB}^{frame,\mu}}\right\rfloor,\ n=\{0,1,2,\ldots,\left\lceil\frac{L_{max} \bmod N_{SSB}^{frame,\mu}}{N_{SSB}^{slot,\mu}}\right\rceil-1\}$$

. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a

quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

Solution 3: A subcarrier spacing SCS may be 480 kilohertz kHz or 960 kilohertz kHz, and a symbol location of the time domain resource in the one or more consecutive system frames may satisfy the following: $(X+14*n+N_{slot}^{frame,\mu}*14*SFN_{SSB}) \bmod N_{symbol}^{frame,\mu}$. When $SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\}$, $n=\{0,1,2,\ldots,N_{slot}^{frame,\mu}-1\}$; or when $SFN_{SSB} \bmod (T_{SSB_period}/T_{frame,\mu})=\left\lfloor\frac{L_{max}}{N_{SSB}^{frame,\mu}}\right\rfloor$, $n=\{0,1,2,\ldots,\left\lfloor\frac{L_{max} \bmod N_{SSB}^{frame,\mu}}{N_{SSB}^{slot,\mu}}\right\rfloor-1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Solution 4: A subcarrier spacing SCS may be 240 kilohertz kHz, and a symbol location of the time domain resource in the one or more consecutive system frames may satisfy the following: $(X+56*n+N_{slot}^{frame,\mu}*14*SFN_{SSB}) \bmod N_{symbol}^{frame,\mu}$. When $SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\}$, $n=\{0,1,2,\ldots,N_{slot}^{frame,\mu}-1\}$; or when $SFN_{SSB} \bmod (T_{SSB_period}/T_{frame,\mu})=\left\lfloor\frac{L_{max}}{N_{SSB}^{frame,\mu}}\right\rfloor$, $n=\{0,1,2,\ldots,\left\lfloor\frac{L_{max} \bmod N_{SSB}^{frame,\mu}}{N_{SSB}^{slot,\mu}}\right\rfloor-1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

Solution 5: A subcarrier spacing SCS may be 30 kilohertz kHz, and a symbol location of the time domain resource in the one or more consecutive system frames may satisfy the following: $(X+14*n+N_{slot}^{frame,\mu}*14*SFN_{SSB}) \bmod N_{symbol}^{frame,\mu}$. When $SFN_{SSB} \bmod (T_{SSB_period}/T_{frame,\mu})=\{0,1,\ldots,\left\lfloor\frac{L_{max}}{N_{SSB}^{frame,\mu}}\right\rfloor-1\}$, $n=\{0,1,2,\ldots,N_{slot}^{frame,\mu}-1\}$; or when $SFN_{SSB} \bmod (T_{SSB_period}/T_{frame,\mu})=\left\lfloor\frac{L_{max}}{N_{SSB}^{frame,\mu}}\right\rfloor$, $n=\{0,1,2,\ldots,\left\lceil\frac{L_{max} \bmod N_{SSB}^{frame,\mu}}{N_{SSB}^{slot,\mu}}\right\rceil-1\}$. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

The solution 5 is different from the solution 1 to the solution 4 in that, a half-frame limitation is removed, a quantity of slots for transmitting SSBs is increased, and a quantity of symbols for transmitting SSBs in one slot is increased. In other words, in the solution 5, an equal quantity of SSBs can be sent in a shorter time.

Because the quantity of SSBs increases, a data volume of SSB-related indication information also increases accordingly. In this case, it is necessary to improve a transmission mode of the indication information. The SSB-related indication information may include a currently transmitted SSB index (SSB index), and a quantity of SSBs and an index of the SSB that are actually sent in one SSB period. It should be understood that in one SSB period, the quantity of actually sent SSBs is less than or equal to the maximum value $L_{max}$ of SSBs that can be supported by the SSB set. The following provides detailed descriptions.

In a possible design solution, the receiving module is further configured to receive SSB indexes. Values of the SSB indexes may be {0,1, ..., $L_{max}$ - 1}, and each of the SSB indexes is used to uniquely indicate an SSB.

Optionally, some bits of the SSB index may be carried by reusing some information elements (information elements, IEs) in a master information block MIB and/or in a physical broadcast channel PBCH.

For example, some bits of the SSB index are carried by reusing a first information element in the master information block MIB and/or a second information element in the physical broadcast channel PBCH. The first information element may include one or more of the following: a 4th least significant bit of a system frame number SFN (4th LSB of SFN) or a spare (spare) bit in the MIB. The second information element may include one or more of the following: a half-frame indication (half frame indication) $a_{\bar{A}+4}$ or 6th to 4th least significant bits $a_{\bar{A}+5}$, $a_{\bar{A}+6}$, $a_{\bar{A}+7}$ of the SSB index (6th-4th LSB bits of candi. SSB index) in a payload (payload) of the PBCH.

In a possible design solution, the receiving module is further configured to receive a quantity of first SSBs and an index of the first SSB. The first SSB is an actually sent SSB in the $L_{max}$ SSBs in one SSB period. The first SSB is an actually sent SSB in the $L_{max}$ SSBs in one SSB period, and the quantity of first SSBs is not greater than $L_{max}$.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in a group index (inoneGroup) and an intra-group index (groupPresence) of the RRC signaling.

In a possible design solution, the $L_{max}$ SSBs may include an SSB#i whose index is i, i is a natural number, and $0 \le i \le L_{max} - 1$. Optionally, the SSB#i and a control resource set CORESET0#i corresponding to the SSB#i occupy a same time domain resource and different frequency domain resources, and the SSB#i and a system information block SIB1#i corresponding to the SSB#i occupy a same time domain resource and different frequency domain resources.

Alternatively, the SSB#i and a control resource set CORESET0#i corresponding to the SSB#i occupy different time domain resources, and the SSB#i and a system information block SIB1#i corresponding to the SSB#i occupy different time domain resources.

Further, that the SSB#i and a system information block SIB1#i corresponding to the SSB#i occupy different time domain resources may include: Time domain resources occupied by the system information block SIB1#i corresponding to the SIB1#i include and are more than time domain resources occupied by the SSB#i.

In a possible design solution, the receiving module is further configured to receive, twice in one SSB period, two CORESET0#i and two SIB1#i that are corresponding to the SSB#i.

Optionally, resources used for receiving twice the two CORESET0#i and the two SIB1#i that are corresponding to the SSB#i may satisfy the following: $n_0 = (O * 2^{\mu} + \lfloor i * M \rfloor) \bmod N_{slot}^{frame,\mu}$, $n_1 = n_0 + Y$, $SFNc_n_0 = \lfloor (O * 2^{\mu} + \lfloor i * M \rfloor) / N_{slot}^{frame,\mu} \rfloor$, and $SFN_{C_n1} = \lfloor (O * 2^{\mu} + \lfloor i * M \rfloor + Y) / N_{slot}^{frame,\mu} \rfloor$. $n_0$ is a start slot number of the CORESET0#i that is corresponding to the SSB#i and that is received for the first time, $n_1$ is a start slot number of the CORESET0#i that is corresponding to the SSB#i and that is received for the second time, Y is a slot difference between start slots of the two CORESET0#i that are corresponding to the SSB#i and that are received twice, and Y is an integer greater than or equal to 0. O is an offset, relative to a start moment of an even-numbered system frame, of the start slot of the CORESET0#i that is corresponding to the

SSB#i and that is received for the first time, and is measured in milliseconds ms. $2^{\mu}$ is a quantity of slots in one millisecond ms corresponding to different SCSs, and SCS = {15 kHz, 30 kHz, 60 kHz,..} is respectively corresponding to $\mu$ = {0,1,2, ...}. M is a time interval between search spaces of CORESETOs corresponding to two adjacent SSBs. $SFNc_n_0$ is a system frame number of the start slot of the CORESET0#i that is corresponding to the SSB#i and that is received for the first time. $SFNc_n_1$ is a system frame number of the start slot of the CORESET0#i that is corresponding to the SSB#i and that is received for the second time. $N_{slot}^{frame,\mu}$ is a quantity of slots in one system frame.

In a possible design solution, the apparatus according to the third aspect may further include a sending module. The sending module is configured to send random access channels PRACHs on ROs corresponding to the $L_{max}$ SSBs. A quantity Z of subframes including an RO in one system frame is one or more of 1, 2, 4, and 8, and/or a subframe including an RO in one system frame is one or more earliest consecutive subframes in time domain in the system frame and is in a same SSB period in time domain as the ROs corresponding to the $L_{max}$ SSBs.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, $N_{RO}^{group}$ is a quantity of ROs in one RO group, different RO groups are inconsecutive, and ROs in a same RO group are consecutive.

Further, different RO groups are inconsecutive, and ROs in a same RO group are consecutive.

In a possible design solution, there is an offset between a start slot of a time domain resource corresponding to an SSB and a start slot of an RO time domain resource corresponding to the SSB. The offset is greater than or equal to an uplink and downlink round trip time (round trip time, RTT) between a terminal device and an access network.

In a possible design solution, pieces of downlink signaling corresponding to a same SSB are transmitted in a same slot in a same beam direction. The downlink signaling may include one or more of the following: a control resource set 0 CORESETO, a system information block 1, a random access response RAR, a Msg4, paging, or other system information OSI.

Similarly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5.

Optionally, the receiving module and the sending module may be integrated into one module, for example, a transceiver module. The transceiver module is configured to implement sending and receiving functions of the apparatus according to the third aspect.

In a possible design solution, the apparatus according to the third aspect further includes a processing module. The processing module is configured to implement a processing function of the apparatus.

Optionally, the apparatus according to the third aspect may further include a storage module, and the storage module stores a computer program or instructions. When the processing module executes the computer program or instructions, the apparatus is enabled to perform the method according to the third aspect.

Optionally, the apparatus according to the third aspect may be a terminal device, may be a chip (system) or another component or part that can be disposed in a terminal device, or may be an apparatus or a system that includes a terminal device. This is not limited in this application.

In addition, for technical effects of the apparatus according to the third aspect, refer to the technical effects of the initial access method according to the first aspect. Details are not described herein again.

According to a fourth aspect, a communication apparatus is provided. The apparatus includes a sending module. The sending module is configured to send, on a time domain resource of a synchronization signal/physical broadcast channel S S/PBCH block SSB set, one or more SSBs included in the SSB set. A maximum value of a quantity of SSBs in the SSB set is $L_{max}$, $L_{max}$>64, and a time-frequency resource of the one or more SSBs in the SSB set is related to a system frame number SFN that carries the one or more SSBs.

In a possible design solution, the time domain resource is in one or more earliest consecutive system frames in time domain in the SSB period.

Further, the system frame includes a plurality of consecutive slots, and at least one of the plurality of slots is capable of supporting transmission of at least two SSBs. It can be understood that a maximum of $L_{max}$ SSBs are transmitted in one SSB period. Specifically, that one slot is capable of supporting transmission of at least two SSBs can be understood as follows: Two or more SSBs can be transmitted in one slot. That at least one of the plurality of slots is capable of supporting transmission of at least two SSBs may include the following cases:

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of some SSBs cross two slots. In a case in which SSBs cross two slots, if five SSBs are transmitted in two slots, it may be considered that 2.5 SSBs are transmitted in one slot or that more than two SSBs are transmitted in one slot.

The system frame includes a plurality of consecutive slots, at least one of the plurality of slots is capable of supporting transmission of at least two SSBs, and a maximum of $L_{max}$ SSBs are transmitted in one SSB period.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

Solution 1: A subcarrier spacing SCS may be 30 kilohertz kHz, and a symbol location of the time domain resource in the one or more consecutive system frames may satisfy the following: $(X+14*n+N_{slot}^{frame,\mu}*14*SFN_{SSB}) \bmod N_{symbol}^{frame,\mu}$. When $SFN_{SSB} \bmod (T_{SSB_period}/T_{frame,\mu}) = \{0,1,\ldots,\left\lfloor \frac{L_{max}}{N_{SSB}^{frame,\mu}} \right\rfloor - 1\}$, $n=\{0,1,2,\ldots,N_{slot}^{frame,\mu}-1\}$; or when $SFN_{SSB} \bmod (T_{SSB_period}/T_{frame,\mu}) = \left\lfloor \frac{L_{max}}{N_{SSB}^{frame,\mu}} \right\rfloor$, $n=\{0,1,2,\ldots,\left\lfloor \frac{L_{max} \bmod N_{SSB}^{frame,\mu}}{N_{SSB}^{slot,\mu}} \right\rfloor - 1\}$. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,8}, and {2,8} indicates that start symbols of two SSBs in one slot are a symbol 2 and a symbol 8, respectively.

Solution 2: A subcarrier spacing SCS may be 120 kilohertz kHz, and a symbol location of the time domain resource in the one or more consecutive system frames may satisfy the following: $(X+28*n+N_{slot}^{frame,\mu}*14*SFN_{SSB}) \bmod N_{symbol}^{frame,\mu}$. When $SFN_{SSB} \bmod (T_{SSB_{period}}/T_{frame,\mu}) = \{0,1,\ldots,\left\lfloor \frac{L_{max}}{N_{SSB}^{frame,\mu}} \right\rfloor - 1\}$, $n=\{0,1,2,\ldots,N_{slot}^{frame,\mu}-1\}$; or when $SFN_{SSB} \bmod (T_{SSB_{period}}/T_{frame,\mu}) = \left\lfloor \frac{L_{max}}{N_{SSB}^{frame,\mu}} \right\rfloor$, $n=\{0,1,2,\ldots,\left\lfloor \frac{L_{max} \bmod N_{SSB}^{frame,\mu}}{N_{SSB}^{slot,\mu}} \right\rfloor - 1\}$. n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

Solution 3: A subcarrier spacing SCS may be 480 kilohertz kHz or 960 kilohertz kHz, and a symbol location of the time domain resource in the one or more consecutive system frames may satisfy the following: $(X+14*n+N_{slot}^{frame,\mu}*14*SFN_{SSB}) \bmod N_{symbol}^{frame,\mu}$. When

$$SFN_{SSB}\ mod(T_{SSB_period}/T_{frame,\mu})=\{0,1,\ldots,\left\lfloor\frac{L_{max}}{N_{SSB}^{frame,\mu}}\right\rfloor-1\},\quad n=\{0,1,2,\ldots,N_{slot}^{frame,\mu}-1\}$$

; or when

$$SFN_{SSB}\ mod(T_{SSB_period}/T_{frame,\mu})=\left\lfloor\frac{L_{max}}{N_{SSB}^{frame,\mu}}\right\rfloor,\ n=\{0,1,2,\ldots,\left\lceil\frac{L_{max}\ mod\ N_{SSB}^{frame,\mu}}{N_{SSB}^{slot,\mu}}\right\rceil-1\}$$

. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Solution 4: A subcarrier spacing SCS may be 240 kilohertz kHz, and a symbol location of the time domain resource in the one or more consecutive system frames may satisfy the following:

$$(X+56*n+N_{slot}^{frame,\mu}*14*SFN_{SSB})\ mod\ N_{symbol}^{frame,\mu}$$

. When

$$SFN_{SSB}\ mod(T_{SSB_period}/T_{frame,\mu})=\{0,1,\ldots,\left\lfloor\frac{L_{max}}{N_{SSB}^{frame,\mu}}\right\rfloor-1\},\quad n=\{0,1,2,\ldots,N_{slot}^{frame,\mu}-1\}$$

; or when

$$SFN_{SSB}\ mod(T_{SSB_period}/T_{frame,\mu})=\left\lfloor\frac{L_{max}}{N_{SSB}^{frame,\mu}}\right\rfloor,\ n=\{0,1,2,\ldots,\left\lceil\frac{L_{max}\ mod\ N_{SSB}^{frame,\mu}}{N_{SSB}^{slot,\mu}}\right\rceil-1\}$$

. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

Solution 5: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB})\ mod\ N_{symbol}^{frame,\mu}$$

. When

$$SFN_{SSB}\ mod(T_{SSB_period}/T_{frame,\mu})=\{0,1,\ldots,\left\lfloor\frac{L_{max}}{N_{SSB}^{frame,\mu}}\right\rfloor-1\},\quad n=\{0,1,2,\ldots,N_{slot}^{frame,\mu}-1\}$$

; or when

$$SFN_{SSB}\ mod(T_{SSB_period}/T_{frame,\mu})=\left\lfloor\frac{L_{max}}{N_{SSB}^{frame,\mu}}\right\rfloor,\ n=\{0,1,2,\ldots,\left\lceil\frac{L_{max}\ mod\ N_{SSB}^{frame,\mu}}{N_{SSB}^{slot,\mu}}\right\rceil-1\}$$

. n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

In a possible design solution, the sending module is further configured to send SSB indexes. Values of the SSB indexes may be {0,1, ..., $L_{max}$ - 1}, and each of the SSB indexes is used to uniquely indicate an SSB.

Optionally, some bits of the SSB index may be carried by reusing some information elements in a master information block MIB and/or in a physical broadcast channel PBCH.

For example, some bits of the SSB index are carried by reusing a first information element in the master information block MIB and/or a second information element in the physical broadcast channel PBCH. The first information element may include one or more of the following: a 4th least significant bit of a system frame number SFN (4th LSB of SFN) or a spare (spare) bit in the MIB. The second information element may include one or more of the following: a half-frame indication (half frame indication) $a_{\bar{A}+4}$ or 6th to 4th least significant bits $a_{\bar{A}+5}$, $a_{\bar{A}+6}$, $a_{\bar{A}+7}$ of the SSB index (6th-4th LSB bits of candi. SSB index) in a payload of the PBCH.

In a possible design solution, a transceiver module is further configured to send a quantity of first SSBs and an index of the first SSB. The first SSB is an actually sent SSB in the $L_{max}$ SSBs in one SSB period, and the quantity of first SSBs is not greater than $L_{max}$.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in a group index (inoneGroup) and an intra-group index (groupPresence) of the RRC signaling.

In a possible design solution, the $L_{max}$ SSBs may include an SSB#i whose index is i, i is a natural number, and $0 \le i \le L_{max} - 1$. Optionally, the SSB#i and a control resource set CORESET0#i corresponding to the SSB#i occupy a same time domain resource and different frequency domain resources, and the SSB#i and a system information block SIB1#i corresponding to the SSB#i occupy a same time domain resource and different frequency domain resources. Alternatively, the SSB#i and a control resource set CORESET0#i corresponding to the SSB#i occupy different time domain resources, and the SSB#i and a system information block SIB1#i corresponding to the SSB#i occupy different time domain resources.

Further, that the SSB#i and a system information block SIB1#i corresponding to the SSB#i occupy different time domain resources may include: Time domain resources occupied by the system information block SIB1#i corresponding to the SIB1#i include and are more than time domain resources occupied by the SSB#i.

In a possible design solution, the sending module is further configured to send, twice in one SSB period, two CORESET0#i and two SIB1#i that are corresponding to the SSB#i.

Optionally, resources used for sending twice the two CORESET0#i and the two SIB1#i that are corresponding to the SSB#i may satisfy the following: $n_0 = (O * 2^{\mu} + \lfloor i * M \rfloor) \bmod N_{slot}^{frame,\mu}$, $n_1 = n_0 + Y$, $SFNc_n_0 = \lfloor (O * 2^{\mu} + \lfloor i * M \rfloor) / N_{slot}^{frame,\mu} \rfloor$, and $SFN_{C_n_1} = \lfloor (O * 2^{\mu} + \lfloor i * M \rfloor + Y) / N_{slot}^{frame,\mu} \rfloor$. $n_0$ is a start slot number of the CORESET0#i that is corresponding to the SSB#i and that is sent for the first time, $n_1$ is a start slot number of the CORESET0#i that is corresponding to the SSB#i and that is sent for the second time, Y is a slot difference between start slots of the two CORESET0#i that are corresponding to the SSB#i and that are sent twice, and Y is an integer greater than or equal to 0. O is an offset, relative to a start moment of an even-numbered system frame, of the start slot of the CORESET0#i that is corresponding to the SSB#i and that is sent for the first time, and is measured in milliseconds ms. $2^{\mu}$ is a quantity of slots in one millisecond ms corresponding to different SCSs, and SCS = {15 kHz, 30 kHz, 60 kHz,..} is respectively corresponding to $\mu$ = {0,1,2, ...}. M is a time interval between search spaces of CORESETOs corresponding to two adjacent SSBs. $SFNc_n_0$ is a system frame number of the start slot of the CORESET0#i that is corresponding to the SSB#i and that is sent for the first time. $SFNc_n_1$ is a system frame number of the start slot of the CORESET0#i that is corresponding to the SSB#i and that is sent for the second time. $N_{slot}^{frame,\mu}$ is a quantity of slots in one system frame.

In a possible design solution, the apparatus according to the fourth aspect further includes a receiving module. The receiving module is configured to receive random access channels PRACHs on random access occasions ROs corresponding to the $L_{max}$ SSBs. A quantity Z of subframes including an RO in one system frame is one or more of 1, 2, 4, and 8, and/or subframes including ROs in one system frame are a plurality of earliest consecutive subframes in time domain in the system frame and are in a same SSB period in time domain as the ROs corresponding to the $L_{max}$ SSBs.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, $N_{RO}^{group}$ is a quantity of ROs in one RO group, different RO groups are inconsecutive, and ROs in a same RO group are consecutive.

Further, different RO groups are inconsecutive, and ROs in a same RO group are consecutive.

In a possible design solution, there is an offset between a start slot of a time domain resource corresponding to an SSB and a start slot of an RO time domain resource corresponding to the SSB. The offset is greater than or equal to an uplink and downlink round trip time RTT between a terminal device and an access network.

In a possible design solution, pieces of downlink signaling corresponding to a same SSB are transmitted in a same slot in a same beam direction. The downlink signaling may include one or more of the following: a control resource set 0 CORESE0, a system information block 1 SIB1, a random access response RAR, a Msg4, paging, or other system information OSI.

Similarly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5.

Optionally, the receiving module and the sending module may be integrated into one module, for example, the transceiver module. The transceiver module is configured to implement sending and receiving functions of the apparatus according to the fourth aspect.

In a possible design solution, the apparatus according to the fourth aspect may further include a storage module, and the storage module stores a computer program or instructions. When the processing module executes the computer program or instructions, the apparatus is enabled to perform the method according to the fourth aspect.

Optionally, the apparatus according to the fourth aspect may be a network device, may be a chip (system) or another component or part that can be disposed in a network device, or may be an apparatus or a system that includes a network device. This is not limited in this application.

In addition, for technical effects of the apparatus according to the fourth aspect, refer to the technical effects of the initial access method according to the first aspect. Details are not described herein again.

According to a fifth aspect, a communication apparatus is provided. The communication apparatus includes a processor. The processor is coupled to a memory, and the processor is configured to execute a computer program stored in the memory, so that the communication apparatus performs the initial access method according to the first aspect or the second aspect.

According to a sixth aspect, a communication apparatus is provided, including a processor and a memory. The memory is configured to store a computer program. When the processor executes the computer program, the communication apparatus is enabled to perform the initial access method according to the first aspect or the second aspect.

In a possible design solution, the communication apparatus according to the fifth aspect and the sixth aspect may further include a transceiver. The transceiver may be a transceiver circuit or an interface circuit. The transceiver may be used by the communication apparatus according to the fifth aspect and the sixth aspect to communicate with another communication apparatus.

In this application, the communication apparatus according to the fifth aspect and the sixth aspect may be a terminal device or a network device, may be a chip (system) or another component or part that can be disposed in a terminal device or a network device, or may be an apparatus that includes a terminal device or a network device.

In addition, for technical effects of the communication apparatus according to the fifth aspect and the sixth aspect, refer to the technical effects of the initial access method according to the first aspect. Details are not described herein again.

According to a seventh aspect, a communication system is provided. The communication system includes one or more terminal devices and one or more network devices.

According to an eighth aspect, a computer-readable storage medium is provided, including a computer program or instructions. When the computer program or instructions are run on a computer, the computer is enabled to perform the initial access method according to the first aspect or the second aspect.

According to a ninth aspect, a computer program product is provided, including a computer program or instructions. When the computer program or instructions are run on a computer, the computer is enabled to perform the initial access method according to the first aspect or the second aspect.

## BRIEF DESCRIPTION OF DRAWINGS

FIG. 1 is a diagram of an architecture of a communication system according to an embodiment of this application;
FIG. 2 is a diagram of time-frequency resources occupied by an SSB;
FIG. 3 is a diagram of an SSB pattern in which an SCS is 120 kHz;

FIG. 4 is diagrams of time-frequency resources of SSBs and CORESETOs and SIB1s that are corresponding to the SSBs;
FIG. 5 is a schematic flowchart of an initial access method according to an embodiment of this application;
FIG. 6 is a resource diagram 1 of an SSB pattern according to an embodiment of this application;
FIG. 7 is a resource diagram 2 of an SSB pattern according to an embodiment of this application;
FIG. 8 is a resource diagram 3 of an SSB pattern according to an embodiment of this application;
FIG. 9 is a resource diagram 4 of an SSB pattern according to an embodiment of this application;
FIG. 10 is a resource diagram 5 of an SSB pattern according to an embodiment of this application;
FIG. 11 is a resource diagram 6 of an SSB pattern according to an embodiment of this application;
FIG. 12 is a resource diagram 7 of an SSB pattern according to an embodiment of this application;
FIG. 13 is a resource diagram 1 of an SSB/CORESET0/SIB1 pattern according to an embodiment of this application;
FIG. 14 is a resource diagram 2 of an SSB/CORESET0/SIB1 pattern according to an embodiment of this application;
FIG. 15 is a resource diagram 3 of an SSB/CORESET0/SIB1 pattern according to an embodiment of this application;
FIG. 16 is a resource diagram 1 of a pattern in which CORESET0s/SIB1s are repeatedly transmitted according to an embodiment of this application;
FIG. 17 is a resource diagram 2 of a pattern in which CORESET0s/SIB1s are repeatedly transmitted according to an embodiment of this application;
FIG. 18 is a resource diagram 1 of an RO pattern according to an embodiment of this application;
FIG. 19 is a resource diagram 2 of an RO pattern according to an embodiment of this application;
FIG. 20 is a resource diagram 3 of an RO pattern according to an embodiment of this application;
FIG. 21 is a resource diagram 1 of a beam multiplexing pattern according to an embodiment of this application;
FIG. 22 is a resource diagram 2 of a beam multiplexing pattern according to an embodiment of this application;
FIG. 23 is a diagram 1 of a structure of a communication apparatus according to an embodiment of this application;
FIG. 24 is a diagram 2 of a structure of a communication apparatus according to an embodiment of this application; and
FIG. 25 is a diagram 3 of a structure of a communication apparatus according to an embodiment of this application.

## DESCRIPTION OF EMBODIMENTS

The following describes technical solutions of this application with reference to accompanying drawings.

The technical solutions provided in this application can be applied to various communication systems, for example, a satellite communication system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a fifth generation (5th generation, 5G) communication system or a new radio (new radio, NR) system, and other future communication systems such as a 6G system. Optionally, the technical solutions provided in this application can also be applied to an internet of things (internet of things, IoT) system, a narrowband internet of things (narrow band internet of things, NB-IoT) system, and the like.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. In addition, a combination of these solutions may be used.

In addition, in embodiments of this application, a term "example", "for example", or the like is used to represent giving an example, an illustration, or a description. Any embodiment or design solution described as an "example" in this application should not be construed as being preferred or having more advantages over other embodiments or design solutions. Exactly, a term "example" is used to present a concept in a specific manner.

In embodiments of this application, "information (information)", "signal (signal)", "message (message)", "channel (channel)", and "signaling (signaling)" may sometimes be used interchangeably. It should be noted that meanings expressed by the terms are consistent when differences of the terms are not emphasized. "Of (of)", "corresponding or relevant (corresponding, relevant)", and "corresponding (corresponding)" may sometimes be used interchangeably. It should be noted that, meanings expressed by the terms are consistent when differences of the terms are not emphasized.

In embodiments of this application, sometimes a subscript may be written incorrectly in a non-subscript form. For example, $W_1$ may be written incorrectly as W1. Meanings expressed by the terms are consistent when differences of the terms are not emphasized.

A network architecture and a service scenario that are described in embodiments of this application are intended to describe the technical solutions in embodiments of this application more clearly, but do not constitute as any limitation on the technical solutions provided in embodiments of this application. A person of ordinary skill in the art can know that as the network architecture evolves and new service scenarios emerge, the technical solutions provided in embodiments of this application are also applicable to similar technical problems.

For ease of understanding embodiments of this application, refer to FIG. 1. FIG. 1 is a diagram of an architecture of a communication system according to this application. As shown in FIG. 1, the communication system includes one or more network devices and one or more terminal devices connected to the network device. For ease of description, FIG. 1 shows only one network device and two terminal devices.

This application is applicable to but is not limited to scenarios in which a quantity of SSBs needs to be increased, including a low frequency, a high frequency, and the like. In a high frequency of a 52.6 gigahertz (gigahertz, GHz) frequency band, a system scenario shown in FIG. 1 is supported, that is, a network device and a plurality of terminals form a communication system. In the communication system, any terminal device may communicate with the network device. A link environment of the communication system includes uplink (uplink, UL), downlink (downlink, DL), and sideline (sidelink, SL) transmission. Information transmitted on a link includes actually transmitted data information and control information for indicating or scheduling actual data. In addition, some terminal devices may also form a communication system, and a link transmission environment of the communication system is consistent with that described above. Specific information exchange depends on a network configuration manner.

The network device may be a device that can communicate with the terminal device. The network device may be any device having wireless sending and receiving functions. The network device may be a satellite, a base station, an access point, or a transmission reception point (transmission reception point, TRP), or may be a device that is in an access network and that communicates with the terminal device over an air interface by using one or more sectors (cells), or the like. This is not limited in this application. For example, the base station may be an evolved NodeB (evolutional NodeB, eNB or eNodeB), a relay station, or an access point in LTE, a next generation NodeB (next generation, gNB) in a 5G network, a 6G base station, or the like. It can be understood that the base station may be alternatively a base station or the like in a future evolved public land mobile network (public land mobile network, PLMN).

The network device may be alternatively an access node, a wireless relay node, a wireless backhaul node, or the like in a wireless local area network (wireless fidelity, Wi-Fi) system. The network device may be alternatively a radio controller in a cloud radio access network (cloud radio access network, CRAN) scenario.

For ease of description, the following uses base stations as examples to describe the network device and the like in this application. In some deployments of a base station, the base station may include a central unit (central unit, CU), a distributed unit (distributed unit, DU), and the like. In some other deployments of a base station, the CU may be further divided into a CU-control plane (control plane, CP), a CU-user plane (user plane, UP), and the like. In some other deployments of a base station, the base station may be alternatively an open radio access network (open radio access network, ORAN) architecture or the like. Specific deployment manners of the base stations are not limited in this application.

The terminal device may also be referred to as user equipment (user equipment, UE). The terminal device in this application may be a device having wireless sending and receiving functions, and may communicate with one or more core network (core network, CN) devices (or may be referred to as core devices) by using a radio access network (radio access network, RAN) device. Optionally, the terminal device may also be referred to as an access terminal, a terminal, a subscriber unit, a subscriber station, a mobile station, a mobile console, a remote station, a remote terminal, a mobile device, a user terminal, a wireless network device, a user agent, a user apparatus, or the like. Optionally, the terminal device may be deployed on land, including an indoor, outdoor, handheld, or vehicle-mounted device; may be deployed on the water (for example, a ship); or may be deployed in the air (for example, on an aircraft, a balloon, a satellite, or the like). Optionally, the terminal device may be a handheld device, a vehicle-mounted device, or a wearable device having a wireless communication function, a terminal in an internet of things or an internet of vehicles, a terminal in any form in a 5G network or a future network, or the like. This is not limited in this application.

Optionally, in the communication system shown in FIG. 1, the terminal devices may further communicate with each other by using a device-to-device (device-to-device, D2D) technology, a vehicle-to-everything (vehicle-to-everything, V2X) technology, a machine-to-machine (machine-to-machine, M2M) technology, or the like. A method for communication between the terminal devices is not limited in this application.

It should be noted that an initial access method provided in embodiments of this application is applicable to communication between the network device and the terminal devices shown in FIG. 1. For a specific implementation, refer to the following method embodiment. Details are not described herein.

It should be noted that, the solutions in embodiments of this application can also be applied to other communication systems, and corresponding names may be replaced with names corresponding to functions in the other communication systems.

It should be understood that FIG. 1 is merely a simplified diagram used as an example for ease of understanding. The communication system may further include other network devices and/or other terminal devices not drawn in FIG. 1.

For ease of understanding, the following interprets related concepts in embodiments of this application.

(1) SSB set and SSB sending period

An SSB is an SS/PBCH block, and the SS/PBCH block is information that is first demodulated by the terminal device in an initial access process. The SS/PBCH block may mainly include a primary synchronization signal (primary synchronization signal, PSS), a secondary synchronization signal (secondary synchronization signal, SSS), and a physical broadcast channel (physical broadcast channel, PBCH). The terminal device may complete cell synchronization and coarse symbol-level timing synchronization by demodulating the PSS and the SSS. The PBCH may carry master information block (master information block, MIB) information configured at a higher layer. By demodulating the MIB information, the terminal device may complete system frame-level timing synchronization, and obtain location information of a system information block 1 (system information block 1, SIB1)/remaining minimum system information (remaining minimum system information, RMSI). Further, the terminal device may obtain a type0 physical downlink control channel (type0 physical downlink control channel, type0-PDCCH) and a physical downlink shared channel (physical downlink shared channel, PDSCH) based on the information about the SIB1/RMSI. A control resource set CORESETO (control resource set 0) is carried on the type0-PDCCH (Type0-PDCCH). As shown in FIG. 2, one SSB may occupy four orthogonal frequency division multiplexing (orthogonal frequency division multiplexing, OFDM) symbols in time domain, and occupy 20 resource blocks (resource blocks, RBs) in frequency domain.

In a specific implementation, the network device may send a plurality of SSBs through time division multiplexing (time division multiplexing, TDM). Optionally, the network device may send the plurality of SSBs in a form of an SSB set (SS/PBCH block burst set, which may also be referred to as an SSB burst set). Further, the network device may configure a period of the SSB set, that is, may periodically send the SSB set. In the period of the SSB set, a quantity of SSBs in the SSB set may be related to a frequency band (band) and/or a subcarrier spacing (subcarrier spacing, SCS). The frequency band can be understood as an operating frequency band (or referred to as a frequency spectrum) of the network device and/or the terminal device, and the subcarrier spacing can be understood as a subcarrier spacing used by the network device and/or the terminal device. Generally, the frequency band of the network device is the same as that of the terminal device, and the subcarrier spacing used by the network device is the same as that used by the terminal device. The frequency band may include a low frequency band and a high frequency band (for example, a frequency spectrum from 52.6 GHz to 71 GHz). The frequency band may be a licensed band in some scenarios, and the frequency band may be an unlicensed band in some other scenarios. Optionally, the quantity of SSBs in the SSB set may be related to the operating frequency band of the network device and/or the terminal device. For example, when the frequency band is less than or equal to 3 GHz, there may be a maximum of four SSBs and a minimum of one SSB in the SSB set. When the frequency band is greater than 3 GHz and less than or equal to 6 GHz, there may be a maximum of eight SSBs and a minimum of one SSB in the SSB set. When the frequency band is greater than 6 GHz, there may be a maximum of 64 SSBs and a minimum of one SSB in the SSB set.

For example, as shown in FIG. 3, when the subcarrier spacing is 120 kHz, and duration of the SSB set sent by the network device is 5 ms (5 ms is corresponding to duration of a half system frame), an expression of start symbols of SSBs is $\{4,8,16,20\} + 28 * n$, where n is a slot number in 5 ms, and n = 0, 1, 2, 3, 5, 6, 7, 8, 10, 11, 12, 13, 15, 16, 17, 18. 28 is a quantity of OFDM symbols occupied by two slots, that is, 28 indicates that SSBs are cycled per two slots. 4, 8, 16, and 20 may indicate start symbol numbers of the SSBs in every two slots. In other words, a pattern (pattern) (which may also be understood as location distribution) of the SSB set is cycled per two slots. Alternatively, two slots are used as a unit. Relative locations of SSBs in the SSB pattern are the same in every two slots. It can also be understood that in different SSB sets, SSBs with same relative locations have same offsets relative to start locations of SSB sets in which the SSBs are respectively located. The SSB set may occupy $16 \times 2 = 32$ slots (slots), and there are 4*16=64 candidate indexes of SSBs in the SSB set. The candidate indexes (candidate indexes) may be corresponding to candidate locations, transmission occasions, and the like for sending the SSBs. According to an existing protocol, there are a maximum of 64 candidate SSB locations in a half frame of 5 ms. The network device may represent the 64 SSB indexes by using 3-bit (bit) information indicating a DMRS sequence in the PBCH and 3-bit information ($\bar{a}_{\bar{A}+5}$, $\bar{a}_{\bar{A}+6}$, and $\bar{a}_{\bar{A}+7}$) in payload (payload, also referred to as payload) information of the PBCH. Correspondingly, the terminal device can learn that there are 64 candidate indexes based on the 3-bit information indicating the DMRS sequence in the PBCH and the 3-bit information ($\bar{a}_{\bar{A}+5}$, $\bar{a}_{\bar{A}+6}$, and $\bar{a}_{\bar{A}+7}$) in the load information of the PBCH.

It can be understood that the foregoing quantity of SSBs is a maximum quantity of SSBs that can be sent by the network device. However, in actual application, at a corresponding subcarrier spacing, the network device may configure an SSB set by using a related parameter (for example, ssb-PositionsInBurst) in the system information block (system information block, SIB) 1. For example, when the SCS is 15 kHz and the related parameter in the SIB1 is 1011001011, the SSB set includes six SSBs. "1" indicates that an SSB is sent in a corresponding time domain, and "0" indicates that no SSB is sent in a corresponding time domain. 1-bit information $\bar{a}_{\bar{A}+4}$ in the load information of the PBCH may indicate a specific location of the SSB set. In other words, the 1-bit information $\bar{a}_{\bar{A}+4}$ in the load information of the PBCH may be used as a half-radio-frame (half radio frame) indication. Generally, transmission of the SSBs in the SSB set needs to be completed within 5 ms. The network device transmits an SSB set in each period of the SSB set, and $\bar{a}_{\bar{A}+4}$ may indicate that the SSB set is within the first 5 ms of a system frame, or $\overline{a}_{\overline{A}+4}$ may indicate that the SSB set is within the last 5 ms of the system frame. The terminal device can determine, in time based on $\overline{a}_{\overline{A}+4}$, whether the SSB set is sent in a first half frame or a latter half frame, to receive or listen to the SSB set.

In addition, in consideration of regulatory requirements of different countries and/or regions, the network device operating on an unlicensed band may send SSBs in a short control signal exemption (short control signal exemption, SCSe) manner, or may send SSBs after LBT is performed. Different SSB sending manners affect a system design and a behavior of a transceiver to some extent.

It should be noted that, to ensure initial access reliability, the network device usually sends the SSBs in a broadcast manner based on an SSB period. The SSB period, which is also referred to as an SSB burst period (SSB burst period), means that all SSBs in the SSB set are jointly sent in an SSB window at the beginning of each period. If a current SSB window ends, SSBs are sent when an SSB window in a next SSB period arrives. A time period in which all SSBs in the SSB set are jointly sent may be referred to as an SSB window. A time domain location of the SSB window is usually invariable. In other words, a time offset between a time domain start location of the SSB window and a time domain start location of the SSB period is invariable, to simplify a design and reduce technical difficulty. Further, the time offset may be 0, that is, the time domain start location of the SSB window is aligned with that of the SSB period, so that sending of downlink signaling such as the SSB, the CORESETO, and the SIB1 and sending of uplink signaling such as a PRACH can be completed in one SSB period. This ensures that initial access can be completed in one SSB period, thereby improving efficiency.

(2) Relationships between a system frame, a slot, a symbol, and SSB sending

In an NR system, duration of one system frame (also referred to as a radio frame) is 10 ms, and one system frame includes 10 subframes, that is, duration of one subframe is 1 ms. Generally, a quantity of slots included in one subframe is related to an SCS. Specifically, when SCSs are {15 kHz, 30 kHz, 60 kHz, 120 kHz, 240 kHz, 480 kHz, ...}, quantities of slots included in one subframe are respectively {1, 2, 4, 8, 16, 32, ...}, that is, one slot includes $2^{\mu}$slots, where $\mu$ = 0,1,2,3,4,5 ... and is a ratio of an actually configured SCS to a reference SCS (15 kHz) minus 1. In other words, a quantity $N_{slot}^{frame,\mu}$ of slots included in one system frame is related to an SCS, that is, $N_{slot}^{frame,\mu} = 10 * 2^{\mu}$. For example, when SCS=30 kHz, $N_{slot}^{frame,\mu} = 20$, that is, one radio frame includes 20 slots. For another example, when SCS=120 kHz, $N_{slot}^{frame,\mu} = 80$, that is, one radio frame includes 80 slots.

Further, a normal cyclic prefix (normal cyclic prefix, NCP) is used as an example. One slot includes 14 symbols, and a quantity of symbols included in one radio frame varies with different SCSs. In other words, a quantity $N_{symbol}^{frame,\mu}$ of symbols included in one system frame is related to an SCS, that is, $N_{symbol}^{frame,\mu} = 14 * 10 * 2^{\mu}$. For example, when SCS=30 kHz, $N_{symbol}^{frame,\mu} =$ 280, that is, one radio frame includes 280 symbols. For another example, when SCS=120 kHz, $N_{symbol}^{frame,\mu} = 1120$, that is, one radio frame includes 1120 symbols.

The existing protocol defines an SSB pattern in a half frame. For example, in a case D, an SSB pattern corresponding to SCS=120 kHz is {4,8,16,20}+28*n, where n=0,1,2,3,5,6,7,8,10,11,12,13,15,16,17,18. {4,8,16,20} indicates that two slots are used as a unit, symbols 4, 8, 16, and 20 are start symbols of four SSBs, 28 indicates that two slots are used as a unit, and n is a slot number. For another example, in a case C, for SCS=30 kHz, an SSB pattern in an unlicensed band is {2,8}+14*n, where n=0,1,2,3,4,5,6,7,8,9. {2,8} indicates start symbol locations of two SSBs in one slot, and n indicates that slot numbers of SSBs are 0, 1, 2, 3, 4, 5, 6, 7, 8, and 9.

Still with reference to FIG. 3, the existing protocol usually defines, in a unit of one or more slots, a symbol occupied by each SSB. In other words, it may be considered that an SSB pattern is defined to be at a symbol level. In this case, when SCSs are different, in a same period of time, if quantities of symbols included in one subframe are different, quantities of SSBs that can be carried in one subframe are also different. The SSB pattern shown in FIG. 3 is still used as an example. Two slots are used as a unit, and two SSBs may be sent in one slot. If 64 SSBs are to be sent, 32 downlink slots are needed.

(3) Multiplexing pattern of an SSB, a CORESETO, and a SIB1, and search space

In the NR system, because system bandwidth (which may be a maximum of 400 MHz) is high, if a PDCCH still occupies the entire bandwidth, resources are wasted, blind detection complexity is high, and some terminal devices do not support receiving of signals in the entire bandwidth. In addition, to improve system flexibility, a start location of the PDCCH in time domain may be configured. In this case, the terminal device can successfully decode the PDCCH only when learning locations of the PDCCH in frequency domain and time domain. For convenience, in the NR system, a frequency band occupied by the PDCCH in frequency domain, a quantity of OFDM symbols occupied by the PDCCH in time domain, and other information are encapsulated into a CORESET, and a start OFDM symbol number of the PDCCH, a PDCCH monitoring period, and other information are encapsulated into a search space (search space). Each search space is associated with one CORESET, and a PDCCH configuration may be determined by binding a CORESET and a search space. Parameters and a time-frequency location of a downlink physical resource that is used for transmitting the PDCCH are a CORESET, and a predefined area in which the terminal device attempts to perform blind detection is referred to as a search space.

To obtain an RMSI sent on a PDSCH, the terminal device needs to first find a CORESET0 (the PDCCH physical resource corresponding to a type0 CSS) for scheduling the PDSCH. After searching for an SSB and reading a MIB, the terminal device may find the CORESET0 based on the SSB by using a relative relationship between a CORESET0 and an SSB. The CORESET0 is a part of configuration information of an initial bandwidth part (initial BWP), and is provided for the terminal device by using a MIB message (PDCCHconfigSIB1). The terminal device obtains scheduling information of a SIB1 by using the CORESET0, to obtain cell information from the SIB1 and complete downlink synchronization. Before an RRC connection is established, the CORESET0 already exists. The terminal device needs to receive the scheduling information of the SIB1 by using the CORESET0. This means that the CORESET0 cannot be specified by RRC because the CORESET0 needs to be used before RRC transmission. In other words, the CORESET0 needs to be configured by using some predefined procedures and predefined parameters. For details, refer to the following Table 1.

**Table 1**

| Parameter | Predefined value |
|---|---|
| Time-frequency resource allocation (Frequency/Time Resource Allocation) | PDCCH SIB1 configuration in the MIB message (MIB pdcch-Config-SIB1), used to determine PDCCH/SIB 1 bandwidth, a common control resource set (CORESET), a common search space (CSS), and necessary PDCCH parameters; for details, refer to 3GPP TS 38.213 Section 13 |
| Interleaving (Interleaving) | Predefined interleaving mode (Assumed Interleaving); for details, refer to 3GPP TS 38.211 Section 7.3.2.2 |
| Size L of a REG bundle (REG Bundle Size) | 6; for details, refer to 3GPP TS 38.211 Section 7.3.2.2 |
| Size R of an interleaver (Interleaver Size) | 2; for details, refer to 3GPP TS 38.211 Section 7.3.2.2 |
| Shift index n_shift (Shiftindex) | Used to determine a physical cell identifier (PCI) N_cellID; for details, refer to 3GPP TS 38.211 Section 7.3.2.2 |
| Cyclic prefix (Cyclic Prefix, CP) | Normal (Normal) cyclic prefix; for details, refer to 3GPP TS 38.211 Section 7.3.2.2 |
| Precoding (Precoding) | Same as precoding used in a REG bundle (Same Precoding used in REG Bundle); for details, refer to 3GPP TS 38.211 Section 7.3.2.2 |

In addition to the predefined parameters, the most important thing is to obtain information about a time-frequency resource of the CORESETO. The terminal device queries predefined tables (tables 13-1 to 13-10 in 3GPP TS 38.213) by using MIB pdcch-ConfigSIB1 included in the MIB message, calculates the time-frequency resource of the CORESETO based on the SSB, and obtains the scheduling information of the SIB1 from the CORESETO. This helps the terminal device complete initial access.

The SSB and the CORESETO each are corresponding to one time-frequency resource. With reference to FIG. 4, based on distribution of SSBs and CORESETOs, multiplexing patterns (multiplexing patterns) of the SSBs and the CORESETOs may include a pattern 1 to a pattern 3. The pattern 1 uses time division multiplexing, a frequency domain length of the CORESETO is greater than that of the SSB, and a frequency domain range of the CORESETO includes a frequency domain range of the SSB. The pattern 2 and the pattern 3 use frequency division multiplexing (the CORESETO and the SSB are in a same system frame). A difference between the pattern 2 and the pattern 3 lies in that: In the pattern 2, the CORESETO is located before the SSB in time domain, but is not far away from the SSB. For example, the CORESETO and the SSB are in a same slot and a symbol occupied by the CORESETO is before a symbol occupied by the SSB, or the CORESETO is located in a previous slot of a slot in which the SSB is located.

In both time domain and frequency domain, the time-frequency resource occupied by the CORESETO can be found based on the SSB, provided that the relationship between a CORESETO and an SSB is known. The relationship between a CORESETO and an SSB is included in the MIB, and includes Subcarrier Spacing Common (RMSI SCS), ssb Subcarrier Offset (a $4^{th}$ least significant bit of kssb), and PDCCH Config SIB1. The pdcch-ConfigSIB 1 includes eight bits. Four most significant bits and four least significant bits are split to obtain two indexes. Values of the two indexes both range from 0 to 15. The four most significant bits are used to query the tables 13-1 to 13-10 in 3GPP TS 38.213 to obtain multiplexing patterns, quantities of symbols (time domain lengths), quantities of RBs (frequency domain lengths), and RB offsets (frequency domain offsets) of CORESETOs. The four least significant bits are used to query tables 13-11 to 13-15 to obtain related information of search spaces 0 (SFNs, slot indexes, start symbols, and the like).

The terminal device queries the tables (13-11 to 13-15) to obtain corresponding parameter values, and then calculates time domain information of the CORESETO according to a formula. The CORESETO and the SSB that are corresponding to the pattern 1 are in a time division multiplexing relationship. According to descriptions in 3GPP TS 38.213, for the pattern 1, the terminal device continuously listens to two slots starting from a slot $n_0$. $n_0$ satisfies the following:

$$n_0 = (O * 2^{\mu} + \lfloor i * M \rfloor) \bmod N_{slot}^{frame,\mu}$$

Parameters M and O may be obtained from Table 13-11 (FR1) or Table 13-12 (FR2). O indicates an offset, relative to a start location of an even-numbered frame, of a CORESET0 corresponding to an SSB whose SSB index is 0, and is measured in ms. Because 1 ms includes $2^{\mu}$ slots, O* $2^{\mu}$ indicates a quantity of slots included in O ms. In the FR1, values of O may be 0, 2, 5, and 7. In the FR2, values of O may be 0, 2.5, 5, and 7.5. O indicates a CORESET0 corresponding to a $1^{st}$ SSB, and CORESET0s corresponding to other SSBs is sequentially arranged after this CORESET0. M indicates an interval between search spaces of CORESET0s corresponding to two adjacent SSBs, and is expressed in a quantity of slots. In the tables, one column exists between columns that indicate O and M, indicating a quantity of search spaces per slot, where the quantity is denoted as N herein.

With reference to FIG. 5 to FIG. 22, the following details the initial access method provided in embodiments of this application.

For example, FIG. 5 is a schematic flowchart 1 of an initial access method according to an embodiment of this application. The initial access method is applicable to the communication system shown in FIG. 1.

As shown in FIG. 5, the initial access method includes the following steps.

S501: A network device sends, on a time domain resource corresponding to an SSB set, one or more SSBs included in the SSB set.

A maximum value of a quantity of SSBs included in the synchronization signal/physical broadcast channel SS/PBCH block SSB set is $L_{max}$, $L_{max}$>64, and a time-frequency resource of the one or more SSBs in the SSB set is related to a system frame number (system frame number, SFN) that carries the SSB.

The SSB set can be understood as a set including the SSB sent in one SSB period. A period of time corresponding to the SSB set may be referred to as an SSB window (SSB window) or a window (window), and the period of time may be referred to as a window length (window length). For example, in unlicensed band communication, a period of time corresponding to the SSB set is usually referred to as a discovery burst transmission window (discovery burst transmission window, DBTW). A name thereof is not limited in this embodiment of this application.

In a possible design solution, the time domain resource is in one or more earliest consecutive system frames in time domain in the SSB period.

Further, the system frame includes a plurality of consecutive slots, and at least one of the plurality of slots is capable of supporting transmission of at least two SSBs. It can be understood that a maximum of $L_{max}$ SSBs are transmitted in one SSB period. Specifically, that one slot is capable of supporting transmission of at least two SSBs can be understood as follows: Two or more SSBs can be transmitted in one slot. That at least one of the plurality of slots is capable of supporting transmission of at least two SSBs may include the following cases.

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of some SSBs cross two slots. In a case in which SSBs cross two slots, if five SSBs are transmitted in two slots, it may be considered that 2.5 SSBs are transmitted in one slot or that more than two SSBs are transmitted in one slot.

The system frame includes a plurality of consecutive slots, at least one of the plurality of slots is capable of supporting transmission of at least two SSBs, and a maximum of $L_{max}$ SSBs are transmitted in one SSB period. In other words, all SSBs in the SSB set may be jointly sent in a start period of time of one SSB period, to reserve a sufficient time period for subsequent downlink signaling such as a CORESET0, a SIB1, a random access response (random access response, RAR), and a message 4 (Msg4), and subsequent uplink signaling such as a physical random access channel (physical random access channel, PRACH) and a message 5 (Msg5). This ensures that any terminal device can complete an initial access process in one SSB period, thereby further reducing an initial access delay and improving access efficiency.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

It should be noted that a quantity of slots (slots) in one system frame (system frame) is usually related to a subcarrier spacing (subcarrier spacing, SCS). Therefore, after the maximum quantity $L_{max}$ of SSBs supported by the SSB set increases, for example, the maximum quantity may be 128 or 256, corresponding SSB patterns (patterns), that is, the following solution 1 to solution 5, are designed in this embodiment of this application, to provide resources for a larger quantity of SSBs. The SSB patterns can be understood as time domain resources and frequency domain resources corresponding to the SSBs. For example, the time domain resources corresponding to the SSB patterns may be symbols occupied by the SSBs in time domain. The following uses examples to describe time domain resources in SSB patterns corresponding to different subcarrier spacings. For frequency domain resources, refer to the existing SSB patterns. This is not limited in this embodiment of this application.

Solution 1: A subcarrier spacing SCS may be 30 kilohertz (kHz), and an entire system frame (10 ms) can be used to transmit SSBs without a half-frame limitation. In other words, the SSBs are unnecessarily sent only in a first half frame (5 ms) or a latter half frame (5 ms) of the system frame.

For example, in this implementation, a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB} \bmod (T_{SSB_period}/T_{frame,\mu}) = \{0,1,\ldots,\left\lfloor \frac{L_{max}}{N_{SSB}^{frame,\mu}} \right\rfloor - 1\}$, n = $\{0,1,2,\ldots,N_{slot}^{frame,\mu}-1\}$; or

when $SFN_{SSB} \bmod (T_{SSB_period}/T_{frame,\mu}) = \left\lfloor \frac{L_{max}}{N_{SSB}^{frame,\mu}} \right\rfloor$, n = $\{0,1,2,\ldots,\left\lfloor \frac{L_{max} \bmod N_{SSB}^{frame,\mu}}{N_{SSB}^{slot,\mu}} \right\rfloor - 1\}$; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,8}, and {2,8} indicates that start symbols of two SSBs in one slot are a symbol 2 and a symbol 8, respectively.

For example, with reference to FIG. 6, when $L_{max}$=128, time domain resources corresponding to an SSB pattern may be as follows:

$$(\{2,8\}+14*n+20*14*SFN_{SSB}) \bmod N_{symbol}^{frame,\mu}, \text{ and } N_{symbol}^{frame,\mu} = 280,$$

where

when $SFN_{SSB} \bmod (T_{SSB_{period}}/10) = \{0,1,2\}$, n = {0,1,2, ...,19}; or
when $SFN_{SSB} \bmod (T_{SSB_{period}}/10) = 3$, n = {0,1,2,3}.

If two SSBs are transmitted in each slot in one system frame, 40 SSBs can be transmitted in one system frame. In other words, if transmitting one SSB takes 0.25 ms, transmitting 128 SSBs takes a total of 32 ms, that is, 3.2 system frames. Optionally, the 3.2 system frames may include three complete system frames and first two subframes in a 4th system frame. Eight SSBs can be transmitted in first 2 ms (four slots) in each system frame.

It can be learned that, in comparison with a case in which SSBs are sent only in a first half frame or a latter half frame of a system frame, in this embodiment, a half-frame limitation of 5 ms is canceled, so that time domain resources of system frames can be fully utilized to send more SSBs, and the SSBs can be preferentially sent. In this way, the terminal device can receive the SSBs as soon as possible to complete initial access. In addition, the solution 1 is compatible with SSB pattern designs in the existing protocol. This can reduce technical implementation complexity.

Correspondingly, if 128 SSBs are to be jointly transmitted in one SSB window, setting a window length of the SSB window to 32 ms may be taken into account, that is, 32 ms can support a maximum of 128 SSBs. In other words, when a maximum of 128 SSBs in the SSB set can be sent, the window length of the SSB window may be set to 32 ms, so that a requirement of sending all SSBs in the SSBs can be met.

It should be noted that the window length of the SSB window may be alternatively set based on a quantity of actually sent SSBs in the SSB set. For example, if a maximum of 128 SSBs in the SSB set can be sent, and 64 SSBs are actually sent, the window length of the SSB window may be set to 16 ms.

Similarly, if 256 SSBs are to be jointly transmitted in one window, setting a window length of the SSB window to 64 ms may be taken into account, that is, 64 ms can support a maximum of 256 SSBs.

In a possible implementation, the SSB sending period may be carried in a serving cell SSB periodicity (ssb-PeriodicityServingCell) information element of the SIB1. For example, the SSB period may be configured as 160 ms, 320 ms, ..., or the like.

Solution 2: A subcarrier spacing SCS may be 120 kilohertz (kHz), and an entire system frame (10 ms) can be used to transmit SSBs without a half-frame limitation. In other words, the SSBs are unnecessarily sent only in a first half frame (5 ms) or a latter half frame (5 ms) of the system frame.

For example, in this implementation, a symbol location of the time domain resource in the one or more consecutive system frames may satisfy the following:

$$(X+28*n+N_{slot}^{frame,\mu}*14*SFN_{SSB}) \bmod N_{symbol}^{frame,\mu},$$

where

when $SFN_{SSB} \bmod (T_{SSB_{period}}/T_{frame,\mu}) = \{0,1,\ldots,\left\lfloor \frac{L_{max}}{N_{SSB}^{frame,\mu}} \right\rfloor - 1\}$, n = $\{0,1,2,\ldots,N_{slot}^{frame,\mu} - 1\}$;
or
when $SFN_{SSB} \bmod (T_{SSB_{period}}/T_{frame,\mu}) = \left\lfloor \frac{L_{max}}{N_{SSB}^{frame,\mu}} \right\rfloor$, n = $\{0,1,2,\ldots,\left\lfloor \frac{L_{max} \bmod N_{SSB}^{frame,\mu}}{N_{SSB}^{slot,\mu}} \right\rfloor - 1\}$;
and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

The following uses the SSB pattern in the case D (the case D, SCS=120 kHz) and a slot configuration in a half frame being 8:2 as an example for description. In the case D, the SSB pattern is {4,8,16,20}+28*n, where n=0,1,2,3,5,6,7,8,10,11,12,13,15,16,17,18, and the uplink-downlink slot configuration is 8:2. The slot configuration may be 8:2. The first half frame or the latter half frame may be used as one group, a total of 40 slots are included, and slot numbers are sequentially {0, 1, 2, ..., 38, 39}. Slots whose slot numbers include units digit 8 and 9 are uplink slots, and the other slots are downlink slots. In this case, there are 32 downlink slots in 5 ms and two SSBs can be transmitted in each downlink slot, and therefore a maximum of 64 SSBs can be supported in 5 ms. Improvements are made in this embodiment of this application based on this.

Specifically, a half-frame limitation may be canceled, that is, both a first half frame and a latter half frame of one system frame can be used to transmit SSBs. In this case, the SSB patterns may be updated to one of the following:

Example 1: As shown in FIG. 7, the uplink-downlink slot configuration 8:2 may be kept. In this case, 128 SSBs need 10 ms, and 256 SSBs need 20 ms.

Example 2: As shown in FIG. 8, if uplink slots are canceled, all slots in one system frame can be used to transmit SSBs. In this case, 128 SSBs need 8 ms, and 256 SSBs need 16 ms.

For example, $L_{max}$=128. In this case, an SSB pattern may be as follows:

({4,8,16,20}+28*n +80*14*$SFN_{SSB}$) mod $N_{symbol}^{frame,\mu}$, where $N_{symbol}^{frame,\mu} = 1120$

For the example 1, when $SFN_{SSB}$ mod ($T_{SSB_{period}}$/10) = 0, n = {0,1,2, ... , 79}.

For the example 2, when $SFN_{SSB}$ mod ($T_{SSB_{period}}$/10) = 0, n = {0,1,2, ... , 63}.

For example, $L_{max}$=256. In this case, an SSB pattern may be as follows:

({4,8,16,20}+28*n +80*14*$SFN_{SSB}$) mod $N_{symbol}^{frame,\mu}$, where $N_{symbol}^{frame,\mu} = 1120$

For the example 1, when $SFN_{SSB}$ mod ($T_{SSB_{period}}$/10) = {0,1}, n = {0,1,2, ...,79}.

For the example 2, when $SFN_{SSB}$ mod ($T_{SSB_{period}}$/10) = 0, n = {0,1,2, ...,79}; and when $SFN_{SSB}$ mod ($T_{SSB_{period}}$/10) = 1, n = {0,1,2, ... , 47}.

Correspondingly, if SSBs are to be jointly transmitted in an SSB window, a window length of the SSB window needs to be increased as follows:

For the example 1, the window length of the SSB window is 10 ms (corresponding to 128 SSBs) or 20 ms (corresponding to 256 SSBs).

For the example 2, the window length of the SSB window is 8 ms (corresponding to 128 SSBs) or 16 ms (corresponding to 256 SSBs).

It can be learned that, in comparison with a case in which SSBs are sent only in a first half frame or a latter half frame of a system frame, in this embodiment, a half-frame limitation of 5 ms is canceled, so that time domain resources of system frames can be fully utilized to send more SSBs, and the SSBs can be preferentially sent. In this way, the terminal device can receive the SSBs as soon as possible to complete initial access. In addition, the solution 2 is compatible with the SSB pattern designs in the existing protocol. This can reduce technical implementation complexity.

Solution 3: A subcarrier spacing SCS may be 480 kilohertz (kHz) or 960 kilohertz (kHz), and an entire system frame (10 ms) can be used to transmit SSBs without a half-frame limitation. In other words, the SSBs are unnecessarily sent only in a first half frame (5 ms) or a latter half frame (5 ms) of the system frame.

For example, in this implementation, a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1,\ldots,\lfloor \frac{L_{max}}{N_{SSB}^{frame,\mu}} \rfloor -1\}$, n = $\{0,1,2,\ldots,N_{slot}^{frame,\mu}-1\}$; or

when $SFN_{SSB}\ mod(T_{SSB_period}/T_{frame,\mu})=\lfloor \frac{L_{max}}{N_{SSB}^{frame,\mu}} \rfloor$, n = $\{0,1,2,\ldots,\lfloor \frac{L_{max}\ mod\ N_{SSB}^{frame,\mu}}{N_{SSB}^{slot,\mu}} \rfloor -1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Specifically, in a half frame (5 ms), values of uplink slot numbers correspondingly vary according to different uplink-downlink slot configurations. Details are as follows.

Based on the uplink-downlink slot configuration 8:2 when SCS=120 kHz, there may be two cases of uplink-downlink configurations for 480 kHz and 960 kHz.

Case 1: With reference to FIG. 9, uplink-downlink slots corresponding to SCS=480 kHz/960 kHz are kept temporally consistent (temporally aligned) with uplink-downlink slots corresponding to 120 kHz. In this case, for SCS=480 kHz, uplink slots are numbered {32-39, 72-79, 112-119, 152-159}, and for SCS=960 kHz, uplink slots are numbered {64-79, 144-159, 224-239, 304-319}.

Case 2: With reference to FIG. 8, a slot configuration of uplink-downlink slots corresponding to SCS=480 kHz/960 kHz is kept consistent with the slot configuration corresponding to SCS=120 kHz, both of which are 8:2. In this case, for both SCS=480 kHz and SCS=960 kHz, in terms of locations of uplink slots, the last two slots of every 10 slots are uplink slots. For example, for SCS=480 kHz, uplink slot numbers are {8, 9, 18, 19, 28, 29, 38, 39, 48, 49, 58, 59, ..., 158, 159}, and for SCS=960 kHz, uplink slot numbers are {8, 9, 18, 19, 28, 29, 38, 39, 48, 49, 58, 59, ..., 318, 319}. In this case, a difference between the uplink-downlink slot configuration corresponding to SCS=480 kHz/960 kHz and the slot configuration in FIG. 8 lies only in that, when SCS=480 kHz/960 kHz, a total quantity of slots included in 5 ms is different from that in FIG. 8.

Example 3: For the case 1, the uplink-downlink slot configuration is kept the same as the slot configuration corresponding to SCS=120 kHz (8:2), and the uplink-downlink slots are temporally aligned with the uplink-downlink slots corresponding to SCS=120 kHz. In this case, SSBs may be represented by using {2,9}+14*n, where n=C. For SCS=480 kHz, 128 SSBs need 2.25 ms, where C={0-31, 40-71}; and 256 SSBs need 4.75 ms, where C={0-31, 40-71, 80-111, 120-151}. For SCS=960 kHz, 128 SSBs need 1 ms, where C={0-63}; and 256 SSBs need 2.25 ms, where C={0-63, 80-143}.

Example 4: For the case 2, when the uplink-downlink slot configuration is kept consistent with the slot configuration corresponding to SCS=120 kHz, and the uplink slot numbers are kept consistent with uplink slot numbers corresponding to SCS=120 kHz. For SCS=480 kHz or 960 kHz, duration needed to transmit 128 SSBs or 256 SSBs may be determined according to a method similar to that in the example 1. Details are not described in this embodiment of this application again.

Example 5: As shown in FIG. 10, if uplink slots are canceled, an SSB pattern may be {2,9}+14*n, where n=C. For SCS=480 kHz, 128 SSBs need 2 ms, where C={0-63}; and 256 SSBs need 4 ms, where C={0-127}. For SCS=960 kHz, 128 SSBs need 1 ms, where C={0-63}; and 256 SSBs need 2 ms, where C={0-127}.

Correspondingly, if SSBs are jointly sent in an SSB window, a window length of the SSB window needs to be configured to be a time in which joint sending of the $L_{max}$ SSBs is completed.

Solution 4: A subcarrier spacing SCS may be 240 kilohertz (kHz), and an entire system frame (10 ms) can be used to transmit SSBs without a half-frame limitation. In other words, the SSBs are unnecessarily sent only in a first half frame (5 ms) or a latter half frame (5 ms) of the system frame.

For example, in this implementation, a symbol location of the time domain resource in the one or more consecutive system frames may satisfy the following:

$$(X+56*n+N_{slot}^{frame,\mu}*14*SFN_{SSB}) \bmod N_{symbol}^{frame,\mu},$$

where

when $SFN_{SSB} \bmod (T_{SSB_period}/T_{frame,\mu})=\{0,1,\ldots,\left\lfloor \frac{L_{max}}{N_{SSB}^{frame,\mu}} \right\rfloor-1\}$, n = $\{0,1,2,\ldots,N_{slot}^{frame,\mu}-1\}$; or

when $SFN_{SSB} \bmod (T_{SSB_period}/T_{frame,\mu})=\left\lfloor \frac{L_{max}}{N_{SSB}^{frame,\mu}} \right\rfloor$, n = $\{0,1,2,\ldots,\left\lfloor \frac{L_{max} \bmod N_{SSB}^{frame,\mu}}{N_{SSB}^{slot,\mu}} \right\rfloor-1\}$;

and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

For example, as shown in FIG. 11, all slots are downlink slots. Details are as follows.

FIG. 11 shows an SSB pattern corresponding to SCS=240 kHz. It can be learned that 56 symbols corresponding to four slots are used as one SSB group, and each SSB group includes eight SSBs. Correspondingly, SSB groups with different quantities need to be occupied to send SSBs with different quantities, and joint and continuous sending of all SSBs needs to be completed. In other words, the SSB pattern may be {8,12,16,20,32,36,40,44}+56*n, where n=C. 128 SSBs need 4 ms, and are corresponding to 16 groups of SSBs, where C={0-15}; and 256 SSBs need 8 ms, and are corresponding to 32 groups of SSBs, where C={0-31}.

Correspondingly, SSBs are jointly sent in an SSB window. In this case, a window length of the SSB window needs to be configured to be a time in which joint sending of the $L_{max}$ SSBs is completed. For example, the window length may be 8 ms (which supports a maximum of 128 SSBs) or 16 ms (which supports a maximum of 256 SSBs).

It should be noted that, in the foregoing solution 1 to solution 4, a half-frame limitation on sending the SSBs in the system frame is canceled, so that a quantity of slots for transmitting the SSBs can be increased, and specific time domain locations such as system frame numbers, slot numbers, and symbols of the SSBs are clearly defined. In other words, system frame-level SSB pattern distribution is designed based on an existing solution, to meet a transmission requirement after the quantity of SSBs increases. In addition, time domain resources corresponding to an SSB pattern in each slot (that is, a symbol-level SSB pattern in one or more slots) are compatible with the designs of time domain resources of the SSB patterns in the existing protocol. This can reduce technical implementation complexity.

Solution 5: A subcarrier spacing SCS may be 30 kilohertz (kHz), and an entire system frame (10 ms) can be used to transmit SSBs without a half-frame limitation. In other words, the SSBs are unnecessarily sent only in a first half frame (5 ms) or a latter half frame (5 ms) of the system frame.

For example, in this implementation, the subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu}$$

, where

when $SFN_{SSB} \bmod (T_{SSB_period}/T_{frame,\mu})=\{0,1,\ldots,\left\lfloor \frac{L_{max}}{N_{SSB}^{frame,\mu}} \right\rfloor-1\}$, n = $\{0,1,2,\ldots,N_{slot}^{frame,\mu}-1\}$;

or

when $SFN_{SSB}\ \mathrm{mod}(T_{SSB_period}/T_{frame,\mu})=\left\lfloor\frac{L_{max}}{N_{SSB}^{frame,\mu}}\right\rfloor$, n = $\{0,1,2,\ldots,\ \left\lceil\frac{L_{max}\ \mathrm{mod}\ N_{SSB}^{frame,\mu}}{N_{SSB}^{slot,\mu}}\right\rceil-1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

Specifically, as shown in (a), (b), and (c) in FIG. 12, all slots in one system frame can be used to send 60 SSBs in one system frame, 128 SSBs need to be sent in 128/64=2.13 system frames, and 256 SSBs need to be sent in 256/64=4.26 system frames.

Optionally, SSBs may be jointly sent in one SSB window, and a window length of the SSB window needs to be configured to be a time needed to complete sending of all SSBs in the SSB set. For example, the window length may be 21.3 ms (which supports a maximum of 128 SSBs) or 42.6 ms (which supports a maximum of 256 SSBs).

The solution 5 is different from the solution 1 to the solution 4 in that, a half-frame limitation of 5 ms is canceled, a quantity of slots for transmitting SSBs is increased, and a quantity of symbols for transmitting SSBs in one slot is increased. In other words, in the solution 5, an equal quantity of SSBs can be transmitted in a shorter time, so that the initial access delay of the terminal device is further reduced.

That a network device sends, on a time domain resource corresponding to an SSB set, one or more SSBs included in the SSB set in S501 may be specifically implemented as follows: The network device sends, based on the SSB pattern shown in any one of FIG. 6 to FIG. 12, the SSB on the time domain resource corresponding to the SSB set.

Further, the network device further needs to notify the terminal device of an SSB index corresponding to the sent one or more SSBs. The method may further include the following step 1:

Step 1A: The network device sends the SSB index corresponding to the one or more SSBs. Each SSB is corresponding to one index, that is, an SSB index is used to uniquely indicate the SSB. In this way, the terminal device may learn, based on the parsed SSB index, which SSB is the received SSB, to complete receiving of other downlink signaling such as the CORESETO and the SIB1 based on the received SSB. The following provides detailed descriptions.

Optionally, after the quantity of SSBs increases (for example, the quantity of SSBs is greater than 64), a data volume of SSB-related indication information also increases accordingly. The SSB-related indication information may include a currently transmitted SSB index (SSB index), and a quantity of SSBs and an index of the SSB that are corresponding to an actually sent SSB in one SSB period. It should be understood that in one SSB period, the quantity of actually sent SSBs is less than or equal to the maximum value $L_{max}$ of SSBs that can be supported by the SSB set. The following specifically describes designs of the SSB-related indication information.

In a possible implementation, the SSB index (index) may be indicated by reusing an information element in a MIB. To be specific, a manner specified in the existing protocol may be used in which an SSB index is indicated by using an information element in a MIB. This reduces changes to the protocol and simplifies technical implementation.

Specifically, some bits of the SSB index may be carried by reusing some information elements (information elements, IEs) in the master information block MIB and/or in a payload (payload) of a physical broadcast channel PBCH, to reduce resources used and further improve efficiency

For example, with reference to Table 2 and Table 3, some bits of the SSB index are carried by reusing a first information element in the master information block MIB and/or a second information element in the physical broadcast channel PBCH. The first information element may include one or more of the following: a $4^{th}$ least significant bit of a system frame number SFN ($4^{th}$ LSB of SFN) or a spare (spare) bit in the MIB. The second information element may include one or more of the following: a half-frame indication (half frame indication) $a_{\bar{A}+4}$ or $6^{th}$ to $4^{th}$ least significant bits $a_{\bar{A}+5}$, $a_{\bar{A}+6}$, $a_{\bar{A}+7}$ of the SSB index ($6^{th}$-$4^{th}$ bit of candi. SSB index) in the payload (payload) of the PBCH. It can be understood that, when the spare bit is used, the bit is no longer referred to as a spare bit.

**Table 2**

| Bit | | Parameter | Note |
|---|---|---|---|
| MIB | 0 | $10^{th}$-$5^{th}$ MSB of SFN | Five most significant bits of a system frame number |
| | 1 | | |
| | 2 | | |
| | 3 | | |
| | 4 | | |
| | 5 | | |
| | 6 | subCarrierSpacingCommon | SCSs corresponding to a PDCCH and a PDSCH of a SIB1 |
| | 7 | ssb-SubcarrierOffset | Subcarrier offset of an SSB (kssb) |
| | 8 | | |
| | 9 | | |
| | 10 | | |
| | 11 | dmrs-TypeA-Position | Time-domain location of a PDSCH DMRS of the SIB1 |
| | 12 | pdcch-ConfigSIB1 /controlResourceSet-Zero | PDCCH configuration related to the SIB1 |
| | 13 | | |
| | 14 | | |
| | 15 | | |
| | 16 | pdcch-ConfigSIB 1 /searchSpaceZero | |
| | 17 | | |
| | 18 | | |
| | 19 | | |
| | 20 | cellBarred | Indicates whether access to a cell is barred |
| | 21 | intraFreqReselection | Indicates whether intra-frequency cell reselection is allowed |
| | 22 | spare | Spare |

Example 1: $L_{max}$=128, and the SSB index may be indicated by using a total of seven bits: three least significant bits of a DMRS pilot ($i_{SSB}$) information element in the PBCH channel, and $a_{\bar{A}+5}$, $a_{\bar{A}+5}$, $a_{\bar{A}+7}$ and the half-frame indication $a_{\bar{A}+4}$ in the payload of the PBCH.

For example, $L_{max}$ = 128, and the SSB index may be indicated by using a total of seven bits: $a_{\bar{A}+4}$, $a_{\bar{A}+5}$, $a_{\bar{A}+5}$, $a_{\bar{A}+7}$ and a PBCH DMRS sequence index. $a_{\bar{A}+5}$, $a_{\bar{A}+5}$, $a_{\bar{A}+7}$ respectively represent $2^{nd}$, $3^{rd}$, and $4^{th}$ most significant bits (most significant bits, MSBs) of the SSB index. $a_{\bar{A}+4}$ is a half-frame indication in the existing solution and is redefined in this embodiment of this application, and represents a most significant bit (a $1^{st}$ bit) of the SSB index. From a perspective of carrying the SSB index, system frames do not need to be reused to represent the SSB index. In this way, a start system frame number of an SSB#0 is not limited, and therefore an indication of the SSB is more flexible.

The half-frame indication indicates whether SSB sending is performed in a first half frame or a latter half frame of a system frame. In other words, the half-frame indication indicates whether SSBs are sent in a first half frame or sent in a latter half frame. The terminal device may determine a specific location of an SSB based on the half-frame indication. An SSB#0 in FIG. 7 is used as an example. If a value of the half-frame indication is a binary number 0, it indicates that the SSB is sent in a first half frame of a system frame, and it may be determined that the SSB#0 is located in a symbol 4 to a symbol 7 of a slot 0 in the system frame. Likewise, if a value of the half-frame indication is a binary number 1, it indicates that the SSB is sent in a latter half frame of the system frame, and it may be determined that the SSB#0 is located in a symbol 4 to a symbol 7 of a slot 40 in the system frame.

Example 2: $L_{max}$=256, and the SSB index may be indicated by using a total of nine bits: three least significant bits of $i_{SSB}$, $a_{\bar{A}+5}$, $a_{\bar{A}+6}$, $a_{\bar{A}+7}$ and the half-frame indication $a_{\bar{A}+4}$ in the payload of the PBCH, a $2^{nd}$ least significant bit of an SFN, and a $3^{rd}$ least significant bit of the SFN.

Specifically, the 256 SSBs may be divided into four groups, 2nd least significant bits of SFNs and 3rd least significant bits of the SFNs are used to indicate and distinguish between specific numbers of groups, and 7 bits are used to indicate some indexes of SSB indexes 0 to 127. The 2nd least significant bits of the SFNs change every 20 ms, and the 3rd least significant bits of the SFNs change every 40 ms. SCS=30 kHz is used as an example. One system frame includes 20 slots, and can be used to send 40 SSBs. Two system frames can be used to send 80 SSBs. Two system frames are used as a unit, and each unit is used to send 80 SSBs. Seven bits are used to indicate SSB indexes 0 to 79. The 2nd least significant bits of the SFNs and the 3rd least significant bits of the SFNs are used for further indication. When a 2nd least significant bit of an SFN and a 3rd least significant bit of the SFN are 00, 00 indicate a first group of SSBs and are corresponding to an SSB#0 to an SSB#79 within 20 ms. When a 2nd least significant bit of an SFN and a 3rd least significant bit of the SFN are 01, 01 indicate a second group of SSBs and are corresponding to an SSB#80 to an SSB#159 within the second 20 ms. When a 2nd least significant bit of an SFN and a 3rd least significant bit of the SFN are 10, 10 indicate a third group of SSBs and are corresponding to an SSB#160 to an SSB#239 within the third 20 ms. When a 2nd least significant bit of an SFN and a 3rd least significant bit of the SFN are 11, 11 indicate a fourth group of SSBs and are corresponding to an SSB#240 to an SSB#255 within the fourth 20 ms. Because the quantity of SSBs is 256, 7 bits are used to indicate 80 SSBs in each of the first three groups, and 7 bits are used to indicate 16 SSBs in the fourth group.

**Table 3**

| Bit | Parameter | Note |
|---|---|---|
| 24, $a_{\bar{A}+0}$ | 4th LSB of SFN | 4th least significant bit of an SFN |
| 25, $a_{\bar{A}+1}$ | 3rd LSB of SFN | 3rd least significant bit of the SFN, which is reused to represent an SSB index |
| 26, $a_{\bar{A}+2}$ | 2nd LSB of SFN | 2nd least significant bit of the SFN, which is reused to represent the SSB index |
| 27, $a_{\bar{A}+3}$ | 1st LSB of SFN | 1st least significant bit of the SFN |
| 28, $a_{\bar{A}+4}$ | 7th bit of candi. SSB index | 7th least significant bit of the SSB index |
| 29, $a_{\bar{A}+5}$ | 6th bit of candi. SSB index | 6th least significant bit of the SSB index |
| 30, $a_{\bar{A}+6}$ | 5th bit of candi. SSB index | 5th least significant bit of the SSB index |
| 31, $a_{\bar{A}+7}$ | 4th bit of candi. SSB index | 4th least significant bit of the SSB index |

For example, $L_{max}$ = 256, and the SSB index may be indicated by using a total of nine bits: $a_{\bar{A}+1}$, $a_{\bar{A}+2}$, $a_{\bar{A}+4}$, $a_{\bar{A}+5}$, $a_{\bar{A}+6}$, $a_{\bar{A}+7}$ and a PBCH DMRS sequence index. A total of seven bits, that is, $a_{\bar{A}+2}$, $a_{\bar{A}+4}$, $a_{\bar{A}+5}$, $a_{\bar{A}+6}$, $a_{\bar{A}+7}$ and the PBCH DMRS sequence index, may indicate any value of 0 to 127. Then, a specific SSB index is determined based on $a_{\bar{A}+1}$, $a_{\bar{A}+2}$. $a_{\bar{A}+1}$ in the existing protocol is used to indicate a 3rd least significant bit of an SFN and is updated every 40 ms, and $a_{\bar{A}+2}$ in the existing protocol is used to indicate a 2nd least significant bit of the SFN and is updated every 20 ms. When a 2nd least significant bit of an SFN ($a_{\bar{A}+2}$) and a 3rd least significant bit of the SFN ($a_{\bar{A}+1}$) are binary numbers 00, 00 indicate a first group of SSBs and are corresponding to an SSB#0 to an SSB#79 within 20 ms. When a 2nd least significant bit of an SFN and a 3rd least significant bit of the SFN are binary numbers 01, 01 indicate a second group of SSBs and are corresponding to an SSB#80 to an SSB#159 within the second 20 ms. When a 2nd least significant bit of an SFN and a 3rd least significant bit of the SFN are binary numbers 10, 10 indicate a third group of SSBs and are corresponding to an SSB#160 to an SSB#239 within the third 20 ms. When a 2nd least significant bit of an SFN and a 3rd least significant bit of the SFN are binary numbers 11, 11 indicate a fourth group of SSBs and are corresponding to an SSB#240 to an SSB#255 within the fourth 20 ms. Because the quantity of SSBs is 256, 7 bits are used to indicate 80 SSBs in each of the first three groups, and 7 bits are used to indicate 16 SSBs in the fourth group. The four groups of SSBs need to be sent within 80 ms, and the three least significant bits of the SFN are used. The three least significant bits may indicate a range of 8 at most. A start SFN number of the SSB#0 needs to start from a system frame whose modulo 8 is 0 (SFNmod8==0).

In addition, in the foregoing implementations, the three least significant bits of the SSB index can still be carried in the DMRS pilot ($i_{SSB}$) information element in the PBCH channel.

In other words, the network device may send, to the terminal device based on the multiplexing solution described in Table 2 and Table 3, the SSB index corresponding to the one or more SSBs, without occupying signaling resources other than resources occupied by the one or more SSBs. This can reduce resources used and improve efficiency.

In another possible implementation, the SSB index may be alternatively indicated in another information element. In other words, the indication manner of the SSB index in the existing protocol is not used. For example, the SSB index is indicated by using another information element in the MIB.

In still another possible implementation, in a standardized design of a future communication system (for example, a 6G system), a sufficient quantity of information elements may be redefined or planned to indicate the SSB index, so that the SSB index is indicated more simply and flexibly. In this case, a window length of an SSB window may not be limited by a MIB update period.

Further, the method shown in FIG. 5 may further include the following step 2A:

Step 2A: The network device sends a quantity of first SSBs and an index of the first SSB. The first SSB is one or more actually sent SSBs in one SSB period, and the quantity of first SSBs is not greater than $L_{max}$. By using the foregoing step, the terminal device can learn which SSBs are actually sent in one SSB period, and can correspondingly adjust an access policy. This reduces the initial access delay and improves access efficiency.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in an intra-group index (inoneGroup) and a group index (groupPresence) of the RRC signaling.

For example, the quantity of first SSBs may be carried in the following information elements of the RRC signaling:

```
Servingcellconfigcommon:: = SEQUENCE {
Ssb-PositionsBurst CHOICE{
shortBitmap BIT STRING (SIZE (4)),
mediumBitmap BIT STRING (SIZE (8)),
longBitmap BIT STRING (SIZE (64)),
longBitmap BIT STRING (SIZE (G))
}.
```

G=$L_{max}$. For example, $L_{max}$=128 is corresponding to longBitmap BIT STRING (SIZE (128)), and $L_{max}$=256 is corresponding to longBitmap BIT STRING (SIZE (256)).

For example, the index of the first SSB may be carried in the following information elements of the RRC signaling:

```
ServingcellconfigcommonSIB ::= SEQUENCE {
    Ssb-PositionsBurst SEQUENCE{
  inoneGroup            BIT STRING (SIZE (H)),
  groupPresence         BIT STRING (SIZE (K)),
  OPTIONAL—   Cond Lmax≥64
}.
```

Specifically, when $L_{max}$ is set to different values, there may be different configurations. For example, when $L_{max}$=128, {H, K}={8, 16} or {16, 8}. When $L_{max}$=256, {H, K}={16, 16}. H represents a quantity of SSB groups included in an SSB set, K represents a quantity of SSBs included in one SSB, and H and K satisfy H*K=$L_{max}$. For example, {16, 16} indicates that SSBs in the SSB set are divided into 16 groups, each group has 16 SSBs, and there are 128 SSBs in total. For specific implementations of H and K, refer to the existing solution. Details are not described in this embodiment of this application.

For example, the foregoing information elements may be defined as follows:

```
ServingcellconfigcommonSIB ::= SEQUENCE {
Ssb-PositionBurst SEQUENCE{
inoneGroup            BIT STRING (SIZE (16)),
groupPresence         BIT STRING (SIZE (16)),
OPTIONAL—   Cond Lmax=256
}.
```

It should be noted that the SSB-related indication information, such as the SSB index, the quantity of first SSBs, and the index of the first SSB, may be alternatively transmitted by reusing an information element in other signaling, and/or adding signaling, and/or adding an information element in existing signaling, and/or the like. A specific implementation of the SSB-related indication information is not limited in this embodiment of this application, provided that transmission of indication information of all actually sent SSBs can be completed in one SSB period.

Further, for ease of completing initial access by the terminal device in one SSB period, resources occupied by the CORESETO and the SIB1 that are corresponding to the SSB are further designed in this embodiment of this application.

In a possible design solution, the method may further include the following step 3A:

Step 3A: The network device sends, in one SSB period, a CORESET0#i and a SIB1#i that are corresponding to an SSB#i.

Specifically, the network device and the terminal device may send the CORESET0#i and the SIB1#i that are corresponding to the SSB#i, and other downlink signaling based on any one of the following solutions shown in FIG. 13 to FIG. 15. The following provides detailed descriptions.

In a possible design solution, $L_{max}$ SSBs may include an SSB whose index is i, the SSB whose index is i may be represented as the SSB#i , i is a natural number, and $0 \leq i \leq L_{max} - 1$.

Optionally, the SSB#i and the control resource set CORESET0#i corresponding to the SSB#i occupy a same time domain resource and different frequency domain resources, and the SSB#i and the system information block SIB1#i corresponding to the SSB#i occupy a same time domain resource and different frequency domain resources. In other words, the SSB, the CORESETO, and the SIB1 may occupy a same time domain resource through frequency division multiplexing. For example, when time domain resources are limited and frequency domain resources are relatively sufficient, the SSB, the CORESETO, and the SIB1 may be simultaneously transmitted (for example, transmitted in a same symbol) to reserve a sufficient time period for subsequent initial access-related downlink signaling and uplink signaling, or may be transmitted in advance. This further reduces the initial access delay.

An SSB#0 in (a) in FIG. 13 is used as an example for description. As shown in (a) in FIG. 13, in time domain, numbers of symbols occupied by the SSB#0, an SSB#1, and an SSB#2 are {2, 3, 4, 5,}, {6, 7, 8, 9}, and {10, 11, 12, 13}, respectively. In other words, each SSB occupies four consecutive symbols. In frequency domain, frequency domain resources occupied by the SSB#0 do not overlap frequency domain resources occupied by a CORESET0#0 corresponding to the SSB#0, and do not overlap frequency domain resources occupied by a SIB1#0 corresponding to the SSB#0. Both the SSB#0 and the CORESET0#0 occupy the symbol 2 and the symbol 3 in time domain, and both the SSB#0 and the SIB1#0 occupy the symbol 4 and the symbol 5 in time domain. In this way, frequency division multiplexing is implemented.

Correspondingly, in correspondence to the multiplexing mode shown in FIG. 13, this application further provides a pattern of a PDSCH used to carry the SIB1. For details, refer to Table 4 or Table 5. S represents a start symbol location of the PDSCH, and L represents symbol duration of the PDSCH. In Table 4, both the CORESETO and the PDSCH that carries the SIB1 occupy two symbols, and in Table 4, the CORESETO occupies one symbol, and the PDSCH that carries the SIB1 occupies three symbols.

Table 4

| Example | S | L |
|---|---|---|
| a | 4 | 2 |
| | 8 | 2 |
| | 12 | 2 |
| b | 3 | 2 |
| | 7 | 2 |
| | 11 | 2 |
| c | 2 | 2 |
| | 7 | 2 |
| | 12 | 2 |

It should be noted that, in time domain, a CORESETO and a SIB1 corresponding to an SSB may equally occupy symbols occupied by the SSB, as shown in (a), (b), and (c) in FIG. 13 and Table 4, or may occupy different quantities of symbols. This is not limited in this embodiment of this application.

**Table 5**

| Example | S | L |
|---|---|---|
| d | 3 | 3 |
| | 7 | 3 |
| | 11 | 3 |
| e | 2 | 3 |
| | 6 | 3 |
| | 10 | 3 |
| f | 1 | 3 |
| | 6 | 3 |
| | 11 | 3 |

Optionally, the SSB#i and the control resource set CORESET0#i corresponding to the SSB#i occupy different time domain resources, and the SSB#i and the system information block SIB1#i corresponding to the SSB#i occupy different time domain resources. In other words, the SSB, the CORESETO, and the SIB1 may occupy resources through time division multiplexing. For example, when frequency domain resources are limited and time domain resources are relatively sufficient, the SSB, the CORESETO, and the SIB1 may be transmitted in different time periods. In the foregoing implementation, a sufficient signal transmission/processing time period can be reserved for a terminal device that is far away from a cell center and/or that has a poor processing capability. This improves a success rate and robustness of initial access.

With reference to FIG. 14, SCS=30 kHz, $L_{max}$=128, and an SSB period 160 ms are used as an example. In time domain, an SSB#0 to an SSB#127 occupy first 64 slots, that is, time domain resources with total duration of 32 ms; and a CORESET0#i, a SIB1#i, and other downlink signaling that are corresponding to an SSB#i jointly occupy one slot. For example, a CORESET0#0, a SIB1#0, and other downlink signaling that are corresponding to an SSB#0 jointly occupy a slot 64, a CORESET0#127, a SIB1#127, and other downlink signaling that are corresponding to an SSB#127 jointly occupy a slot 191, CORESETOs, SIB1s, and the other downlink signaling that are corresponding to the 128 SSBs occupy a total of 128 slots, and the following 128 idle slots may be used to transmit other uplink or downlink signals. i={0,1,2,...,127}. It can be learned that the time domain resources occupied by the SSBs do not overlap the resources occupied by the CORESETOs and the SIB1s corresponding to the SSBs in time domain. In this way, time division multiplexing is implemented.

Correspondingly, the terminal device may find, based on the detected SSB index and parameters M and O, a slot $n_0$ of the CORESET0#0 corresponding to the SSB corresponding to the detected index, and perform subsequent PDCCH and SIB1 detection. An example is as follows:

$$n_0 = (O * 2^{\mu} + \lfloor i * M \rfloor) \bmod N_{slot}^{frame,\mu};$$

and

$$SFNc_n_0 = \lfloor (O * 2^{\mu} + \lfloor i * M \rfloor) / N_{slot}^{frame,\mu} \rfloor,$$

where

i represents the SSB index, and a value of i ranges from 0 to $L_{max}$-1; $n_0$ is a start slot number of a search space corresponding to the CORESET0#0; O is a time offset between the search space of the CORESET0#0 corresponding to the SSB#0 and a start moment of an even-numbered frame, and is measured in ms; and M is an interval between search spaces of two CORESET#0 corresponding to two adjacent SSBs, and is expressed in a quantity of slots. In the existing solution, for a frequency range 1 (frequency 1, FR1) and an FR2, values of O are {0, 2, 5, 7} and {0, 2.5, 5, 7.5}, respectively. For example, O=32 ms, and M=1.

Corresponding configuration parameters (such as O and M) may be modified based on different values of $L_{max}$. For example, O may be configured to be a time needed to complete sending of the $L_{max}$ SSBs, or may be configured to be a window length of an SSB window.

Further, that the SSB#i and the system information block SIB1#i corresponding to the SSB#i occupy different time domain resources may include: Time domain resources occupied by the system information block SIB1#i corresponding to the SIB1#i include and are more than time domain resources occupied by the SSB#i. Because the quantity of SSBs increases, a data volume of information that needs to be transmitted in SIB1s corresponding to the SSBs also increases. In this case, more time domain resources are reserved for the SIB1s, to ensure that transmission of the SSBs and the SIB1s can be completed as soon as possible. This further reduces the initial access delay.

According to existing configurations (as listed in Table 5.1.2.1.1-2 in 3GPP TS 38.214), a SIB1 can occupy a maximum of four symbols. Consequently, a requirement for increasing resources needed by the SIB1 cannot be met. To resolve a problem of insufficient SIB1 resources, this embodiment of this application provides a solution shown in FIG. 15. An SSB#0 in FIG. 15 is used as an example. The SSB#0 occupies a symbol 2 to a symbol 5, a CORESET0#0 corresponding to the SSB#0 occupies a symbol 0, and the SSB#0 and the CORESET0#0 use time division multiplexing. The SSB#0 and a SIB1#0 corresponding to the SSB#0 occupy different frequency domain resources (frequency division multiplexing), and time domain resources (the symbol 2 to a symbol 7) occupied by the SIB1#0 corresponding to the SSB#0 include and are more than time domain resources (the symbol 2 to the symbol 5) occupied by the SSB. In this way, more time domain resources are provided for the SIB1. It can be learned that more time-frequency resources are configured for the SIB1, to meet a requirement that more resources are needed to transmit the SIB1 after the quantity of SSBs increases.

Corresponding to FIG. 15, configurations of PDSCHs used to carry the SIB1 may be listed in Table 6. As listed in Table 6, a type-A PDSCH occupies a symbol 2 to a symbol 6, and a type-B PDSCH occupies a symbol 8 to a symbol 13. It can be learned that for both the type A or the type B, the PDSCHs listed in Table 6 both occupy six symbols, which are more than a quantity of symbols (a maximum of four symbols) occupied by a PDSCH in the existing solution, so that more time-frequency resources are provided for the SIB1.

**Table 6**

| PDSCH mapping type | S | L |
|---|---|---|
| Type A | 2 | 6 |
| Type B | 8 | 6 |

To improve reliability of the CORESETO and the SIB1, the foregoing step 3A may be specifically implemented as step 4A:

Step 4A: The network device sends, twice in one SSB period, CORESETOs and SIB1s that are corresponding to a same SSB.

Resources for sending twice the CORESETOs and the SIB1s that are corresponding to the same SSB may satisfy the following:

$$n_0 = (O * 2^{\mu} + \lfloor i * M \rfloor) \bmod N_{slot}^{frame,\mu};$$

$$n_1 = n_0 + Y;$$

$$SFNc_n_0 = \lfloor (O * 2^{\mu} + \lfloor i * M \rfloor) / N_{slot}^{frame,\mu} \rfloor;$$

and

$$SFN_{C_n_1} = \lfloor (O * 2^{\mu} + \lfloor i * M \rfloor + Y) / N_{slot}^{frame,\mu} \rfloor,$$

where

$n_0$ is a start slot number of the CORESET0#i that is corresponding to the SSB#i and that is transmitted for the first time, $n_1$ is a start slot number of the CORESET0#i that is corresponding to the SSB#i and that is transmitted for the second time, Y is a slot difference between start slots of the two CORESET0#i that are corresponding to the SSB#i and that are transmitted twice, and Y is an integer greater than or equal to 0. O is an offset, relative to a start moment of an even-numbered system frame, of the start slot of the CORESET0#i that is corresponding to the SSB#i and that is transmitted for the first time, and is measured in milliseconds ms. $2^{\mu}$ is a quantity of slots in one millisecond ms corresponding to different SCSs, and SCS = {15 kHz, 30 kHz, 60 kHz, . . } is respectively corresponding to $\mu$ = {0,1,2, ...}. M is a time interval between search spaces of CORESETO corresponding to two SSBs that are sent for two closest times. SFNc_$n_0$ is a system frame number of the start slot of the CORESET0#i that is corresponding to the SSB#i and that is transmitted for the first time. SFNc_$n_1$ is a system

frame number of the start slot of the CORESET0#i that is corresponding to the SSB#i and that is transmitted for the second time. $N_{slot}^{frame,\mu}$ is a quantity of slots in one system frame. In other words, a period of time may be reserved between two transmissions of the CORESETOs and the SIB1s that are corresponding to the same SSB, so that a sufficient time period is reserved for a terminal device that is far away from a cell center and/or that has a limited processing capability. This improves a success rate and robustness of initial access.

For example, the network device may send, based on the following solution shown in FIG. 17 or FIG. 18, the CORESETOs and the SIB1s that are corresponding to the same SSB. In this way, the terminal device can perform combined decoding on the CORESETOs or the SIB1s received twice, thereby improving a decoding success rate and improving initial access reliability and efficiency.

Example 1: With reference to FIG. 16, when SCS=30kHz ( $N_{slot}^{frame,\mu} = 20$ ), $L_{max}$=128, and Y=128 slots, SIB1s corresponding to an SSB#0 are separately sent in a slot 64 and a slot 192, and are sent once in each slot. To be specific, if a slot number of a second SIB1 corresponding to a slot (whose slot number is [i/2]) in which an SSB#i is located is 192+i, search spaces of SIB1s are a slot n0 and a slot $n_1$, where $n_1=n_0+L_{max}=n_0+128$. In this case, an SSB period may be set to 160 ms, and a SIB1 period may be set to 160 ms (the SIB1s are jointly sent twice in the first 128 ms). For CORESET0#0 search space parameters, O is equal to a window length 32 ms of an SSB window, and M=1, or O * $2^{\mu}$ is equal to a quantity of slots corresponding to the window length of the SSB window.

In the implementation of the example 1, if the terminal device does not have enough time to demodulate the SIB1 for the first time, the terminal device may have more processing time before the SIB1 is sent for the second time. Therefore, a sufficient time period is reserved for a terminal device that is far away from a cell center and/or that has a limited processing capability. This improves a success rate and robustness of initial access.

Example 2: As shown in FIG. 17, a SIB1#0 corresponding to an SSB#0 is sent once in each of two adjacent consecutive slots. For example, the SIB1#0 corresponding to the SSB#0 is sent once in each of a slot 64 and a slot 65. In this case, for CORESET0#0 search space parameters, O is equal to a window length 32 ms of an SSB window, and M=2. If a slot number of an SSB#i is $\lfloor i/2 \rfloor$, a slot number of a corresponding second SIB1 is 64 + 2 * *i* + 1.

In the implementation of the example 2, an interval between two transmissions of the CORESETOs and the SIB1s that are corresponding to the same SSB is short. For a terminal device with a strong processing capability, reliability of the CORESETOs and the SIB1s can be ensured, and waiting duration from receiving the SSB to receiving the CORESETOs and the SIB1s that are corresponding to the SSB by the terminal device can be further reduced. This reduces the initial access delay, thereby ensuring both initial access reliability and efficiency.

Further, after the quantity of SSBs increases, more resources may be further configured, to support more terminal devices in initiating random access processes. Therefore, in a possible design solution, the method shown in FIG. 5 may further include step 5A:

Step 5A: The network device receives PRACHs on random access occasions (random access channel occasions, ROs) corresponding to the $L_{max}$ SSBs.

An RO corresponding to an $i^{th}$ SSB (denoted as an SSB#i) in the $L_{max}$ SSBs is used by a terminal device that receives the SSB#i to send a transmission physical random access channel (physical random access channel, PRACH), to help the terminal device complete initial access.

A quantity Z of subframes including an RO in one system frame may be one or more of 1, 2, 4, and 8, and/or a subframe including an RO in one system frame is one or more earliest consecutive subframes in time domain in the system frame and is in a same SSB period in time domain as the ROs corresponding to the $L_{max}$ SSBs. Similar to sending of SSBs as early as possible in one SSB period, the ROs may be set in a period of time as early as possible in one RO period, so that any terminal device in a coverage area of the network device can select, from the ROs, an RO temporally closest to a moment at which downlink signaling is successfully demodulated, to initiate a random access process, to reduce waiting duration. This further reduces the initial access delay.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, and $N_{RO}^{group}$ is a quantity of ROs in one RO group.

Further, optionally, different RO groups are inconsecutive, and ROs in a same RO group are consecutive. This can ensure that ROs in a same group are continuously transmitted and that a time interval is reserved between different RO groups, so that both a low delay requirement and a robustness requirement of initial access can be fulfilled.

In the existing protocol, according to an RO table in TS 38.211, for RO configurations, different PRACH formats and different SCSs are corresponding to different configurations. A configuration for an RO index 251 in Table 6.3.3.2-2 in TS 38.211 is used as an example. If SCS=15 kHz, one system frame has 10 slots, including two random access slots (RACH slots). If one RO is configured for each RACH slot, four ROs can be configured in one system frame. If two ROs are configured for each RACH slot, eight ROs can be configured in one system frame.

This application provides a centralized RO configuration method, to increase RO resources, adapt to a requirement for increasing a quantity of SSBs, and reduce the initial access delay of the terminal device. Specifically, one system frame may be used as a unit. In 10 subframes, there are 10*R RACH slots, and one RACH slot is corresponding to $N_t^{RA,slot}$ ROs. A total quantity $N_{RO}^{frame,\mu} = 10 * R * N_t^{RA,slot}$ of ROs needed within 10 ms is equally divided into $N_{group}^{frame}$ groups, and each group has $N_{RO}^{group}$ ROs. Therefore, $N_{RO}^{group} * N_{group}^{frame} = N_{RO}^{frame,\mu}$. ROs in each group are continuously transmitted, a specific interval $N_{gap}$ exists between ROs in groups, and the interval may be expressed in a quantity of slots.

For example, as listed in Table 7, in one system frame, PRACH configurations whose PRACH configuration indexes are {1, 2, 3, 4} are respectively corresponding to one, two, four, and eight subframes used to transmit PRACHs (referred to as RACH subframes for short); PRACH configurations whose PRACH configuration indexes are {6, 7, 8, 9} are all corresponding to four RACH subframes, a subframe number difference between adjacent subframes in the four RACH subframes is 2, and the adjacent subframes are at an interval of one subframe; and a PRACH configuration whose PRACH configuration index is 5 is corresponding to two RACH subframes, a subframe number difference between two RACH subframes is 2, and the RACH subframes are at an interval of one subframe.

**Table 7**

| PRACH configuration index | Subframe number |
|---|---|
| 1 | 0 |
| 2 | 0,1 |
| 3 | 0,1,2,3 |
| 4 | 0,1,2,3,4,5,6,7 |
| 5 | 0,2 |
| 6 | 0,2,4,6 |
| 7 | 1,3,5,7 |
| 8 | 2,4,6,8 |
| 9 | 0,3,6,9 |

A slot used to transmit a PRACH in a RACH subframe may be referred to as a RACH slot. It should be understood that all slots in each RACH subframe can be used to transmit an RO. For ease of understanding, the following uses SCS=15 kHz as an example for description. When SCS=15 kHz, one subframe includes only one slot. Correspondingly, one RACH subframe is equal to one RACH slot, both of which are 1 ms.

For example, when the total quantity of ROs that need to be transmitted in one system frame is $N_{RO}^{frame,\mu} = 8$, the centralized configuration may have the following examples.

Example 3: An example is used as an example in which a PRACH configuration whose PRACH configuration index is 3 and two ROs are configured for each RACH slot in Table 8. As shown in (a) in FIG. 18, eight ROs may be in one group, and the eight ROs occupy a total of four slots (a slot 0 to a slot 3).

Similarly, an example is used as an example in which a PRACH configuration whose PRACH configuration index is 4 and one RO is configured for each RACH slot in Table 8. As shown in (b) in FIG. 18, eight ROs occupy a total of eight slots (a slot 0 to a slot 7).

Example 4: An example is used as an example in which PRACH configurations whose PRACH configuration indexes are 6, 7, and 8 and two ROs are configured for each RACH slot in Table 8. Eight ROs may be divided into four groups, and the eight ROs occupy a total of four slots, for example, a slot 0, a slot 2, a slot 4, and a slot 6 in (a) in FIG. 19, or a slot 1, a slot 3, a slot 5, and a slot 7 in (b) in FIG. 19, or a slot 2, a slot 4, a slot 6, and a slot 8 in (c) in FIG. 19.

For various RO configurations in the example 3 and the example 4, refer to the following Table 8. The first two rows are respectively corresponding to (a) and (b) in FIG. 18, and the last three rows are respectively corresponding to (a), (b), (c), and (c) in FIG. 19.

It should be noted that, when there is only one RO group, it means that there is no grouping. In other words, in this case, the example 4 and the example 3 may be considered as a same solution.

**Table 8**

| PRACH configuration index | Subframe number | Quantity of RACH slots in one subframe | Quantity of ROs in one RACH slot |
|---|---|---|---|
| 3 | 0,1,2,3 | 2 | 2 |
| 4 | 0,1,2,3,4,5,6,7 | 1 | 1 |
| 6 | 0,2,4,6 | 2 | 2 |
| 7 | 1,3,5,7 | 2 | 2 |
| 8 | 2,4,6,8 | 2 | 2 |

In the existing solution, as shown in (a) in FIG. 20, when a SIB1 of the network device arrives at the terminal device with a high delay, or when the terminal device cannot catch up with an RO#0 in a current RO period (for example, an RO period #0) because the terminal device has a poor demodulation capability and causes an excessively high processing delay, the terminal device can send a PRACH only after an RO#0 in a next period (for example, an RO period #1) arrives, to perform uplink random access. Because the quantity of SSBs increases, an overall delay and needed resources for a complete SSB-RO mapping increase, and an SSB period and an RO period are correspondingly prolonged, greatly affecting an access delay of the terminal device.

To resolve this problem, an offset may be designed between a start slot of a time domain resource corresponding to an SSB and a start slot of an RO time domain resource corresponding to the SSB. The offset is greater than or equal to an uplink and downlink round trip time (round trip time, RTT) between the terminal device and an access network. In this way, a sufficient time period can be reserved for a terminal device that is far away from a cell center and/or that has a limited processing capability. This improves a success rate and robustness of initial access.

The offset is used to represent a time interval between the SSB and the corresponding RO, and may be represented by using any time unit: a symbol (symbol), a slot (slot), a system frame (frame), a microsecond (micro-second, μs), a millisecond (mili-second, ms), a second (second, s), or the like. A value of the offset may be greater than or equal to the uplink and downlink round trip time RTT between the terminal device and the access network.

Specifically, a start location of an access occasion (rach occasion, RO) (denoted as an RO#0) corresponding to an SSB#0 has a time offset: $T_{RO\#0} = T_{SSB\#0} + Z$. Z may be a time offset represented by one or more of the following time granularities: a system frame, a slot, and a symbol, and the like. For example, Z is one system frame, five slots, or one system frame plus two slots. When a time granularity of Z is a system frame, $SFN_{RO\#0} = SFN_{SSB\#0} + Z$ may hold true. When Z=1, $SFN_{RO\#0} = SFN_{SSB\#0} + 1$, indicating that a valid RO#0 associated with the SSB#0 starts by offsetting one system frame from a system frame of the SSB#0.

The following provides a description by using an example.

As shown in (b) in FIG. 20, an offset of the RO may be increased, for example, $SFN_{RO\#0} = SFN_{SSB\#0} + 1$. In this case, the overall RO mapping is offset backwards by a specific time, which may be, for example, K_offset (K_offset may be greater than or equal to a bidirectional transmission delay). The terminal device may receive downlink signaling by using the time, and can send a PRACH on an RO#0 of an SFN#1 in a current RO period (for example, an RO period #0) without waiting for an RO#0 in a next RO period (for example, an RO period #1). This reduces the initial access delay.

In a possible design solution, pieces of downlink signaling corresponding to a same SSB are transmitted in a same slot in a same beam direction. The downlink signaling may include one or more of the following: a control resource set 0 CORESETO, a system information block 1, a random access response RAR, a Msg4, paging, or other system information OSI. In other words, for downlink beams, beam switching is not performed in a slot but a same beam direction is reused, flexible switching is performed between slots, and the beam direction may not be bound. In this way, various pieces of downlink signaling corresponding to a same SSB may be transmitted in a same period of time by using a same beam, so that a beam switching probability can be reduced, and a switching delay problem caused by beam switching can be alleviated. This further reduces the initial access delay.

Specifically, a system frame of 10 m is used as an example. SSBs are jointly sent in an SSB set, and then a SIB1#0 to a SIB1#7 corresponding to an SSB#0 to an SSB#7 are sent. An SSB and a SIB1 with a same index, for example, the SSB#0 and the SIB1#0, have consistent beam directions.

Further, remaining symbols in a slot occupied by a SIB1 may be used to transmit other downlink data that is in a same beam direction as the SIB1, such as a RAR and a Msg4, and an idle slot may be used to transmit downlink data in any beam direction.

The SSB patterns in FIG. 18 are used as an example. With reference to FIG. 21, a beam direction of a SIB1#0 in a slot #64 is the same as that of an SSB#0, that is, the SIB1#0 corresponding to the SSB#0 is also transmitted in the beam direction. Downlink signaling such as a RAR, a Msg4, and OSI of a terminal device in a beam coverage area of the SSB#0 may be transmitted on remaining symbols after a SIB1. On the one hand, when a link budget is insufficient and the terminal device unsuccessfully demodulates the SIB1 initially transmitted in the slot #64, a slot #65 may be used for a second transmission of the SIB 1#0 whose beam direction is consistent with that of the SSB#0. On the other hand, when a link budget is sufficient and the SIB1 does not need to be retransmitted, the slot #65 may be used to transmit other downlink signaling, such as a RAR, a Msg4, paging, and OSI in a beam coverage area of any SSB.

Correspondingly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5. In other words, for uplink beams, a same beam direction may be reused, and different beam directions may be avoided. In this way, various pieces of uplink signaling corresponding to a same SSB may also be transmitted in a same period of time by using a same beam, so that the beam switching probability can be reduced, and the switching delay problem caused by beam switching can be alleviated. This further reduces the initial access delay.

Specifically, as shown in FIG. 22, for uplink beams (a PRACH, a Msg3, an ACK, a Msg5, and the like), a time division multiplexing mode may be used between different beam directions. A terminal device in a beam direction of an SSB#0 can send the PRACH only on an RO#0 associated with the SSB#0, for example, may send uplink data such as the PRACH and the Msg3, to perform random access. Remaining idle slots, for example, remaining four slots in an SFN#1 (a system frame 1) in FIG. 22, may be used to transmit uplink data of a terminal device in a beam coverage area of any SSB. This reduces an overall initial access delay of the terminal device.

In a possible design solution, various pieces of uplink signaling corresponding to different SSBs may be transmitted by using different beams, to reduce interference. The different SSBs are SSBs that are not in a quasi co-location (quasi co-location, QCL) relationship.

S502: The terminal device receives, on the time domain resource corresponding to the SSB set, the one or more SSBs included in the SSB set.

Specifically, the terminal device may receive, based on the SSB pattern shown in any one of FIG. 6 to FIG. 12, the SSB on the time domain resource corresponding to the SSB set. For a specific implementation of the time-frequency resource corresponding to the SSB set, refer to the foregoing solution 1 to solution 5. Details are not described herein again.

Further, in correspondence to step 1A in S501, the method may further include the following step 1B:

Step 1B: The terminal device receives the SSB index corresponding to the one or more SSBs.

For example, the terminal device may receive the SSB index based on the solution described in Table 2 and Table 3.

Further, in correspondence to the foregoing step 2A, the method may further include the following step 2B:

Step 2B: The terminal device receives the quantity of first SSBs and the index of the first SSB.

For example, the terminal device may receive and parse the RRC signaling or the SIB 1 in S501, to obtain the quantity of first SSBs and the index of the first SSB.

In a possible design solution, in correspondence to the foregoing step 3A, the method may further include the following step 3B:

Step 3B: The terminal device receives, in one SSB period, the CORESET0#i and the *SIB1#i* that are corresponding to the *SSB#i.*

Specifically, the terminal device may transmit the CORESET0#i and the *SIB1#i* that are corresponding to the *SSB#i*, and the other downlink signaling based on any one of the foregoing solutions shown in FIG. 13 to FIG. 15.

Further, in correspondence to the foregoing step 4A, step 3B may be specifically implemented as the following step 4B:

Step 4B: The terminal device receives, twice in one SSB period, the *CORESET*0s and the *SIB*1s that are corresponding to the same *SSB.*

Specifically, the terminal device may receive, based on any foregoing solution shown in FIG. 17 or FIG. 18, the *CORESET*0s and the *SIB*1s that are corresponding to the same *SSB*. In this way, the terminal device can perform combined decoding on the CORESETOs or the SIB1s received twice, thereby improving a decoding success rate and improving initial access reliability and efficiency.

S503: The terminal device initiates a random access process based on the received SSB.

In a possible design solution, the method may further include step 5B:

Step 5B: The terminal device sends a random access channel PRACH to the network device on an RO corresponding to the received SSB.

For example, the terminal device may initiate the random access process based on the RO pattern shown in FIG. 18 or FIG. 19.

It should be noted that a terminal device in the coverage area of the network device may receive only one SSB, and the terminal device may send a PRACH to the network device on an RO corresponding to the received SSB, to complete initial access.

Based on the method shown in FIG. 5, the time domain resource used to transmit the SSB set on one SSB period is related to the SFN and is not limited by a half frame (half frame, a first half frame or a latter half frame), so that cross-frame transmission of SSBs can be implemented, to support a larger quantity of SSBs. The network device may send some or all of the SSBs in the SSB set on the time domain resource by using more beams than those in the existing solution, to cover signals in the entire area of the network device, and enhance a signal coverage capability of the network device in a large area. In this way, a terminal device located in any coverage area of the network device learns a specific location of the time domain resource, quickly receives an SSB on the time domain resource, and quickly completes initial access based on the received SSB, thereby reducing the initial access delay and improving access efficiency.

With reference to FIG. 5 to FIG. 22, the foregoing details the initial access method provided in embodiments of this application. With reference to FIG. 23 to FIG. 25, the following details communication apparatuses configured to perform the initial access method provided in embodiments of this application.

For example, FIG. 23 is a diagram 1 of a structure of a communication apparatus according to an embodiment of this application. As shown in FIG. 23, the communication apparatus 2300 includes a receiving module 2301. For ease of description, FIG. 23 shows only main components of the communication apparatus 2300.

The receiving module 2301 is configured to receive one or more SSBs on a time domain resource that carries a synchronization signal/physical broadcast channel SS/PBCH block SSB set in one SSB period. The SSB set is a set including one or more SSBs, a maximum value of a quantity of SSBs in the SSB set is $L_{max}$, $L_{max}$>64, and a time-frequency resource of the one or more SSBs is related to a system frame number SFN that carries the SSB.

In a possible design solution, the time domain resource is in one or more earliest consecutive system frames in time domain in the SSB period. The system frame includes a plurality of consecutive slots, at least one of the plurality of slots is capable of supporting transmission of at least two SSBs, and a maximum of $L_{max}$ SSBs are transmitted in one SSB period. That at least one of the plurality of slots is capable of supporting transmission of at least two SSBs includes the following cases:

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of the SSBs cross two slots.

The system frame includes a plurality of consecutive slots, at least one of the plurality of slots is capable of supporting transmission of at least two SSBs, and a maximum of $L_{max}$ SSBs are transmitted in one SSB period.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

It should be noted that a quantity of slots (slots) in one system frame (system frame) is usually related to a subcarrier spacing (subcarrier spacing, SCS). Therefore, after the maximum quantity $L_{max}$ of SSBs supported by the SSB set increases, for example, the maximum quantity may be 128 or 256, corresponding SSB patterns (patterns), that is, the following solution 1 to solution 5, are designed in this embodiment of this application, to provide resources for a larger quantity of SSBs. The following uses examples for description.

Solution 1: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})= \{0,1, ..., \left\lfloor \frac{L_{max}}{N_{SSB}^{frame,\mu}} \right\rfloor - 1\}$, n = $\{0,1,2, ..., N_{slot}^{frame,\mu} - 1\}$; or

when $SFN_{SSB}\ mod(T_{SSB_period}/T_{frame,\mu})=\left\lfloor\frac{L_{max}}{N_{SSB}^{frame,\mu}}\right\rfloor$, n = $\{0,1,2,\ldots,\left\lfloor\frac{L_{max}\ mod\ N_{SSB}^{frame,\mu}}{N_{SSB}^{slot,\mu}}\right\rfloor-1\}$; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, $X$ = {2,8}, and {2,8} indicates that start symbols of two SSBs in one slot are a symbol 2 and a symbol 8, respectively.

Solution 2: A subcarrier spacing SCS may be 120 kilohertz kHz, and a symbol location of the time domain resource in the one or more consecutive system frames may satisfy the following:

$$(X+28*n+N_{slot}^{frame,\mu}*14*SFN_{SSB})\ mod\ N_{symbol}^{frame,\mu},$$

where

when $SFN_{SSB}\ mod(T_{SSB_{period}}/T_{frame,\mu})=\{0,1,\ldots,\left\lfloor\frac{L_{max}}{N_{SSB}^{frame,\mu}}\right\rfloor-1\}$, n = $\{0,1,2,\ldots,N_{slot}^{frame,\mu}-1\}$; or

when $SFN_{SSB}\ mod(T_{SSB_{period}}/T_{frame,\mu})=\left\lfloor\frac{L_{max}}{N_{SSB}^{frame,\mu}}\right\rfloor$, $n$ = $\{0,1,2,\ldots,\left\lfloor\frac{L_{max}\ mod\ N_{SSB}^{frame,\mu}}{N_{SSB}^{slot,\mu}}\right\rfloor-1\}$; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

Solution 3: A subcarrier spacing SCS may be 480 kilohertz kHz or 960 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1,\ldots,\left\lfloor\frac{L_{max}}{N_{SSB}^{frame,\mu}}\right\rfloor-1\}$, $n$ = $\{0,1,2,\ldots,N_{slot}^{frame,\mu}-1\}$; or

when $SFN_{SSB}\ mod(T_{SSB_period}/T_{frame,\mu})=\left\lfloor\frac{L_{max}}{N_{SSB}^{frame,\mu}}\right\rfloor$, $n$ = $\{0,1,2,\ldots,\left\lfloor\frac{L_{max}\ mod\ N_{SSB}^{frame,\mu}}{N_{SSB}^{slot,\mu}}\right\rfloor-1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Solution 4: A subcarrier spacing SCS may be 240 kilohertz kHz, and a symbol location of the time domain resource in the one or more consecutive system frames may satisfy the following:

$$(X+56*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1,\ldots,\left\lfloor\frac{L_{max}}{N_{SSB}^{frame,\mu}}\right\rfloor-1\}$, $n$ = $\{0,1,2,\ldots,N_{slot}^{frame,\mu}-1\}$; or

when $SFN_{SSB}\ mod(T_{SSB_period}/T_{frame,\mu})=\left\lfloor\frac{L_{max}}{N_{SSB}^{frame,\mu}}\right\rfloor$, $n$ = $\{0,1,2,\ldots,\left\lfloor\frac{L_{max}\ mod\ N_{SSB}^{frame,\mu}}{N_{SSB}^{slot,\mu}}\right\rfloor-1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, $X$ = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

Solution 5: A subcarrier spacing SCS may be 30 kilohertz kHz, and a symbol location of the time domain resource in the one or more consecutive system frames may satisfy the following:

$$(X+14*n+N_{sot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1,\ldots,\left\lfloor\frac{L_{max}}{N_{SSB}^{frame,\mu}}\right\rfloor-1\}$, $n=\{0,1,2,\ldots,N_{slot}^{frame,\mu}-1\}$; or

when $SFN_{SSB}\ mod(T_{SSB_period}/T_{frame,\mu})=\left\lfloor\frac{L_{max}}{N_{SSB}^{frame,\mu}}\right\rfloor$, $n=\{0,1,2,\ldots,\left\lceil\frac{L_{max}\ mod\ N_{SSB}^{frame,\mu}}{N_{SSB}^{slot,\mu}}\right\rceil-1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

Because the quantity of SSBs increases, a data volume of SSB-related indication information also increases accordingly. In this case, it is necessary to improve a transmission mode of the indication information. The SSB-related indication information may include a currently transmitted SSB index (SSB index), and a quantity of SSBs and an index of the SSB that are actually sent in one SSB period. It should be understood that in one SSB period, the quantity of actually sent SSBs is less than or equal to the maximum value $L_{max}$ of SSBs that can be supported by the SSB set. The following provides detailed descriptions.

In a possible design solution, the receiving module 2301 is further configured to receive SSB indexes. Values of the SSB indexes may be {0,1, ..., $L_{max}$ - 1}, and each of the SSB indexes is used to uniquely indicate an SSB, so that a terminal device distinguishes between different SSBs.

Optionally, some bits of the SSB index may be carried by reusing some information elements (information elements, IEs) in a master information block MIB and/or in a physical broadcast channel PBCH.

For example, some bits of the SSB index are carried by reusing a first information element in the master information block MIB and/or a second information element in the physical broadcast channel PBCH. The first information element may include one or more of the following: a 4th least significant bit of a system frame number SFN (4th LSB of SFN) or a spare (spare) bit in the MIB. The second information element may include one or more of the following: a half-frame indication (half frame indication) $a_{\bar{A}+4}$ or 6th to 4th least significant bits $a_{\bar{A}+5}$, $a_{\bar{A}+6}$, $a_{\bar{A}+7}$ of the SSB index (6th-4th LSB bits of candi. SSB index) in a payload (payload) of the PBCH.

In a possible design solution, the receiving module 2301 is further configured to receive a quantity of first SSBs and an index of the first SSB. The first SSB is an actually sent SSB in the $L_{max}$ SSBs in one SSB period. The first SSB is an actually sent SSB in the $L_{max}$ SSBs in one SSB period, and the quantity of first SSBs is not greater than $L_{max}$, so that the terminal device learns which SSBs are actually sent in one SSB period, and correspondingly adjusts an access policy.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in a group index (inoneGroup) and an intra-group index (groupPresence) of the RRC signaling.

It should be noted that the SSB-related indication information may be alternatively transmitted by reusing another information element in the MIB and/or in the PBCH, and/or reusing an information element in other signaling, and/or adding signaling, and/or adding an information element in existing signaling, and/or the like. A specific transmission mode of the SSB-related indication information is not limited in this embodiment of this application, provided that transmission of indication information of all actually sent SSBs can be completed in one SSB period.

In a possible design solution, the $L_{max}$ may include an *SSB#i* whose index is *i*, *i* is a natural number, and $0 \leq i \leq L_{max} - 1$. Optionally, the *SSB#i* and a control resource set *CORESET*0*#i* corresponding to the *SSB#i* occupy a same time domain resource and different frequency domain resources, and the *SSB#i* and a system information block *SIB1#i* corresponding to the *SSB#i* occupy a same time domain resource and different frequency domain resources.

Alternatively, the *SSB#i* and a control resource set *CORESET*0*#i* corresponding to the *SSB#i* occupy different time domain resources, and the *SSB#i* and a system information block *SIB1#i* corresponding to the *SSB#i* occupy different time domain resources.

Further, that the *SSB#i* and the system information block *SIB1#i* corresponding to the *SSB#i* occupy different time domain resources may include: Time domain resources occupied by the system information block *SIB1#i* corresponding to the *SIB1#i* include and are more than time domain resources occupied by the *SSB#i*.

In a possible design solution, the receiving module 2301 is further configured to receive, twice in one SSB period, two *CORESET*0*#i* and two *SIB1#i* that are corresponding to the *SSB#i*.

Optionally, resources used for receiving twice the two *CORESET*0*#i* and the two *SIB1#i* that are corresponding to the *SSB#i* may satisfy the following:

$$n_0 = (O * 2^{\mu} + \lfloor i * M \rfloor) \ mod \ N_{slot}^{frame,\mu};$$

$$n_1 = n_0 + Y;$$

$$\text{SFNc_}n_0 = \lfloor (O * 2^{\mu} + \lfloor i * M \rfloor) / \ N_{slot}^{frame,\mu} \rfloor;$$

and

$$SFN_{C_n_1} = \lfloor (O * 2^{\mu} + \lfloor i * M \rfloor + Y) / \ N_{slot}^{frame,\mu} \rfloor,$$

where

$n_0$ is a start slot number of the *CORESET*0*#i* that is corresponding to the *SSB#i* and that is received for the first time, $n_1$ is a start slot number of the *CORESET*0*#i* that is corresponding to the *SSB#i* and that is received for the second time, Y is a slot difference between start slots of the two *CORESET*0*#i* that are corresponding to the *SSB#i* and that are received twice, and Y is an integer greater than or equal to 0. *O* is an offset, relative to a start moment of an even-numbered system frame, of the start slot of the *CORESET*0*#i* that is corresponding to the *SSB#i* and that is received for the first time, and is measured in milliseconds ms. $2^{\mu}$ is a quantity of slots in one millisecond *ms* corresponding to different SCSs, and *SCS = {15kHz, 30kHz, 60kHz,..}* is respectively corresponding to $\mu$ = {0,1,2, ...}. *M* is a time interval between search spaces of *CORESET*0*s* corresponding to two adjacent SSBs. SFNc_$n_0$ is a system frame number of the start slot of the *CORESET*0*#i* that is corresponding to the *SSB#i* and that is received for the first time. SFNc_$n_1$ is a system frame number of the start slot of the *CORESET*0*#i* that is corresponding to the *SSB#i* and that is received for the second time.

$N_{slot}^{frame,\mu}$ is a quantity of slots in one system frame.

In a possible design solution, the communication apparatus 2300 may further include a sending module 2302. The sending module 2302 is configured to send random access channels PRACHs on ROs corresponding to the $L_{max}$ SSBs. A quantity Z of subframes including an RO in one system frame is one or more of 1, 2, 4, and 8, and/or a subframe including an RO in one system frame is one or more earliest consecutive subframes in time domain in the system frame and is in a same SSB period in time domain as the ROs corresponding to the $L_{max}$ SSBs.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, $N_{RO}^{group}$ is a quantity of ROs in one RO group, different RO groups are inconsecutive, and ROs in a same RO group are consecutive.

Further, different RO groups are inconsecutive, and ROs in a same RO group are consecutive.

In a possible design solution, there is an offset between a start slot of a time domain resource corresponding to an SSB and a start slot of an RO time domain resource corresponding to the SSB. The offset is greater than or equal to an uplink and downlink round trip time (round trip time, RTT) between the terminal device and an access network.

In a possible design solution, pieces of downlink signaling corresponding to a same SSB are transmitted in a same slot in a same beam direction. The downlink signaling may include one or more of the following: a control resource set 0 CORESETO, a system information block 1, a random access response RAR, a Msg4, paging, or other system information OSI.

Similarly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5.

Optionally, the receiving module 2301 and the sending module 2302 may be integrated into one module, for example, a transceiver module (not shown in FIG. 23). The transceiver module is configured to implement sending and receiving functions of the communication apparatus 2300.

In a possible design solution, the communication apparatus 2300 may further include a processing module 2303. The processing module 2303 is configured to implement a processing function of the communication apparatus 2300.

Optionally, the communication apparatus 2300 may further include a storage module (not shown in FIG. 23). The storage module stores a computer program or instructions. When the processing module 2303 executes the computer program or instructions, the communication apparatus 2300 is enabled to perform the initial access method shown in FIG. 5.

Optionally, the communication apparatus 2300 may be a terminal device, may be a chip (system) or another component or part that can be disposed in a terminal device, or may be an apparatus or a system that includes a terminal device. This is not limited in this application.

In addition, for technical effects of the communication apparatus 2300, refer to the technical effects of the initial access method shown in FIG. 5. Details are not described herein again.

For example, FIG. 24 is a diagram 2 of a structure of a communication apparatus according to an embodiment of this application. As shown in FIG. 24, the communication apparatus 2400 includes a sending module 2401. For ease of descriptions, FIG. 24 shows only main components of the communication apparatus.

The sending module 2401 is configured to send, on a time domain resource corresponding to a synchronization signal/physical broadcast channel SS/PBCH block SSB set, one or more SSBs included in the SSB set. The SSB set is a set including one or more SSBs, a maximum value of a quantity of SSBs in the SSB set is $L_{max}$, $L_{max}$>64, and a time-frequency resource of the one or more SSBs is related to a system frame number SFN that carries the SSB.

In a possible design solution, the time domain resource is in one or more earliest consecutive system frames in time domain in the SSB period.

Further, the system frame includes a plurality of consecutive slots, and at least one of the plurality of slots is capable of supporting transmission of at least two SSBs. It can be understood that a maximum of $L_{max}$ SSBs are transmitted in one SSB period. Specifically, that one slot is capable of supporting transmission of at least two SSBs can be understood as follows: Two or more SSBs can be transmitted in one slot. That at least one of the plurality of slots is capable of supporting transmission of at least two SSBs may include the following cases:

Case 1: One slot is capable of supporting transmission of at least two SSBs, and a maximum quantity of SSBs that can be transmitted in one slot is greater than or equal to 2.

Case 2: A plurality of slots are used as a unit. For example, two slots are used as a unit. Transmission of a maximum of four, five, or six SSBs is supported in two slots. Cross-slot transmission of SSBs is supported. In other words, symbol locations of some SSBs cross two slots. In a case in which SSBs cross two slots, if five SSBs are transmitted in two slots, it may be considered that 2.5 SSBs are transmitted in one slot or that more than two SSBs are transmitted in one slot.

The system frame includes a plurality of consecutive slots, at least one of the plurality of slots is capable of supporting transmission of at least two SSBs, and a maximum of $L_{max}$ SSBs are transmitted in one SSB period.

It should be understood that, that one slot is capable of supporting transmission of at least two SSBs means a maximum capability of transmitting SSBs in one slot, and a quantity of actually transmitted SSBs in one slot may be less than or equal to the maximum capability. For example, one slot is capable of supporting transmission of a maximum of U SSBs. In this case, for a slot, a quantity of actually transmitted SSBs may be one of the following: one SSB, two SSBs, ..., and U SSBs.

Solution 1: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu}) = \{0,1,\ldots,\left\lfloor \frac{L_{max}}{N_{SSB}^{frame,\mu}} \right\rfloor - 1\}$, $n$ = $\{0,1,2,\ldots,N_{slot}^{frame,\mu}-1\}$; or

when $SFN_{SSB}\ mod(T_{SSB_period}/T_{frame,\mu}) = \left\lfloor \frac{L_{max}}{N_{SSB}^{frame,\mu}} \right\rfloor$, $n$ = $\{0,1,2,\ldots,\left\lceil \frac{L_{max}\ mod\ N_{SSB}^{frame,\mu}}{N_{SSB}^{slot,\mu}} \right\rceil - 1\}$; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, $X$ = {2,8}, and {2,8} indicates that start symbols of two SSBs in one slot are a symbol 2 and a symbol 8, respectively.

Solution 2: A subcarrier spacing SCS may be 120 kilohertz kHz, and a symbol location of the time domain resource in the one or more consecutive system frames may satisfy the following:

$$(X+28*n+N_{slot}^{frame,\mu}*14*SFN_{SSB})\ \mathrm{mod}\ N_{symbol}^{frame,\mu},$$

where

when $SFN_{SSB}\ mod(T_{SSB_{period}}/T_{frame,\mu}) = \{0,1,\ldots,\left\lfloor \frac{L_{max}}{N_{SSB}^{frame,\mu}} \right\rfloor - 1\}$, $n$ = $\{0,1,2,\ldots,N_{slot}^{frame,\mu}-1\}$; or

when $SFN_{SSB}\ mod(T_{SSB_{period}}/T_{frame,\mu}) = \left\lfloor \frac{L_{max}}{N_{SSB}^{frame,\mu}} \right\rfloor$, $n$ = $\{0,1,2,\ldots,\left\lceil \frac{L_{max}\ mod\ N_{SSB}^{frame,\mu}}{N_{SSB}^{slot,\mu}} \right\rceil - 1\}$; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs included in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

Solution 3: A subcarrier spacing SCS may be 480 kilohertz kHz or 960 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1, ..., \lfloor \frac{L_{max}}{N_{SSB}^{frame,\mu}} \rfloor - 1\}$, $n$ = $\{0,1,2, ..., N_{slot}^{frame,\mu} - 1\}$; or

when $SFN_{SSB}\ mod(T_{SSB_period}/T_{frame,\mu})=\lfloor \frac{L_{max}}{N_{SSB}^{frame,\mu}} \rfloor$, $n$ = $\{0,1,2, ..., \lceil \frac{L_{max}\ mod\ N_{SSB}^{frame,\mu}}{N_{SSB}^{slot,\mu}} \rceil - 1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, X = {2,9}, and {2,9} indicates that start symbols of two SSBs in one slot are a symbol 2 and a symbol 9, respectively.

Solution 4: A subcarrier spacing SCS may be 240 kilohertz kHz, and a symbol location of the time domain resource in the one or more consecutive system frames may satisfy the following:

$$(X+56*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1, ..., \lfloor \frac{L_{max}}{N_{SSB}^{frame,\mu}} \rfloor - 1\}$, $n$ = $\{0,1,2, ..., N_{slot}^{frame,\mu} - 1\}$; or

when $SFN_{SSB}\ mod(T_{SSB_period}/T_{frame,\mu})=\lfloor \frac{L_{max}}{N_{SSB}^{frame,\mu}} \rfloor$, $n$ = $\{0,1,2, ..., \lceil \frac{L_{max}\ mod\ N_{SSB}^{frame,\mu}}{N_{SSB}^{slot,\mu}} \rceil - 1\}$; and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, $X$ = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

Solution 5: A subcarrier spacing SCS may be 30 kilohertz kHz, and a symbol location of the time domain resource in the one or more consecutive system frames may satisfy the following:

$$(X+14*n+N_{slot}^{frame,\mu}*14*SFN_{SSB}) \bmod N_{symbol}^{frame,\mu},$$

where

when $SFN_{SSB}\ mod(T_{SSB_period}/T_{frame,\mu})=\{0,1,\ldots,\left\lfloor \frac{L_{max}}{N_{SSB}^{frame,\mu}} \right\rfloor - 1\}$, $n$ = $\{0,1,2,\ldots,N_{slot}^{frame,\mu} - 1\}$; or

when $SFN_{SSB}\ mod(T_{SSB_period}/T_{frame,\mu})=\left\lfloor \frac{L_{max}}{N_{SSB}^{frame,\mu}} \right\rfloor$, $n$ = $\{0,1,2,\ldots,\left\lceil \frac{L_{max}\ mod\ N_{SSB}^{frame,\mu}}{N_{SSB}^{slot,\mu}} \right\rceil - 1\}$;
and

n is a slot number, $N_{symbol}^{frame,\mu}$ is a quantity of symbols in one system frame, $N_{slot}^{frame,\mu}$ is a quantity of slots in one system frame, $SFN_{SSB}$ is a system frame number, $L_{max}$ is a quantity of time domain resources, $N_{SSB}^{slot,\mu}$ is a quantity of SSBs in one slot, $N_{SSB}^{frame,\mu}$ is a quantity of SSBs in one system frame, $T_{SSB_period}$ is an SSB period, $T_{frame,\mu}$ is system frame duration, and a value of X is one of the following: {2,6,10}, {1,5,9}, or {0,5,10}. {2,6,10} indicates that start symbols of three SSBs in one slot are a symbol 2, a symbol 6, and a symbol 9, respectively. {1,5,9} indicates that start symbols of three SSBs in one slot are a symbol 1, a symbol 5, and a symbol 9, respectively. {2,6,10} indicates that start symbols of three SSBs in one slot are a symbol 2, a symbol 6, and a symbol 10, respectively.

In a possible design solution, the sending module 2401 is further configured to send SSB indexes. Values of the SSB indexes may be {0,1, ..., $L_{max}$ - 1}, and each of the SSB indexes is used to uniquely indicate an SSB.

Optionally, some bits of the SSB index may be carried by reusing some information elements in a master information block MIB and/or in a physical broadcast channel PBCH.

For example, some bits of the SSB index are carried by reusing a first information element in the master information block MIB and/or a second information element in the physical broadcast channel PBCH. The first information element may include one or more of the following: a $4^{th}$ least significant bit of a system frame number SFN ($4^{th}$ LSB of SFN) or a spare (spare) bit in the MIB. The second information element may include one or more of the following: a half-frame indication (half frame indication) $a_{\bar{A}+4}$ or $6^{th}$ to $4^{th}$ least significant bits $a_{\bar{A}+5}$, $a_{\bar{A}+6}$, $a_{\bar{A}+7}$ of the SSB index ($6^{th}$-$4^{th}$ LSB bits of candi. SSB index) in a payload of the PBCH.

In a possible design solution, the sending module 2401 is further configured to send a quantity of first SSBs and an index of the first SSB. The first SSB is an actually sent SSB in the $L_{max}$ SSBs in one SSB period, and the quantity of first SSBs is not greater than $L_{max}$.

Optionally, the index of the first SSB may be carried in radio resource control RRC signaling and/or a system information block SIB1.

For example, the quantity of first SSBs may be carried in a long bit mapping (longBitmap) of the RRC signaling and/or the system information block SIB1, and the index of the first SSB may be carried in a group index (inoneGroup) and an intra-group index (groupPresence) of the RRC signaling.

In a possible design solution, the $L_{max}$ may include an *SSB#i* whose index is *i, i* is a natural number, and $0 \le i \le L_{max} - 1$. Optionally, the *SSB#i* and a control resource set *CORESET*0*#i* corresponding to the *SSB#i* occupy a same time domain resource and different frequency domain resources, and the *SSB#i* and a system information block *SIB1#i* corresponding to the *SSB#i* occupy a same time domain resource and different frequency domain resources. Alternatively, the *SSB#i* and a control resource set *CORESET*0*#i* corresponding to the *SSB#i* occupy different time domain resources, and the *SSB#i* and a system information block *SIB1#i* corresponding to the *SSB#i* occupy different time domain resources.

Further, that the SSB#i and a system information block *SIB1#i* corresponding to the *SSB#i* occupy different time domain resources may include: Time domain resources occupied by the system information block *SIB1#i* corresponding to the *SIB1#i* include and are more than time domain resources occupied by the *SSB#i.*

In a possible design solution, the sending module 2401 is further configured to send, twice in one SSB period, two *CORESET*0*#i* and two *SIB1#i* that are corresponding to the *SSB#i.*

Optionally, resources used for sending twice the two *CORESET*0*#i* and the two *SIB1#i* that are corresponding to the *SSB#i* may satisfy the following:

$$n_0 = (O * 2^{\mu} + \lfloor i * M \rfloor)\ mod\ N_{slot}^{frame,\mu};$$

$$n_1 = n_0 + Y;$$

$$\text{SFNc_}n_0 = \lfloor (O * 2^{\mu} + \lfloor i * M \rfloor) / N_{slot}^{frame,\mu} \rfloor;$$

and

$$SFN_{C_n_1} = \lfloor (O * 2^{\mu} + \lfloor i * M \rfloor + Y) / N_{slot}^{frame,\mu} \rfloor,$$

where

$n_0$ is a start slot number of the *CORESET*0*#i* that is corresponding to the *SSB#i* and that is sent for the first time, $n_1$ is a start slot number of the *CORESET*0*#i* that is corresponding to the *SSB#i* and that is sent for the second time, Y is a slot difference between start slots of the two *CORESET*0*#i* that are corresponding to the *SSB#i* and that are sent twice, and Y is an integer greater than or equal to 0. *O* is an offset, relative to a start moment of an even-numbered system frame, of the start slot of the *CORESET*0*#i* that is corresponding to the *SSB#i* and that is sent for the first time, and is measured in milliseconds ms. $2^{\mu}$ is a quantity of slots in one millisecond *ms* corresponding to different *SCSs,* and *SCS* = *{15kHz, 30kHz,* 60*kHz*,..} is respectively corresponding to $\mu$ = {0,1,2, ...}. *M* is a time interval between search spaces of *CORESET*0s corresponding to two adjacent SSBs. SFNc_$n_0$ is a system frame number of the start slot of the *CORESET*0*#i* that is corresponding to the *SSB#i* and that is sent for the first time. SFNc_$n_1$ is a system frame number of the start slot of the *CORESET*0*#i* that is corresponding to the *SSB#i* and that is sent for the second time. $N_{slot}^{frame,\mu}$ is a quantity of slots in one system frame.

In a possible design solution, the communication apparatus 2011 further includes a receiving module. The receiving module 2402 is configured to receive random access channels PRACHs on random access occasions ROs corresponding to the $L_{max}$ SSBs. A quantity Z of subframes including an RO in one system frame is one or more of 1, 2, 4, and 8, and/or subframes including ROs in one system frame are a plurality of earliest consecutive subframes in time domain in the system frame and are in a same SSB period in time domain as the ROs corresponding to the $L_{max}$ SSBs.

Optionally, the RO may satisfy the following: $N_{RO}^{group} * N_{group}^{frame} = N_{RO}^{frame,\mu}$. $N_{RO}^{frame,\mu}$ is a total quantity of ROs in one system frame, $N_{group}^{frame}$ is a quantity of RO groups in one system frame, $N_{RO}^{group}$ is a quantity of ROs in one RO group, different RO groups are inconsecutive, and ROs in a same RO group are consecutive.

Further, different RO groups are inconsecutive, and ROs in a same RO group are consecutive.

In a possible design solution, there is an offset between a start slot of a time domain resource corresponding to an SSB and a start slot of an RO time domain resource corresponding to the SSB. The offset is greater than or equal to an uplink and downlink round trip time RTT between a terminal device and an access network.

In a possible design solution, pieces of downlink signaling corresponding to a same SSB are transmitted in a same slot in a same beam direction. The downlink signaling may include one or more of the following: a control resource set 0 CORESE0, a system information block 1 SIB1, a random access response RAR, a Msg4, paging, or other system information OSI.

Similarly, pieces of uplink signaling corresponding to a same SSB are transmitted on a same time domain resource in a same beam direction. The uplink signaling may include one or more of the following: a physical random access channel PRACH, a Msg3, an acknowledgment ACK, and a Msg5.

Optionally, the sending module 2401 and the receiving module 2402 may be integrated into one module, for example, a transceiver module (not shown in FIG. 24). The transceiver module is configured to implement sending and receiving functions of the communication apparatus 2400.

In a possible design solution, the communication apparatus 2400 may further include a storage module (not shown in FIG. 24). The storage module stores a computer program or instructions. When the processing module 2401 executes the computer program or instructions, the communication apparatus 2400 is enabled to perform the initial access method shown in FIG. 5.

Optionally, the communication apparatus 2400 may be a network device, may be a chip (system) or another component or part that can be disposed in a network device, or may be an apparatus or a system that includes a network device. This is not limited in this application.

In addition, for technical effects of the communication apparatus 2400, refer to the technical effects of the initial access method shown in FIG. 5. Details are not described herein again.

For example, FIG. 25 is a diagram 3 of a structure of a communication apparatus according to an embodiment of this application. The communication apparatus may be a terminal device or a network device, or may be a chip (system) or another part or component that can be disposed in a terminal device or a network device. As shown in FIG. 25, the communication apparatus 2500 may include a processor 2501. Optionally, the communication apparatus 2500 may further include a memory 2502 and/or a transceiver 2503. The processor 2501, the memory 2502, and the transceiver 2503 are coupled to each other, for example, may be connected to each other through a communication bus.

The following details the components of the communication apparatus 2500 with reference to FIG. 25.

The processor 2501 is a control center of the communication apparatus 2500, and may be a processor, or may be a generic term of a plurality of processing elements. For example, the processor 2501 is one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

Optionally, the processor 2501 may perform various functions of the communication apparatus 2500 by running or executing a software program stored in the memory 2502 and by invoking data stored in the memory 2502.

In a specific implementation, in an embodiment, the processor 2501 may include one or more CPUs, for example, a CPU 0 and a CPU 1 shown in FIG. 25.

In a specific implementation, in an embodiment, the communication apparatus 2500 may alternatively include a plurality of processors, for example, the processor 2501 and a processor 2504 shown in FIG. 25. Each of the processors may be a single-core processor (single-CPU), or may be a multi-core processor (multi-CPU). The processor herein may be one or more devices, circuits, and/or processing cores configured to process data (for example, computer program instructions).

The memory 2502 is configured to store a software program for performing the solutions of this application, and the processor 2501 controls execution of the software program. For a specific implementation, refer to the foregoing method embodiment. Details are not described herein again.

Optionally, the memory 2502 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another optical disk storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible by a computer. However, this is not limited thereto. The memory 2502 may be integrated with the processor 2501, or may exist independently, and is coupled to the processor 2501 through an interface circuit (not shown in FIG. 25) of the communication apparatus 2500. This is not specifically limited in this embodiment of this application.

The transceiver 2503 is configured to communicate with another communication apparatus. For example, the communication apparatus 2500 is a terminal device, and the transceiver 2503 may be configured to communicate with a network device or communicate with another terminal device. For another example, the communication apparatus 2500 is a network device, and the transceiver 2503 may be configured to communicate with a terminal device or communicate with another network device.

Optionally, the transceiver 2503 may include a receiver and a transmitter (which are not separately shown in FIG. 25). The receiver is configured to implement a receiving function, and the transmitter is configured to implement a sending function.

Optionally, the transceiver 2503 may be integrated with the processor 2501, or may exist independently, and is coupled to the processor 2501 through the interface circuit (not shown in FIG. 25) of the communication apparatus 2500. This is not specifically limited in this embodiment of this application.

It should be noted that the structure of the communication apparatus 2500 shown in FIG. 25 does not constitute any limitation on the communication apparatus. An actual communication apparatus may include more or fewer components than those shown in the figure, a combination of some components, or a different arrangement of the components.

In addition, for technical effects of the communication apparatus 2500, refer to the technical effects of the initial access method in the foregoing method embodiment. Details are not described herein again.

An embodiment of this application provides a communication system. The communication system includes the foregoing one or more terminal devices and one or more network devices.

It should be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

It should also be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of random access memories (random access memories, RAMs) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the foregoing embodiments, all or some of the foregoing embodiments may be implemented in a form of a computer program product. The computer program product includes one or more computer instructions or a computer program. When the computer instructions or the computer program is loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that a term "and/or" in this specification describes only an association relationship for describing associated objects, and indicates that three relationships may exist. For example, A and/or B may indicate the following three cases: Only A exists, both A and B exist, and only B exists. A and B each may be in a singular or plural form. In addition, a character "/" in this specification usually indicates an "or" relationship between associated objects, but may alternatively indicate an "and/or" relationship. For details, refer to a context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the systems, apparatuses, and units described above, refer to corresponding processes in the method embodiment. Details are not described herein again.

In the several embodiments provided in this application, it should be understood that the disclosed systems, apparatuses, and method may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one place or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An initial access method, wherein the method comprises:

   receiving, on a time domain resource corresponding to a synchronization signal/physical broadcast channel SS/PBCH block SSB set, one or more SSBs comprised in the SSB set, wherein
   a maximum value of a quantity of SSBs in the SSB set is $L_{max}$, $L_{max}$>64, and a time-frequency resource of the one or more SSBs is related to a system frame number SFN that carries the one or more SSBs.

2. An initial access method, comprising:
   sending, on a time domain resource corresponding to a synchronization signal/physical broadcast channel SS/PBCH block SSB set, one or more SSBs comprised in the SSB set, wherein a maximum value of a quantity of SSBs in the SSB set is $L_{max}$, $L_{max}$>64, and a time-frequency resource of the one or more SSBs is related to a system frame number SFN that carries the one or more SSBs.

3. The initial access method according to claim 1 or 2, wherein the time domain resource is in one or more earliest consecutive system frames in time domain in the SSB period.

4. The initial access method according to claim 3, wherein the system frame comprises a plurality of consecutive slots, and at least one of the plurality of slots is capable of supporting transmission of at least two SSBs.

5. The initial access method according to claim 3 or 4, wherein a subcarrier spacing SCS is 30 kilohertz kHz, and a symbol location of the time domain resource in the one or more consecutive system frames satisfies the following:

$$(X+14*n+N_{slot}^{frame,\mu}*14*SFN_{SSB}) \bmod N_{symbol}^{frame,\mu},$$

   wherein

   when $SFN_{SSB} \bmod(T_{SSB_period}/T_{frame,\mu})= \{0,1, ..., \left\lfloor \frac{L_{max}}{N_{SSB}^{frame,\mu}} \right\rfloor - 1\}$, n = $\{0,1,2, ..., N_{slot}^{frame,\mu} - 1\}$; or

   when

$$SFN_{SSB}\ mod(T_{SSB_period}/T_{frame,\mu})=\left\lfloor\frac{L_{max}}{N_{SSB}^{frame,\mu}}\right\rfloor,\ n=\{0,1,2,\ldots,\left\lfloor\frac{L_{max}\ mod\ N_{SSB}^{frame,\mu}}{N_{SSB}^{slot,\mu}}\right\rfloor-1\}$$

; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs comprised in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,8}, and {2,8} indicates that start symbols of two SSBs in one slot are a symbol 2 and a symbol 8, respectively.

**6.** The initial access method according to claim 3 or 4, wherein a subcarrier spacing SCS is 120 kilohertz kHz, and a symbol location of the time domain resource in the one or more consecutive system frames satisfies the following:

$$(X+28*n+N_{slot}^{frame,\mu}*14*SFN_{SSB})\ mod\ N_{symbol}^{frame,\mu},$$

wherein

when

$$SFN_{SSB}\ mod(T_{SSB_{period}}/T_{frame,\mu})=\{0,1,\ \ldots,\left\lfloor\frac{L_{max}}{N_{SSB}^{frame,\mu}}\right\rfloor-1\},\ n=\{0,1,2,\ldots,N_{slot}^{frame,\mu}-1\};$$

or

when

$$SFN_{SSB}\ mod(T_{SSB_{period}}/T_{frame,\mu})=\left\lfloor\frac{L_{max}}{N_{SSB}^{frame,\mu}}\right\rfloor,\ n=\{0,1,2,\ldots,\left\lfloor\frac{L_{max}\ mod\ N_{SSB}^{frame,\mu}}{N_{SSB}^{slot,\mu}}\right\rfloor-1\}$$

; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs comprised in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {4,8,16,20}, and {4,8,16,20} indicates that start symbols of four SSBs in one slot are a symbol 4, a symbol 8, a symbol 16, and a symbol 20, respectively.

**7.** The initial access method according to claim 3 or 4, wherein a subcarrier spacing SCS is 480 kilohertz kHz or 960 kilohertz kHz, and a symbol location of the time domain resource in the one or more consecutive system frames satisfies the following:

$$(X+14*n+N_{slot}^{frame,\mu}*14*SFN_{SSB})\ mod\ N_{symbol}^{frame,\mu},$$

wherein

when

$$SFN_{SSB}\ mod(T_{SSB_period}/T_{frame,\mu})=\{0,1,...,\left\lfloor\frac{L_{max}}{N_{SSB}^{frame,\mu}}\right\rfloor-1\},\ n=\{0,1,2,...,N_{slot}^{frame,\mu}-1\};$$

or

when

$$SFN_{SSB}\ mod(T_{SSB_period}/T_{frame,\mu})=\left\lfloor\frac{L_{max}}{N_{SSB}^{frame,\mu}}\right\rfloor,\ n=\{0,1,2,...,\left\lceil\frac{L_{max}\ mod\ N_{SSB}^{frame,\mu}}{N_{SSB}^{slot,\mu}}\right\rceil-1$$

; and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs comprised in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {2,9}, and {2,9} indicates that start symbols of two SSBs in one slot are a symbol 2 and a symbol 9, respectively.

**8.** The initial access method according to claim 3 or 4, wherein a subcarrier spacing SCS is 240 kilohertz kHz, and a symbol location of the time domain resource in the one or more consecutive system frames satisfies the following:

$$(X+56*n+N_{slot}^{frame,\mu}*14*SFN_{SSB})\ mod\ N_{symbol}^{frame,\mu},$$

wherein

when

$$SFN_{SSB}\ mod(T_{SSB_period}/T_{frame,\mu})=\{0,1,...,\left\lfloor\frac{L_{max}}{N_{SSB}^{frame,\mu}}\right\rfloor-1\},\ n=\{0,1,2,...,N_{slot}^{frame,\mu}-1\};$$

or

when

$$SFN_{SSB}\ mod(T_{SSB_period}/T_{frame,\mu})=\left\lfloor\frac{L_{max}}{N_{SSB}^{frame,\mu}}\right\rfloor,\ n=\{0,1,2,...,\left\lceil\frac{L_{max}\ mod\ N_{SSB}^{frame,\mu}}{N_{SSB}^{slot,\mu}}\right\rceil-1\};$$

and

n is a slot number, $N_{symbol}^{frame,\mu}$ is a quantity of symbols in one system frame corresponding to a corresponding subcarrier spacing, $N_{slot}^{frame,\mu}$ is a quantity of slots in one system frame corresponding to the corresponding subcarrier spacing, $SFN_{SSB}$ is a number of a system frame in which an SSB is located, $L_{max}$ is a quantity of SSBs comprised in the SSB set, $N_{SSB}^{slot,\mu}$ is a quantity of SSBs in one slot corresponding to the corresponding subcarrier spacing, $N_{SSB}^{frame,\mu}$ is a quantity of SSBs in one system frame corresponding to the corresponding subcarrier spacing, $T_{SSB_period}$ is an SSB sending period, $T_{frame,\mu}$ is system frame duration, X = {8,12,16,20,32,36,40,44}, and {8,12,16,20,32,36,40,44} indicates that start symbols of eight SSBs in one slot are a symbol 8, a symbol 12, a symbol 16, a symbol 20, a symbol 32, a symbol 36, a symbol 40, and a symbol 44, respectively.

**9.** The initial access method according to any one of claims 1 to 8, wherein $L_{max}$ SSBs comprise an SSB#i whose index is i, i is a natural number, and $0 \le i \le L_{max} - 1$; and

the SSB#i and a control resource set *CORESET*0#*i* corresponding to the SSB#i occupy a same time domain resource and different frequency domain resources, and the SSB#i and a system information block SIB1#i corresponding to the SSB#i occupy a same time domain resource and different frequency domain resources; or the SSB#i and a control resource set *CORESET*0#*i* corresponding to the SSB#i occupy different time domain resources, and the SSB#i and a system information block SIB1#i corresponding to the SSB#i occupy different time domain resources.

**10.** The initial access method according to claim 9, wherein that the SSB#i and a system information block SIB1#i corresponding to the SSB#i occupy different time domain resources comprises:
time domain resources occupied by the system information block SIB1#i corresponding to the SIB1#i comprise and are more than time domain resources occupied by the SSB#i.

**11.** The initial access method according to any one of claims 1 to 10, wherein pieces of downlink signaling corresponding to a same SSB are transmitted in a same slot in a same beam direction; and
the downlink signaling comprises one or more of the following: a control resource set 0 CORESETO, a system information block 1 SIB1, a random access response RAR, a Msg4, paging, or other system information OSI.

**12.** The initial access method according to claim 11, wherein pieces of uplink signaling corresponding to a same SSB are transmitted on a same time domain resource in a same beam direction; and
the uplink signaling comprises one or more of the following: a physical random access channel PRACH, a Msg3, an acknowledgment ACK, and a Msg5.

**13.** An initial access method, comprising: sending, on a time domain resource corresponding to a synchronization signal/physical broadcast channel SS/PBCH block SSB set, one or more SSBs in the SSB set, wherein a maximum value of a quantity of SSBs in the SSB set is $L_{max}$, $L_{max}$>64, and a time-frequency resource of the one or more SSBs is related to a system frame number SFN that carries the one or more SSBs.

**14.** A communication apparatus, comprising a receiving module, wherein
the receiving module is configured to receive, on a time domain resource of a synchronization signal/physical broadcast channel SS/PBCH block SSB set, one or more SSBs comprised in the SSB set, wherein a maximum value of a quantity of SSBs in the SSB set is $L_{max}$, $L_{max}$>64, and a time-frequency resource of the one or more SSBs is related to a system frame number SFN that carries the one or more SSBs.

**15.** A communication apparatus, comprising a sending module, wherein
the sending module is configured to send, on a time domain resource of a synchronization signal/physical broadcast channel SS/PBCH block SSB set, one or more SSBs comprised in the SSB set, wherein a maximum value of a quantity of SSBs in the SSB set is $L_{max}$, $L_{max}$>64, and a time-frequency resource of the one or more SSBs in the SSB set is related to a system frame number SFN that carries the one or more SSBs.

**16.** A communication apparatus, comprising a processor, wherein the processor is coupled to a memory; and
the processor is configured to execute a computer program stored in the memory, so that the communication apparatus performs the initial access method according to any one of claims 1 to 12, or the communication apparatus performs the initial access method according to claim 13.

**17.** A communication apparatus, comprising a processor and a memory, wherein
the memory is configured to store a computer program, and when the processor executes the computer program, the communication apparatus is enabled to perform the initial access method according to any one of claims 1 to 12, or the communication apparatus is enabled to perform the initial access method according to claim 13.

**18.** A communication system, comprising one or more terminal devices that perform the initial access method according to any one of claims 1 to 12 and one or more network devices that perform the initial access method according to claim 13.

**19.** A computer-readable storage medium, wherein the computer-readable storage medium comprises a computer program or instructions, and when the computer program or instructions are run on a computer, the computer is enabled to perform the initial access method according to any one of claims 1 to 12, or the computer is enabled to perform the initial access method according to claim 13.

**20.** A computer program product, comprising a computer program or instructions, wherein when the computer program or instructions are runs on a computer, the computer is enabled to perform the initial access method according to any one of claims 1 to 12 or the initial access method according to claim 13.

**21.** A chip system, comprising a processor and a memory, wherein
the memory is configured to store a computer program, and when the processor executes the computer program, the communication apparatus is enabled to perform the initial access method according to any one of claims 1 to 12, or the communication apparatus is enabled to perform the initial access method according to claim 13.

**22.** A chip system, comprising a processor, wherein the processor is coupled to a memory; and
the processor is configured to execute a computer program stored in the memory, so that the communication apparatus performs the initial access method according to any one of claims 1 to 12, or the communication apparatus performs the initial access method according to claim 13.

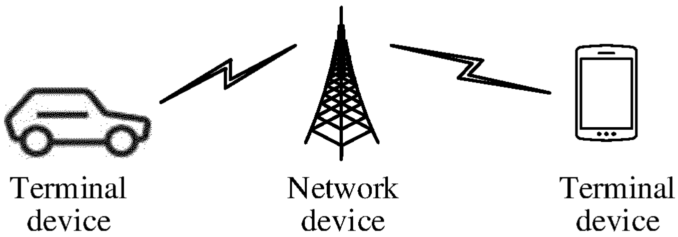
Terminal
device
Network
device
Terminal
device

FIG. 1

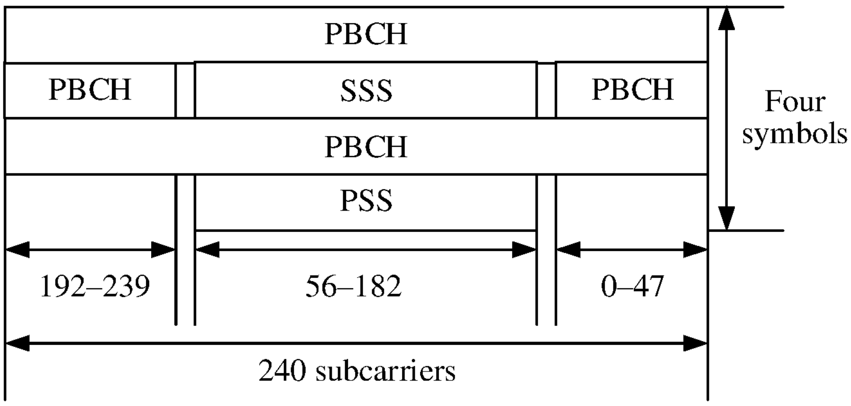
PBCH
PBCH
SSS
PBCH
PBCH
PSS
Four
symbols
192–239
56–182
0–47
240 subcarriers

FIG. 2

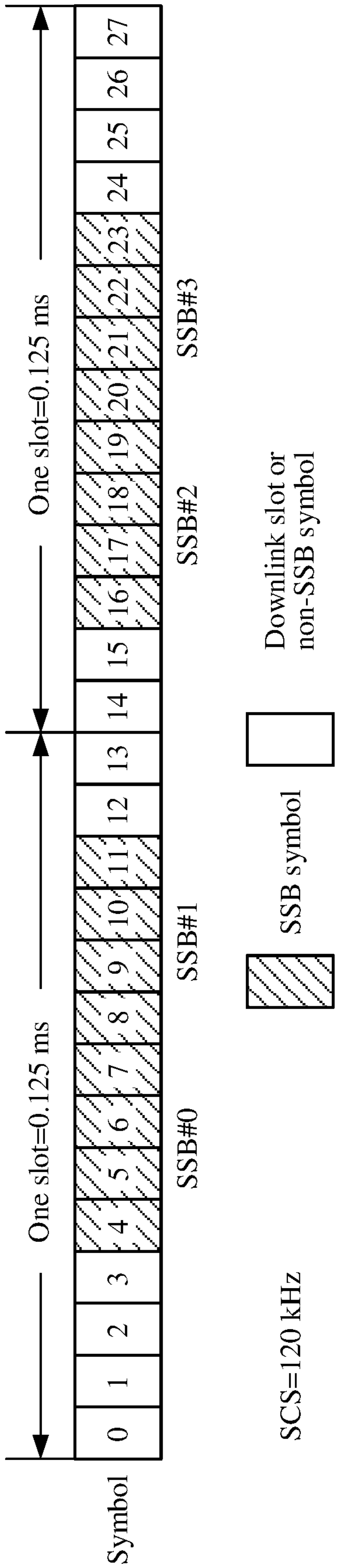
Symbol
0
1
2
3
4
5
6
7
8
9
10
11
12
13
14
15
16
17
18
19
20
21
22
23
24
25
26
27
One slot=0.125 ms
One slot=0.125 ms
SSB#0
SSB#1
SSB#2
SSB#3
SCS=120 kHz
SSB symbol
Downlink slot or
non-SSB symbol

FIG. 3

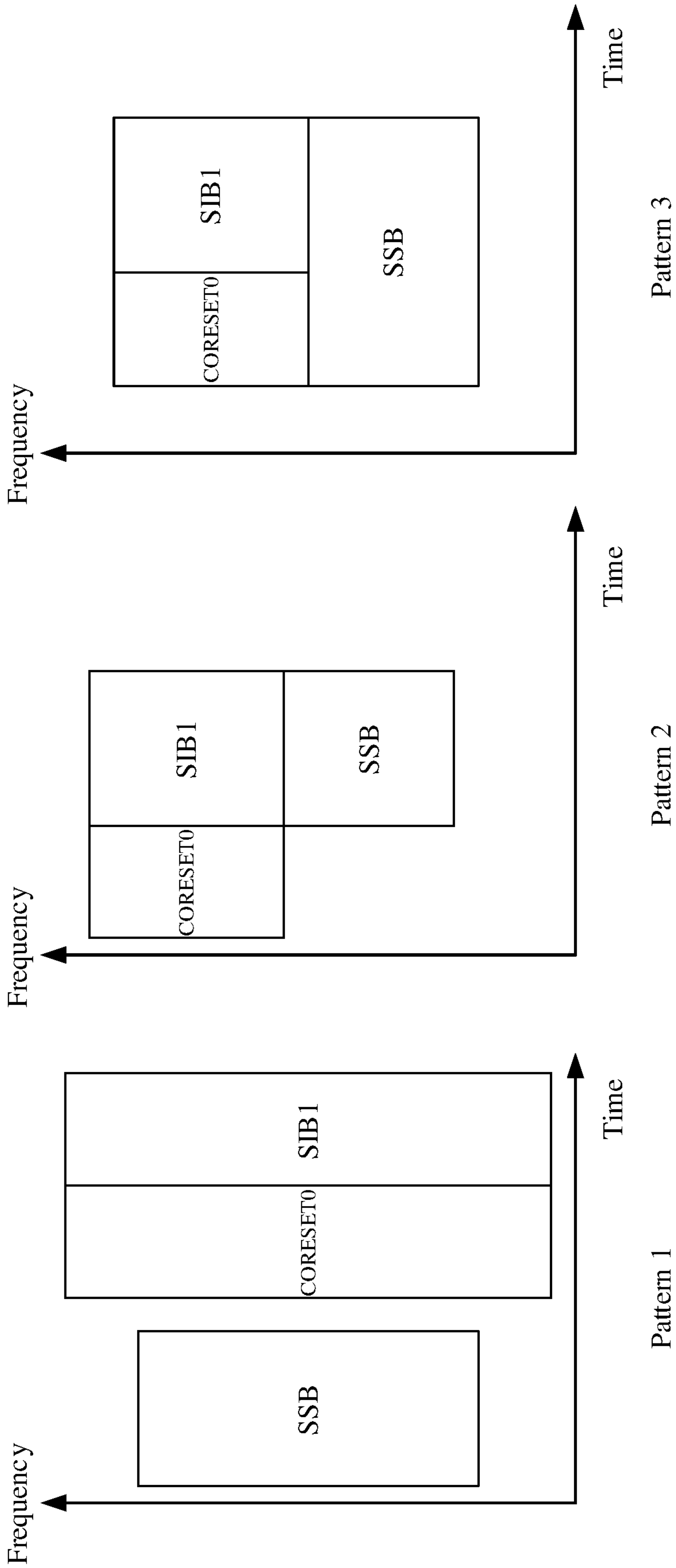
Frequency
Time
CORESET0
SIB1
SSB
Pattern 3
Frequency
Time
CORESET0
SIB1
SSB
Pattern 2
Frequency
Time
SSB
CORESET0
SIB1
Pattern 1

FIG. 4

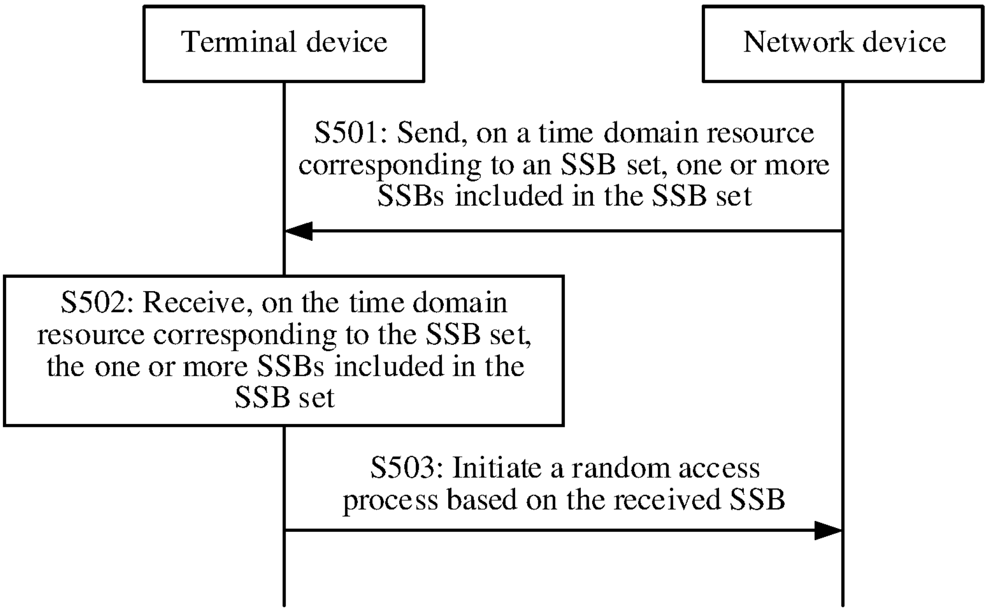
Terminal device
Network device
S501: Send, on a time domain resource corresponding to an SSB set, one or more SSBs included in the SSB set
S502: Receive, on the time domain resource corresponding to the SSB set, the one or more SSBs included in the SSB set
S503: Initiate a random access process based on the received SSB

FIG. 5

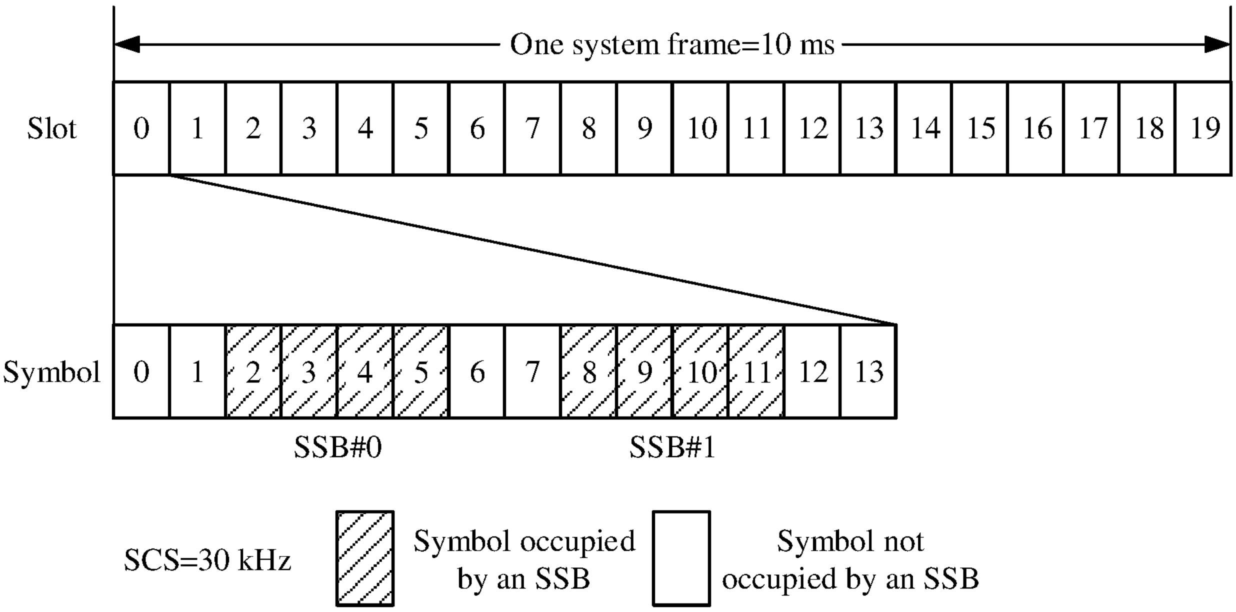
One system frame=10 ms
Slot
0 1 2 3 4 5 6 7 8 9 10 11 12 13 14 15 16 17 18 19
Symbol
0 1 2 3 4 5 6 7 8 9 10 11 12 13
SSB#0
SSB#1
SCS=30 kHz
Symbol occupied by an SSB
Symbol not occupied by an SSB

FIG. 6

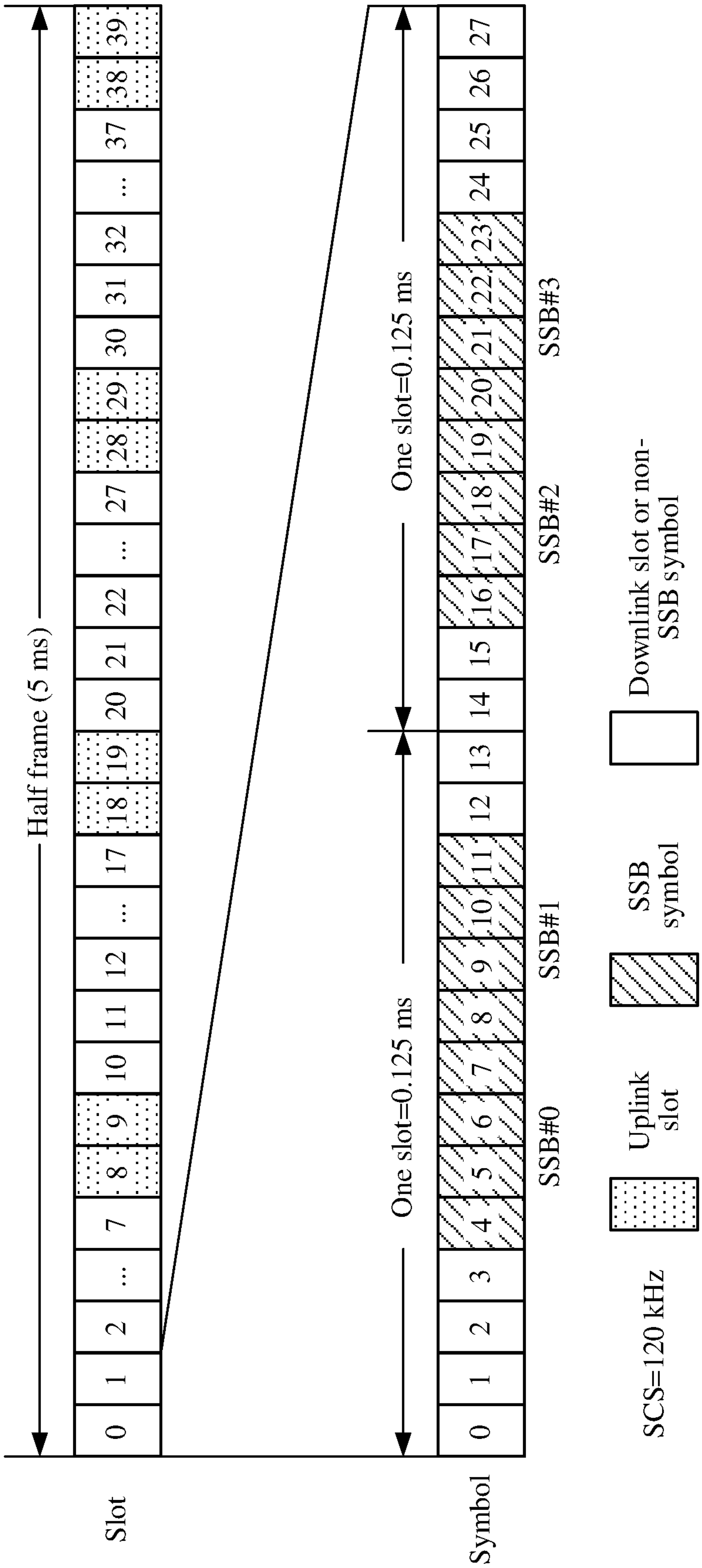

Half frame (5 ms)
Slot
0
1
2
...
7
8
9
10
11
12
...
17
18
19
20
21
22
...
27
28
29
30
31
32
...
37
38
39
One slot=0.125 ms
One slot=0.125 ms
Symbol
0
1
2
3
4
5
6
7
8
9
10
11
12
13
14
15
16
17
18
19
20
21
22
23
24
25
26
27
SSB#0
SSB#1
SSB#2
SSB#3
SCS=120 kHz
Uplink slot
SSB symbol
Downlink slot or non-SSB symbol


FIG. 7

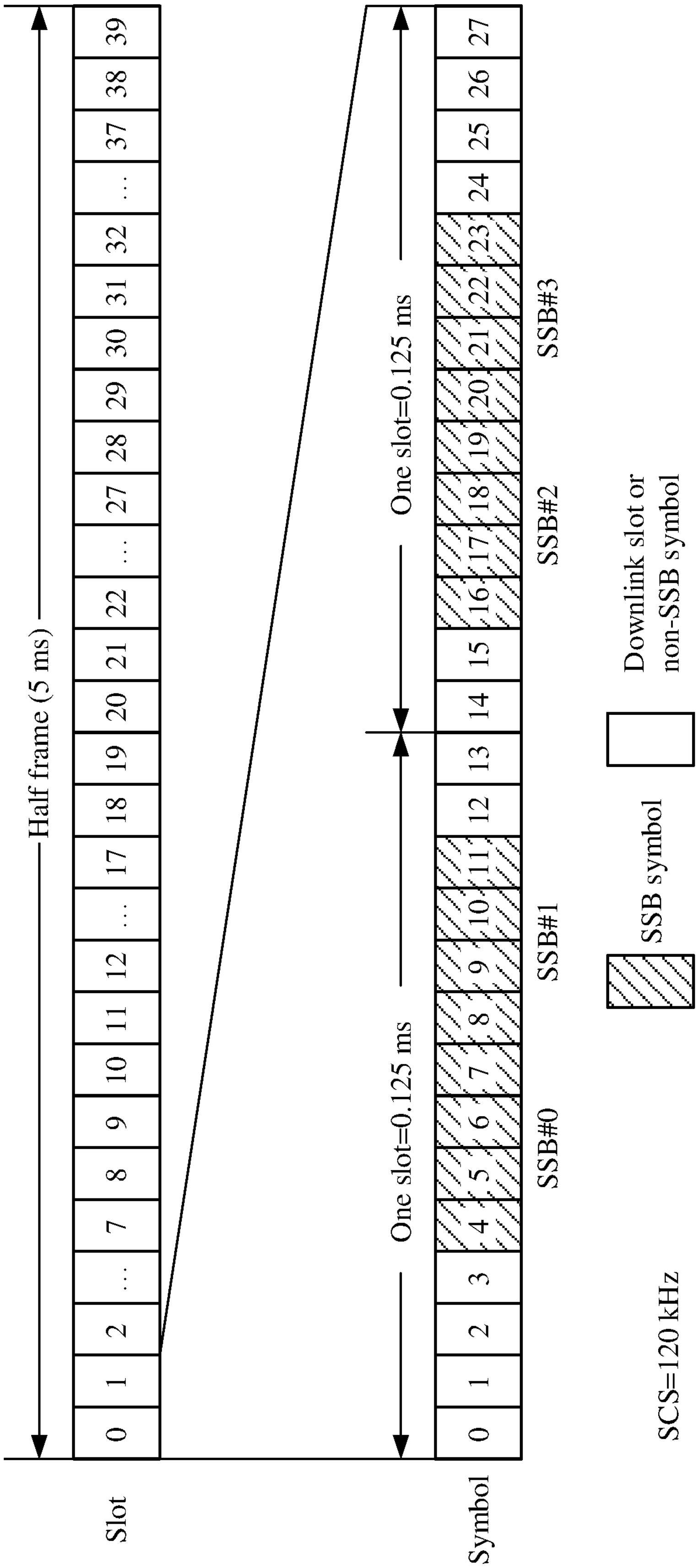
Slot
Symbol
Half frame (5 ms)
One slot=0.125 ms
One slot=0.125 ms
SSB#0
SSB#1
SSB#2
SSB#3
SSB symbol
Downlink slot or non-SSB symbol
SCS=120 kHz

FIG. 8

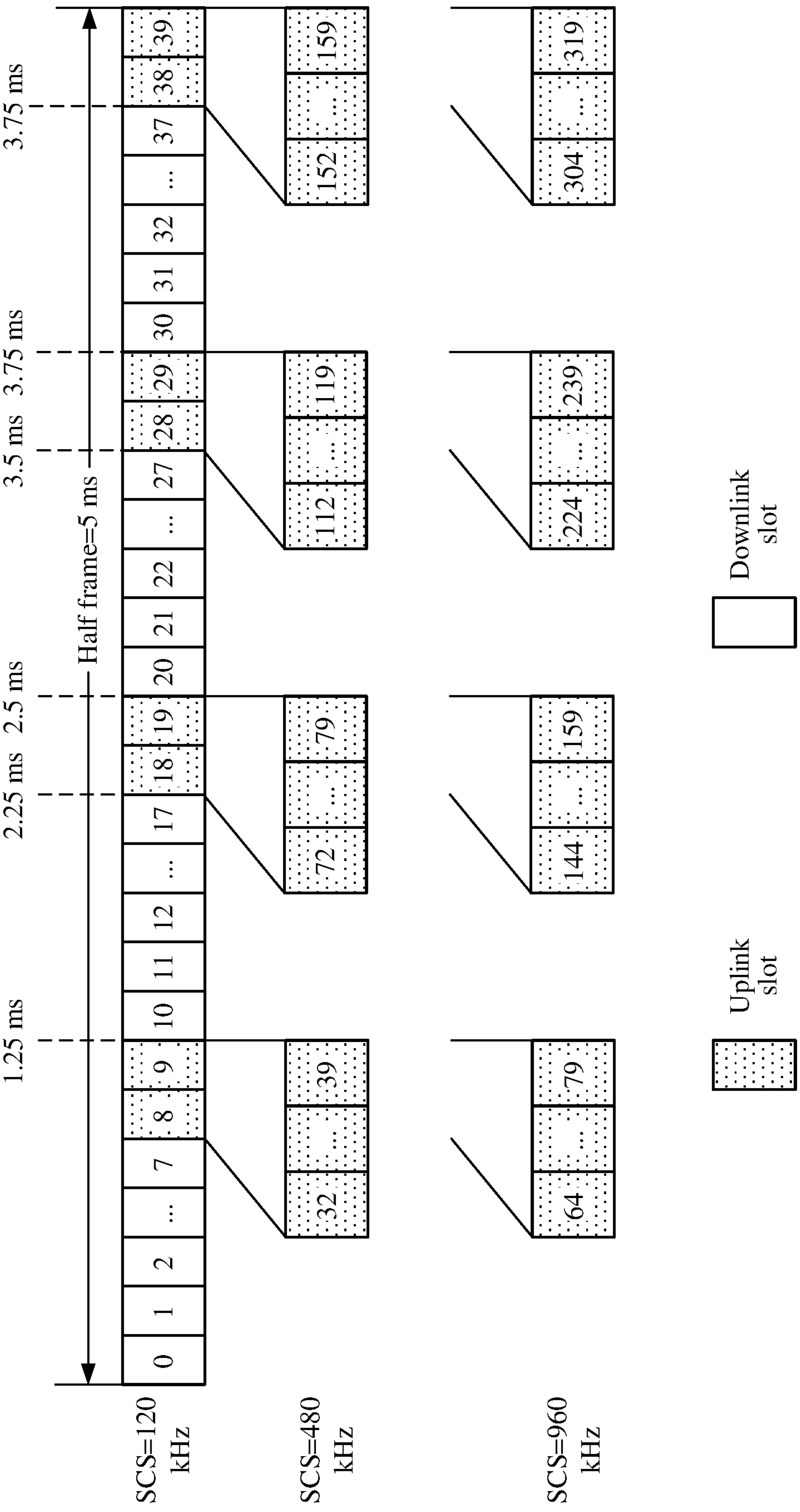

1.25 ms
2.25 ms
2.5 ms
3.5 ms
3.75 ms
3.75 ms
Half frame=5 ms
SCS=120 kHz
SCS=480 kHz
SCS=960 kHz
0
1
2
...
7
8
9
10
11
12
...
17
18
19
20
21
22
...
27
28
29
30
31
32
...
37
38
39
32
...
39
72
...
79
112
...
119
152
...
159
64
...
79
144
...
159
224
...
239
304
...
319
Uplink slot
Downlink slot


FIG. 9

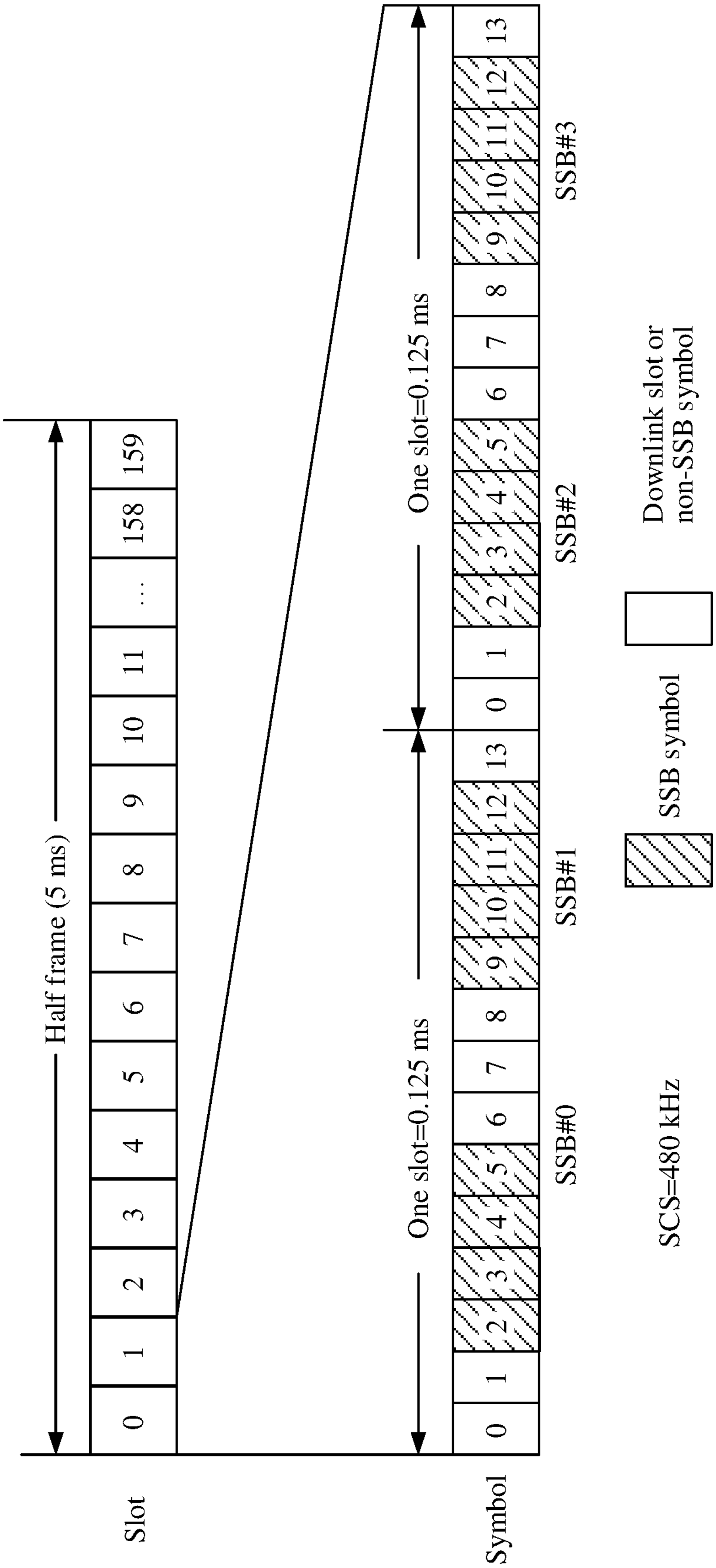
Slot
Symbol
Half frame (5 ms)
One slot=0.125 ms
One slot=0.125 ms
SSB#0
SSB#1
SSB#2
SSB#3
SCS=480 kHz
SSB symbol
Downlink slot or non-SSB symbol

FIG. 10

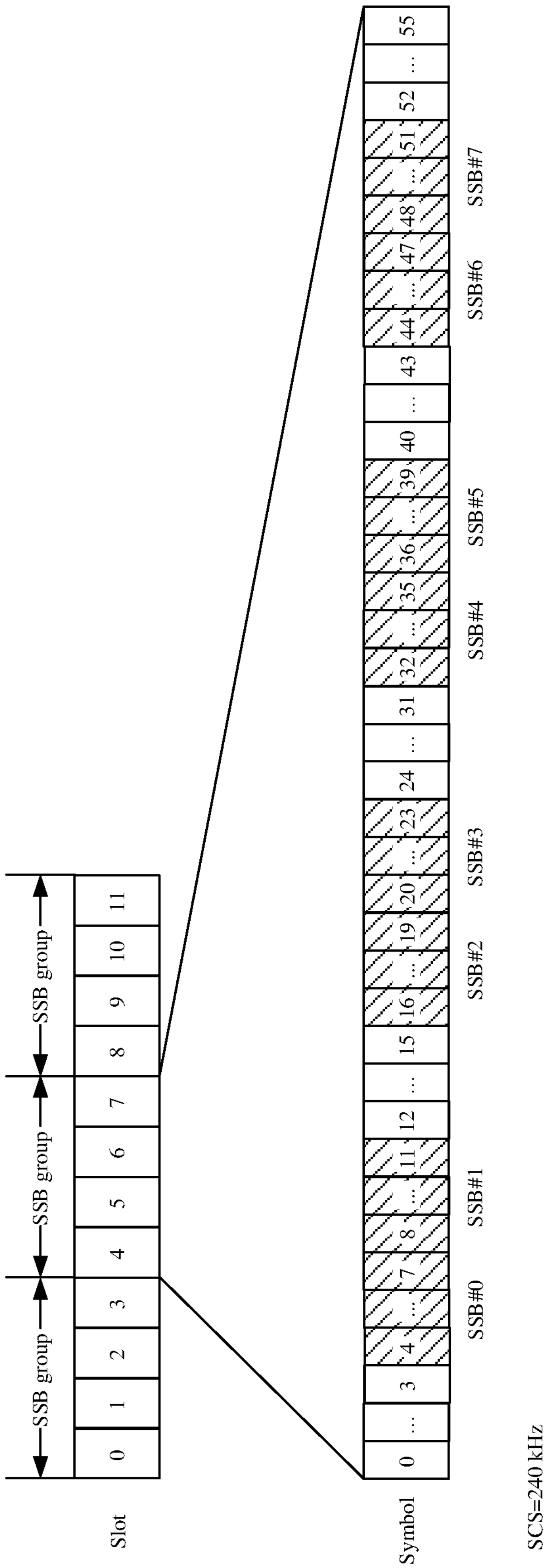
Slot
SSB group
SSB group
SSB group
0 1 2 3 4 5 6 7 8 9 10 11
Symbol
0 … 3 4 … 7 8 … 11 12 … 15 16 … 19 20 … 23 24 … 31 32 … 35 36 … 39 40 … 43 44 … 47 48 … 51 52 … 55
SSB#0
SSB#1
SSB#2
SSB#3
SSB#4
SSB#5
SSB#6
SSB#7
SCS=240 kHz

FIG. 11

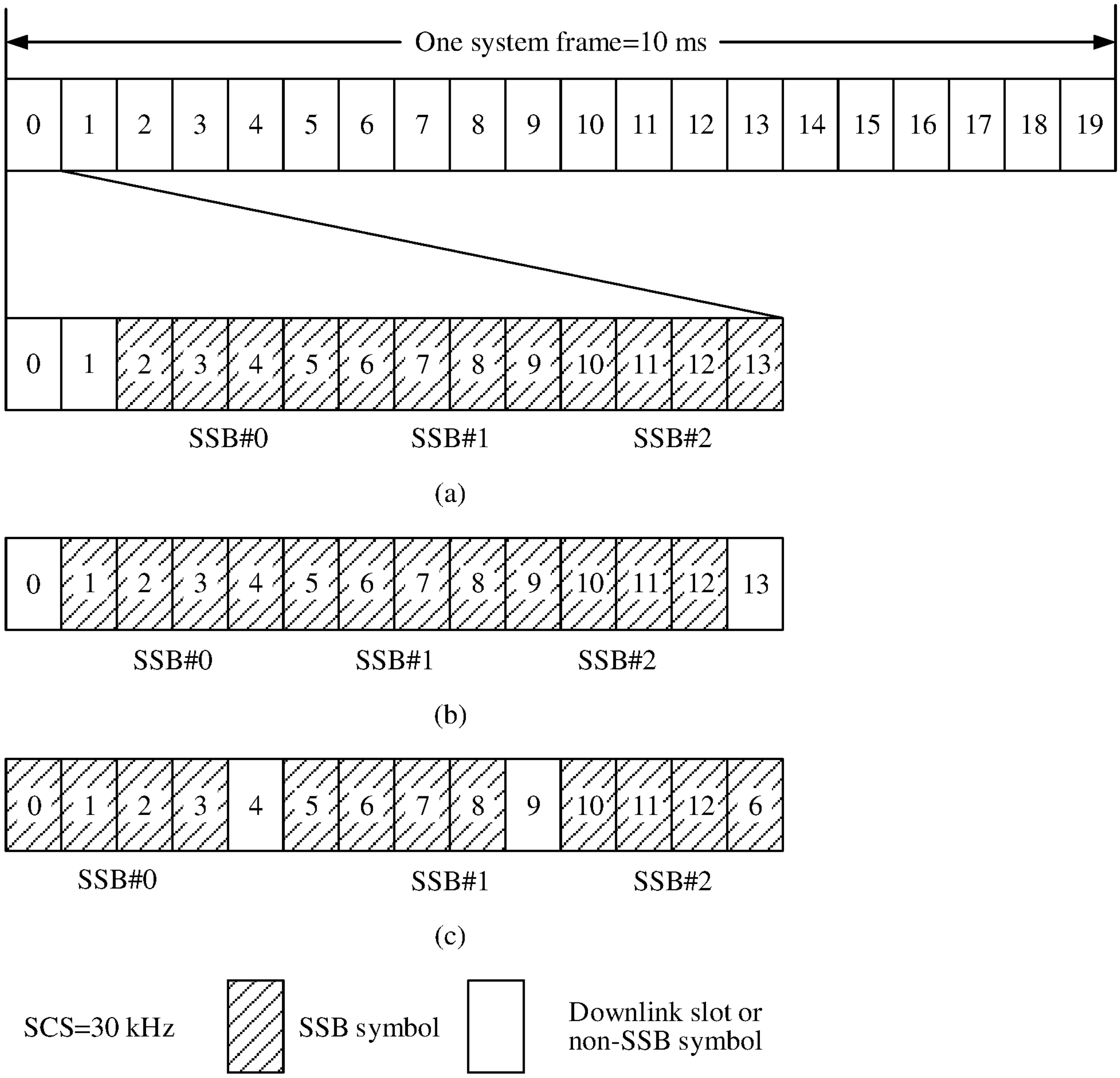
One system frame=10 ms
0
1
2
3
4
5
6
7
8
9
10
11
12
13
14
15
16
17
18
19
SSB#0
SSB#1
SSB#2
(a)
(b)
(c)
SCS=30 kHz
SSB symbol
Downlink slot or non-SSB symbol

FIG. 12

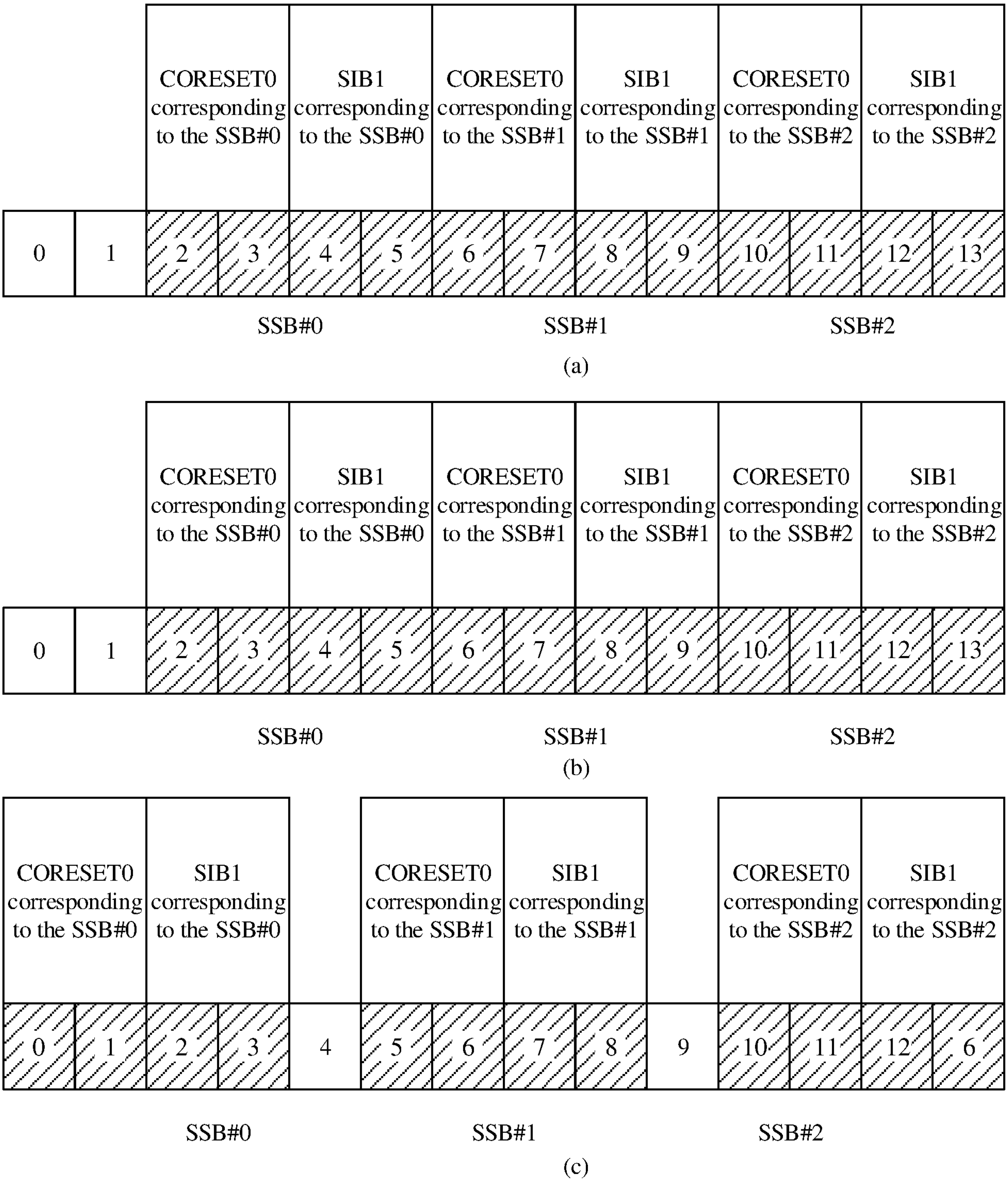
CORESET0 corresponding to the SSB#0
SIB1 corresponding to the SSB#0
CORESET0 corresponding to the SSB#1
SIB1 corresponding to the SSB#1
CORESET0 corresponding to the SSB#2
SIB1 corresponding to the SSB#2
0 1 2 3 4 5 6 7 8 9 10 11 12 13
SSB#0
SSB#1
SSB#2
(a)
CORESET0 corresponding to the SSB#0
SIB1 corresponding to the SSB#0
CORESET0 corresponding to the SSB#1
SIB1 corresponding to the SSB#1
CORESET0 corresponding to the SSB#2
SIB1 corresponding to the SSB#2
0 1 2 3 4 5 6 7 8 9 10 11 12 13
SSB#0
SSB#1
SSB#2
(b)
CORESET0 corresponding to the SSB#0
SIB1 corresponding to the SSB#0
CORESET0 corresponding to the SSB#1
SIB1 corresponding to the SSB#1
CORESET0 corresponding to the SSB#2
SIB1 corresponding to the SSB#2
0 1 2 3 4 5 6 7 8 9 10 11 12 6
SSB#0
SSB#1
SSB#2
(c)

FIG. 13

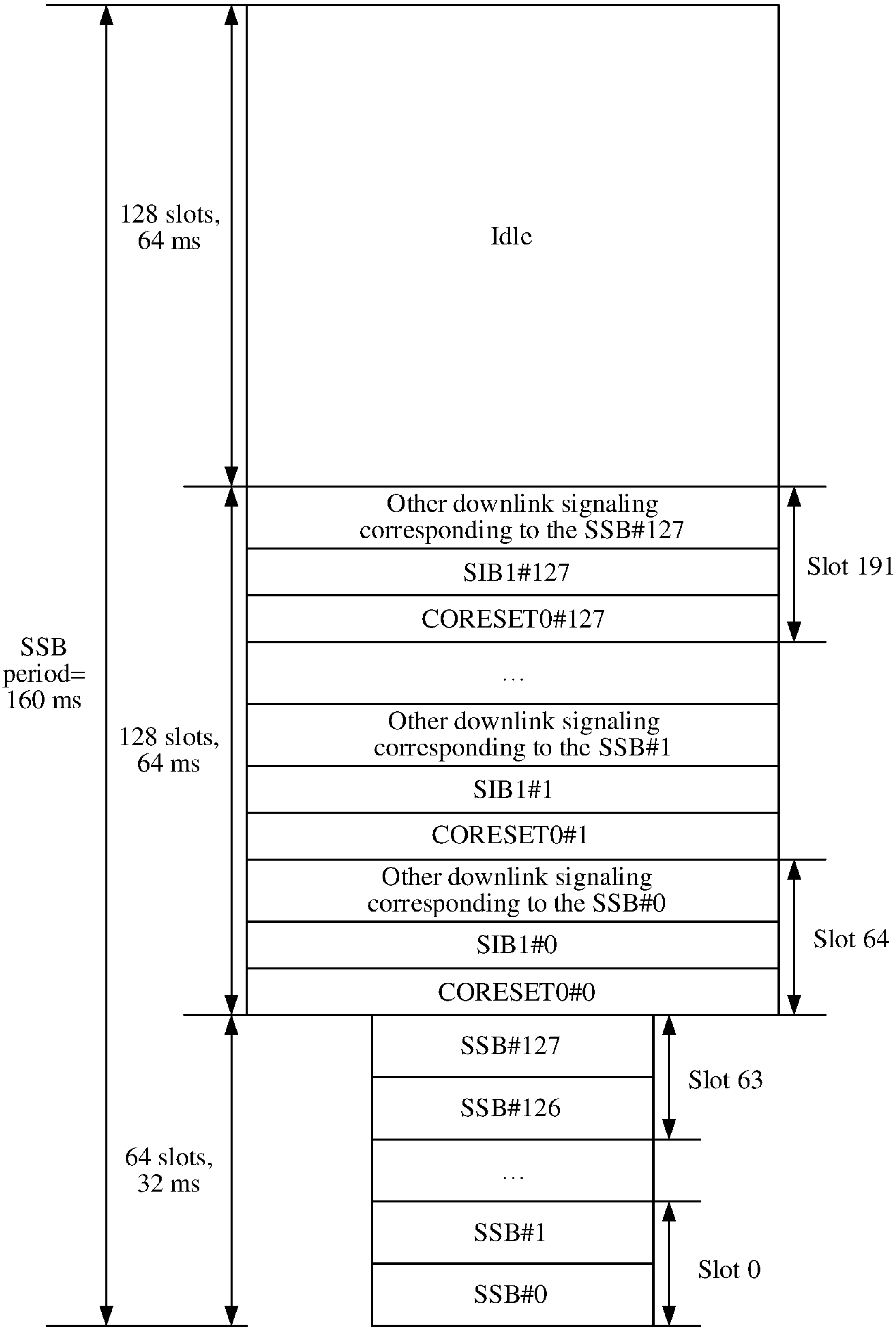
128 slots,
64 ms
Idle
SSB
period=
160 ms
Other downlink signaling
corresponding to the SSB#127
SIB1#127
CORESET0#127
Slot 191
...
Other downlink signaling
corresponding to the SSB#1
SIB1#1
CORESET0#1
128 slots,
64 ms
Other downlink signaling
corresponding to the SSB#0
SIB1#0
CORESET0#0
Slot 64
SSB#127
SSB#126
Slot 63
64 slots,
32 ms
...
SSB#1
SSB#0
Slot 0

FIG. 14

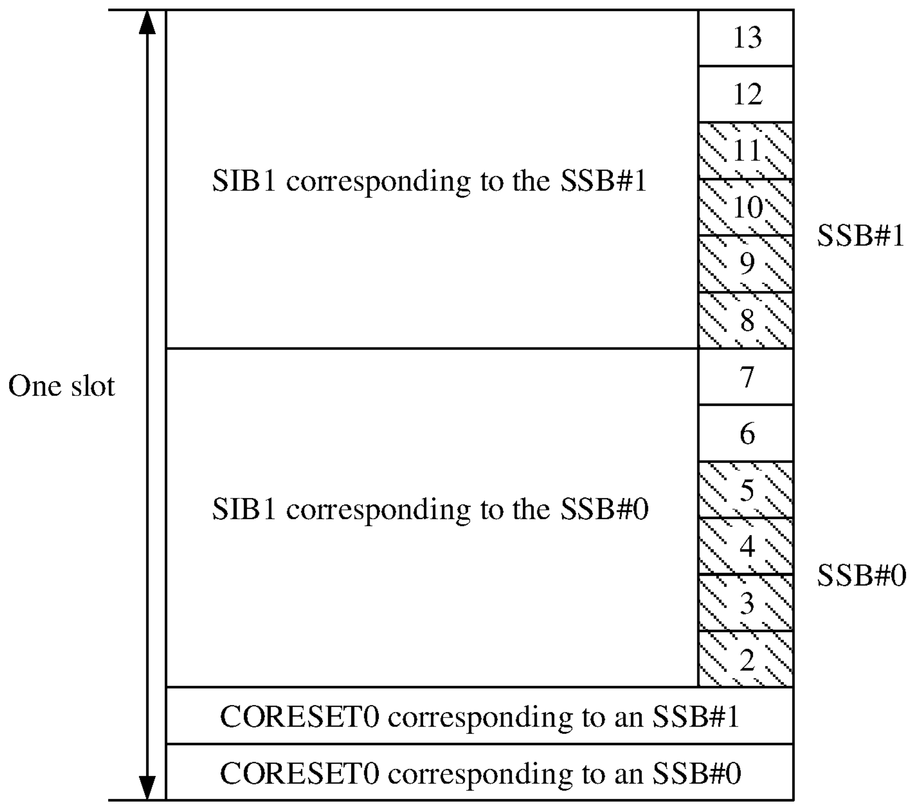
One slot
SIB1 corresponding to the SSB#1
SIB1 corresponding to the SSB#0
13
12
11
10
9
8
7
6
5
4
3
2
SSB#1
SSB#0
CORESET0 corresponding to an SSB#1
CORESET0 corresponding to an SSB#0

FIG. 15

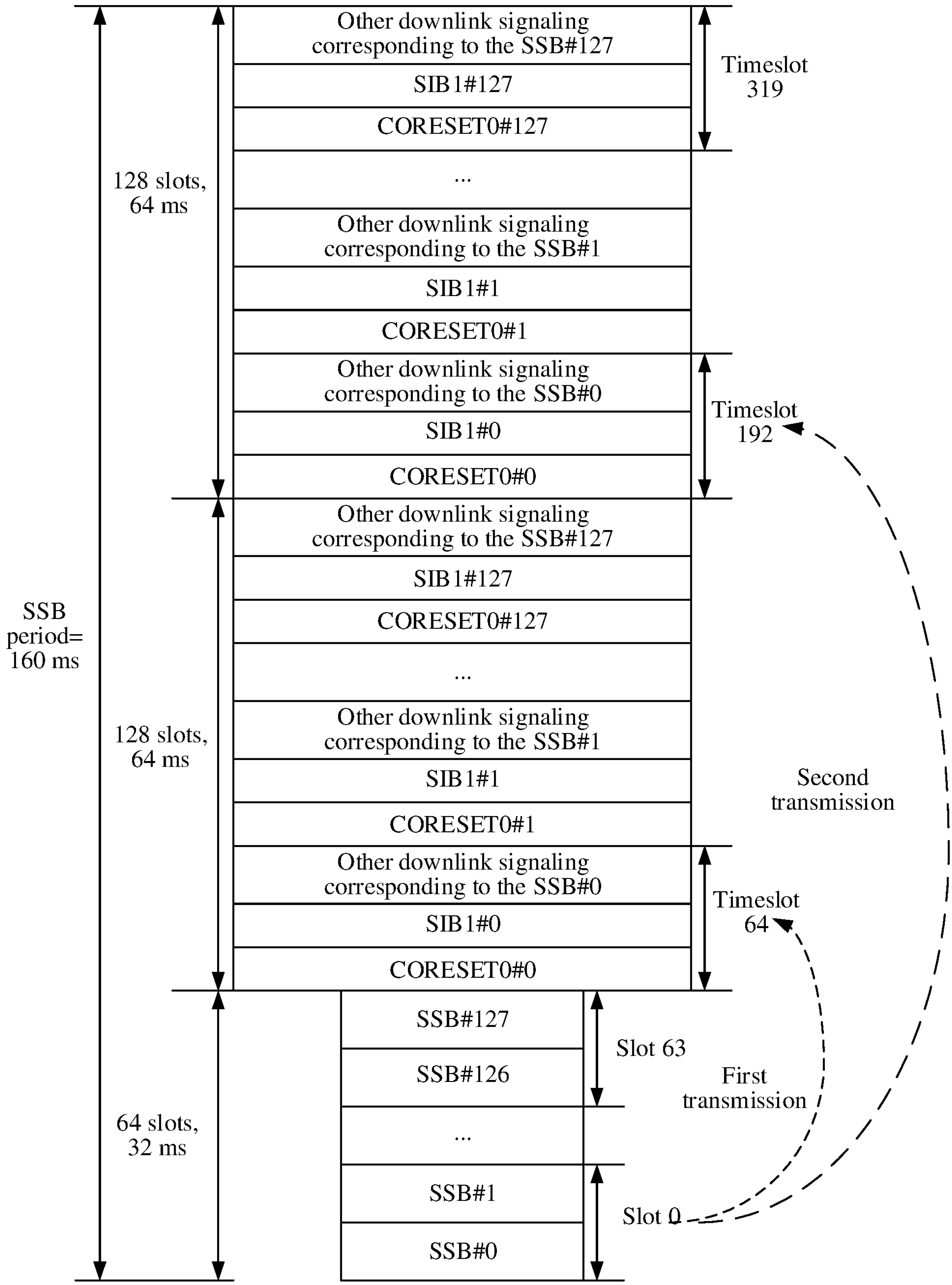
Other downlink signaling corresponding to the SSB#127
SIB1#127
CORESET0#127
Timeslot 319
128 slots, 64 ms
...
Other downlink signaling corresponding to the SSB#1
SIB1#1
CORESET0#1
Other downlink signaling corresponding to the SSB#0
SIB1#0
CORESET0#0
Timeslot 192
Other downlink signaling corresponding to the SSB#127
SIB1#127
CORESET0#127
SSB period= 160 ms
...
128 slots, 64 ms
Other downlink signaling corresponding to the SSB#1
SIB1#1
CORESET0#1
Second transmission
Other downlink signaling corresponding to the SSB#0
SIB1#0
CORESET0#0
Timeslot 64
SSB#127
SSB#126
Slot 63
First transmission
64 slots, 32 ms
...
SSB#1
SSB#0
Slot 0

FIG. 16

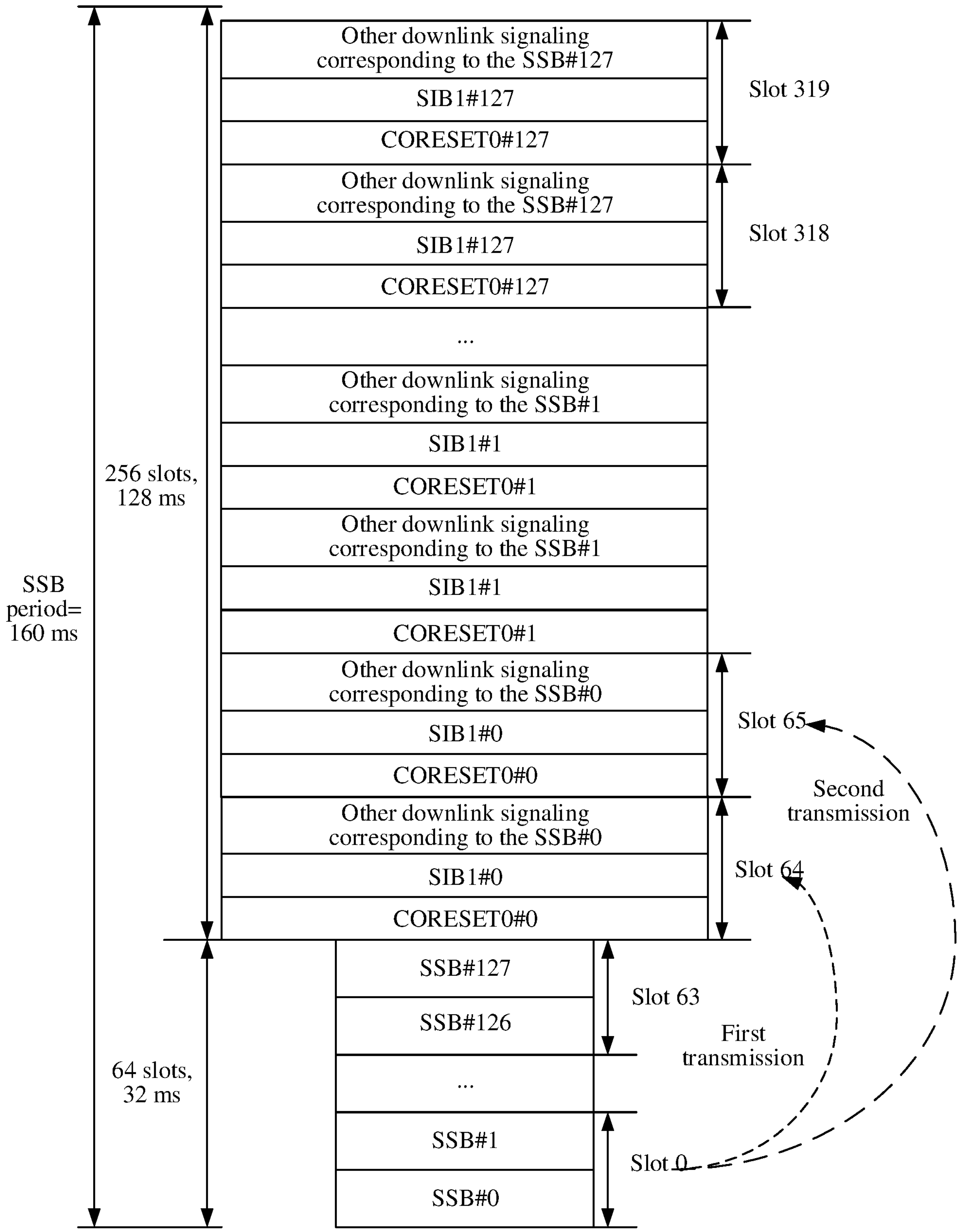
Other downlink signaling corresponding to the SSB#127
SIB1#127
CORESET0#127
Slot 319
Other downlink signaling corresponding to the SSB#127
SIB1#127
CORESET0#127
Slot 318
...
Other downlink signaling corresponding to the SSB#1
SIB1#1
CORESET0#1
Other downlink signaling corresponding to the SSB#1
SIB1#1
CORESET0#1
256 slots, 128 ms
SSB period= 160 ms
Other downlink signaling corresponding to the SSB#0
SIB1#0
CORESET0#0
Slot 65
Second transmission
Other downlink signaling corresponding to the SSB#0
SIB1#0
CORESET0#0
Slot 64
SSB#127
SSB#126
Slot 63
First transmission
64 slots, 32 ms
...
SSB#1
SSB#0
Slot 0

FIG. 17

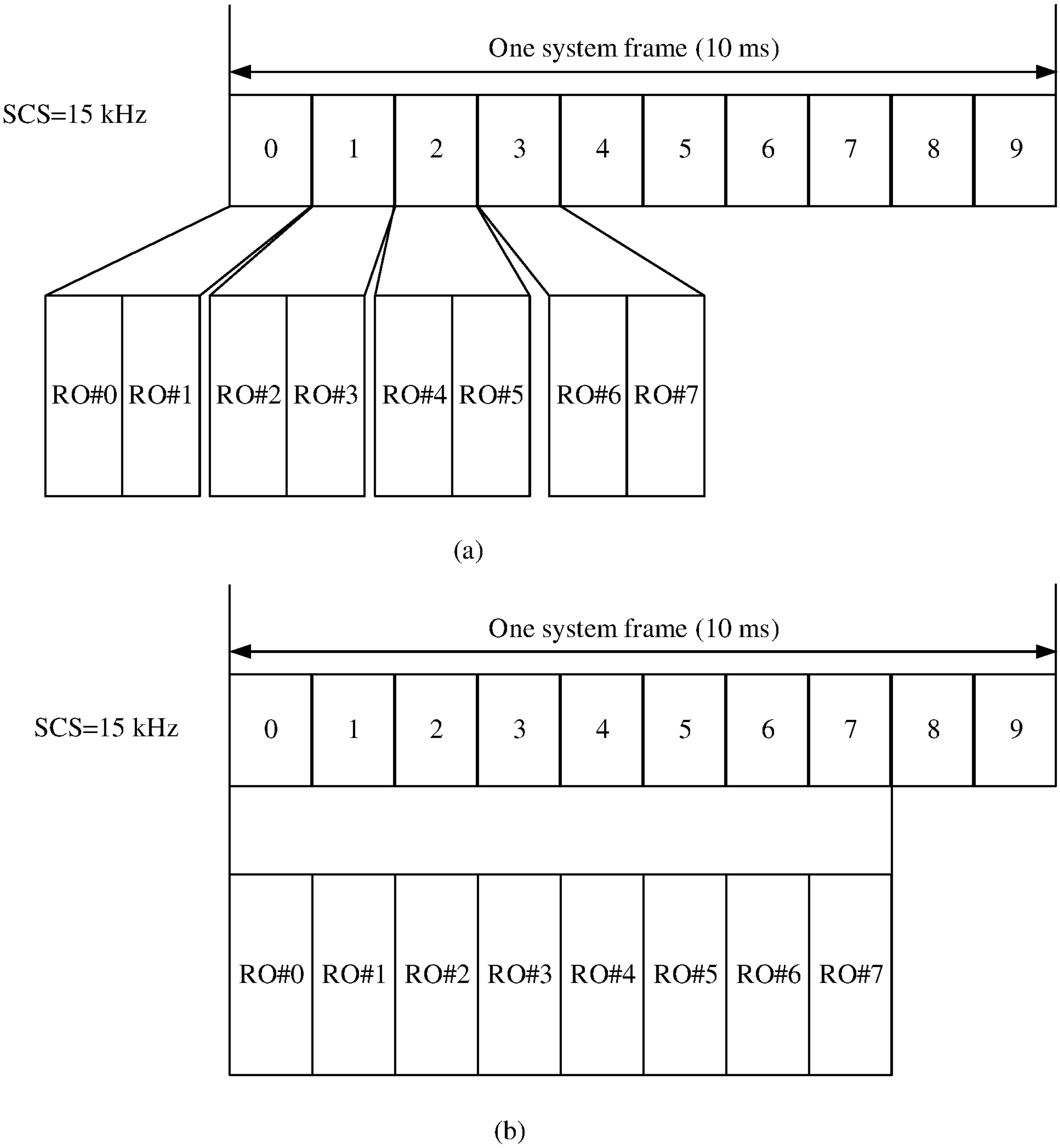
One system frame (10 ms)
SCS=15 kHz
0
1
2
3
4
5
6
7
8
9
RO#0
RO#1
RO#2
RO#3
RO#4
RO#5
RO#6
RO#7
(a)
One system frame (10 ms)
SCS=15 kHz
0
1
2
3
4
5
6
7
8
9
RO#0
RO#1
RO#2
RO#3
RO#4
RO#5
RO#6
RO#7
(b)

FIG. 18

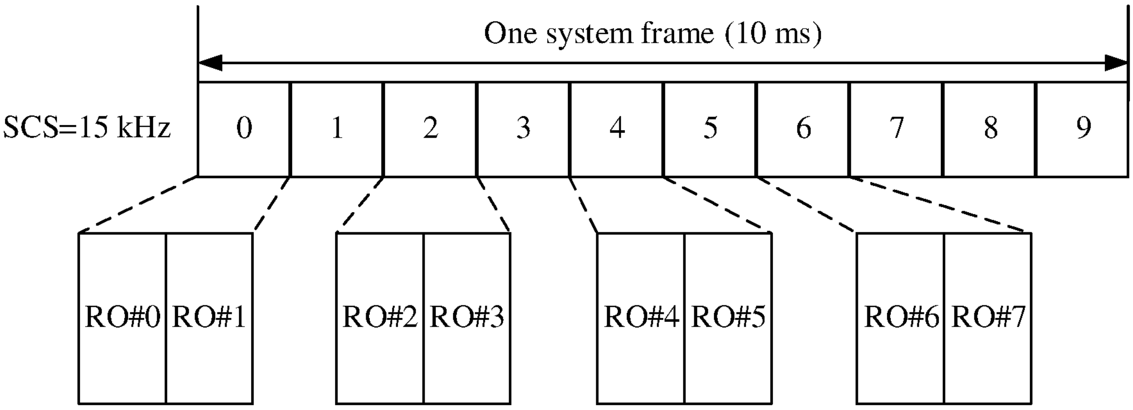
One system frame (10 ms)
SCS=15 kHz
0
1
2
3
4
5
6
7
8
9
RO#0
RO#1
RO#2
RO#3
RO#4
RO#5
RO#6
RO#7

(a)

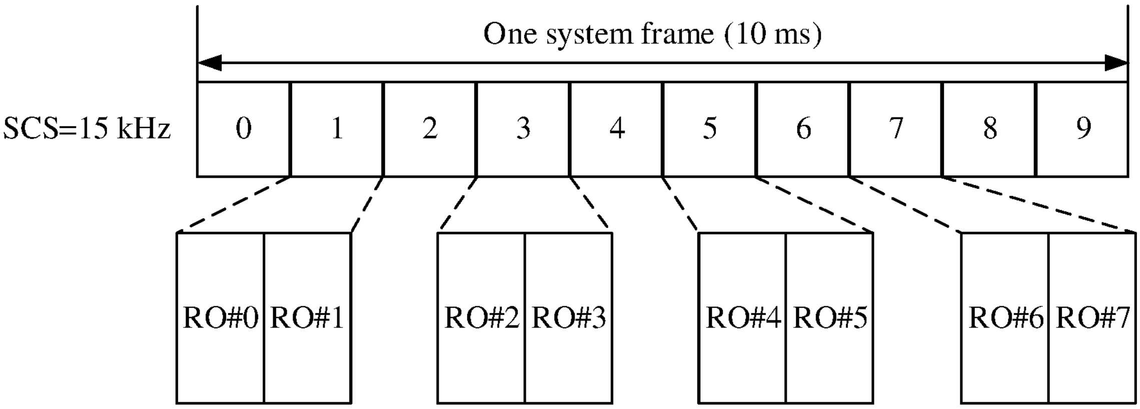
One system frame (10 ms)
SCS=15 kHz
0
1
2
3
4
5
6
7
8
9
RO#0
RO#1
RO#2
RO#3
RO#4
RO#5
RO#6
RO#7

(b)

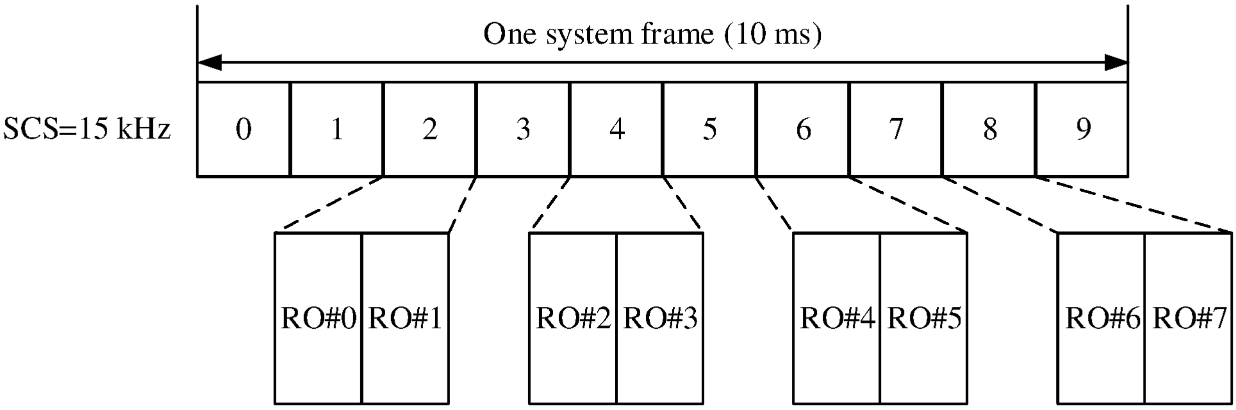
One system frame (10 ms)
SCS=15 kHz
0
1
2
3
4
5
6
7
8
9
RO#0
RO#1
RO#2
RO#3
RO#4
RO#5
RO#6
RO#7

(c)

FIG. 19

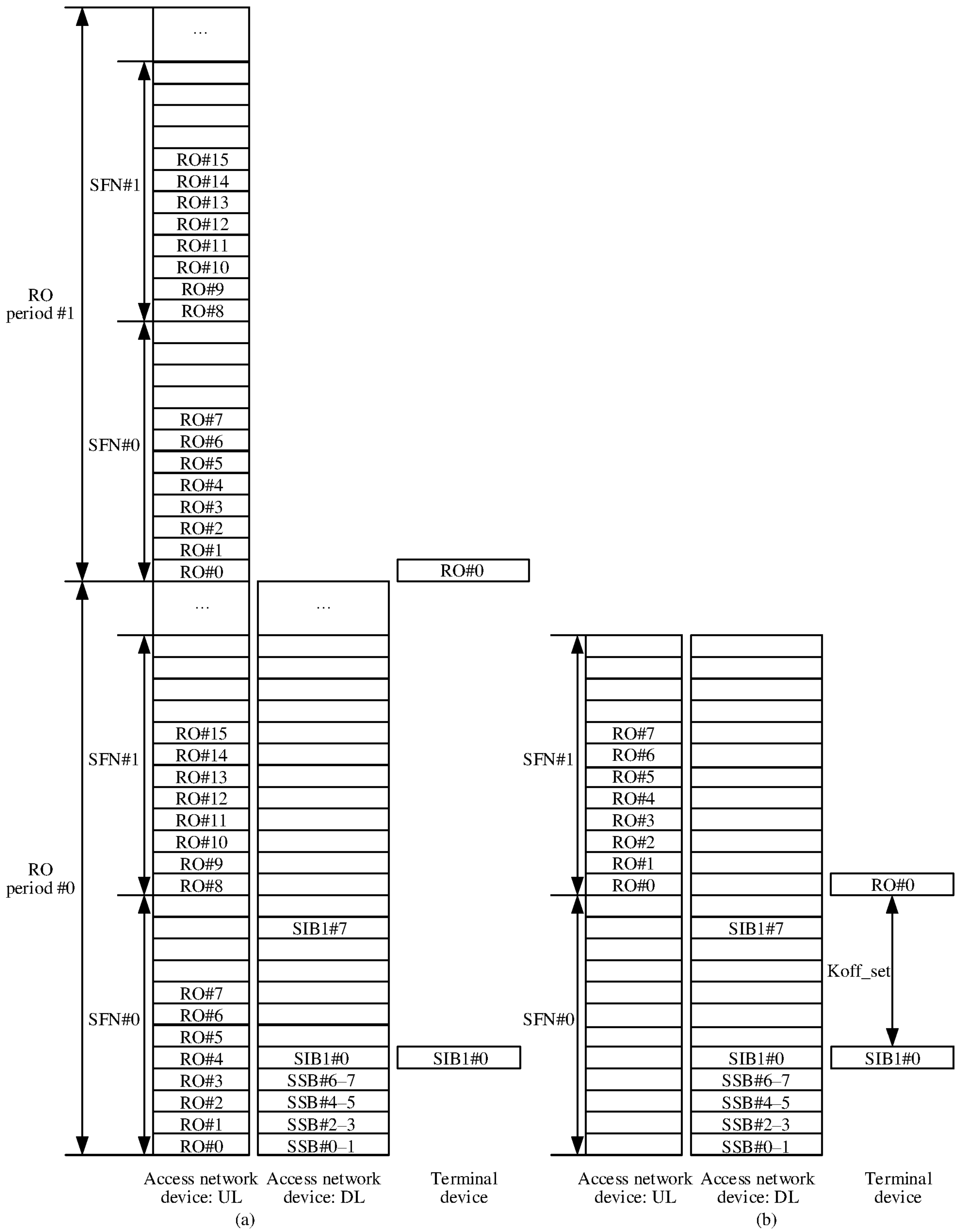
RO period #1
SFN#1
SFN#0
RO#15
RO#14
RO#13
RO#12
RO#11
RO#10
RO#9
RO#8
RO#7
RO#6
RO#5
RO#4
RO#3
RO#2
RO#1
RO#0
RO period #0
SIB1#7
SIB1#0
SSB#6–7
SSB#4–5
SSB#2–3
SSB#0–1
Koff_set
Access network device: UL
Access network device: DL
Terminal device
(a)
(b)

FIG. 20

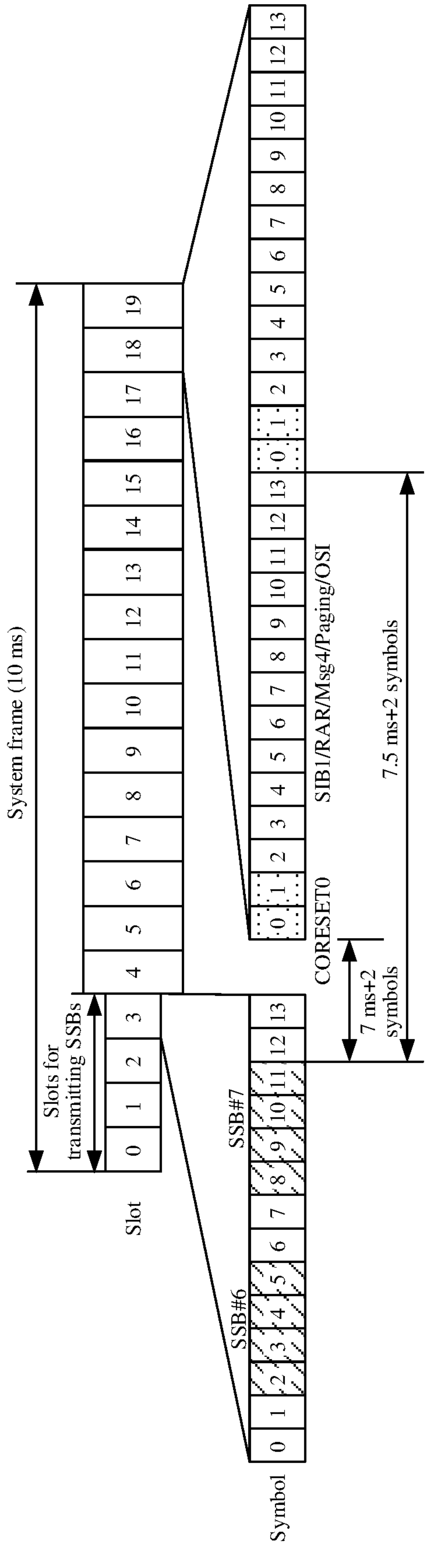
System frame (10 ms)
Slots for transmitting SSBs
Slot
Symbol
SSB#6
SSB#7
CORESET0
SIB1/RAR/Msg4/Paging/OSI
7 ms+2 symbols
7.5 ms+2 symbols

FIG. 21

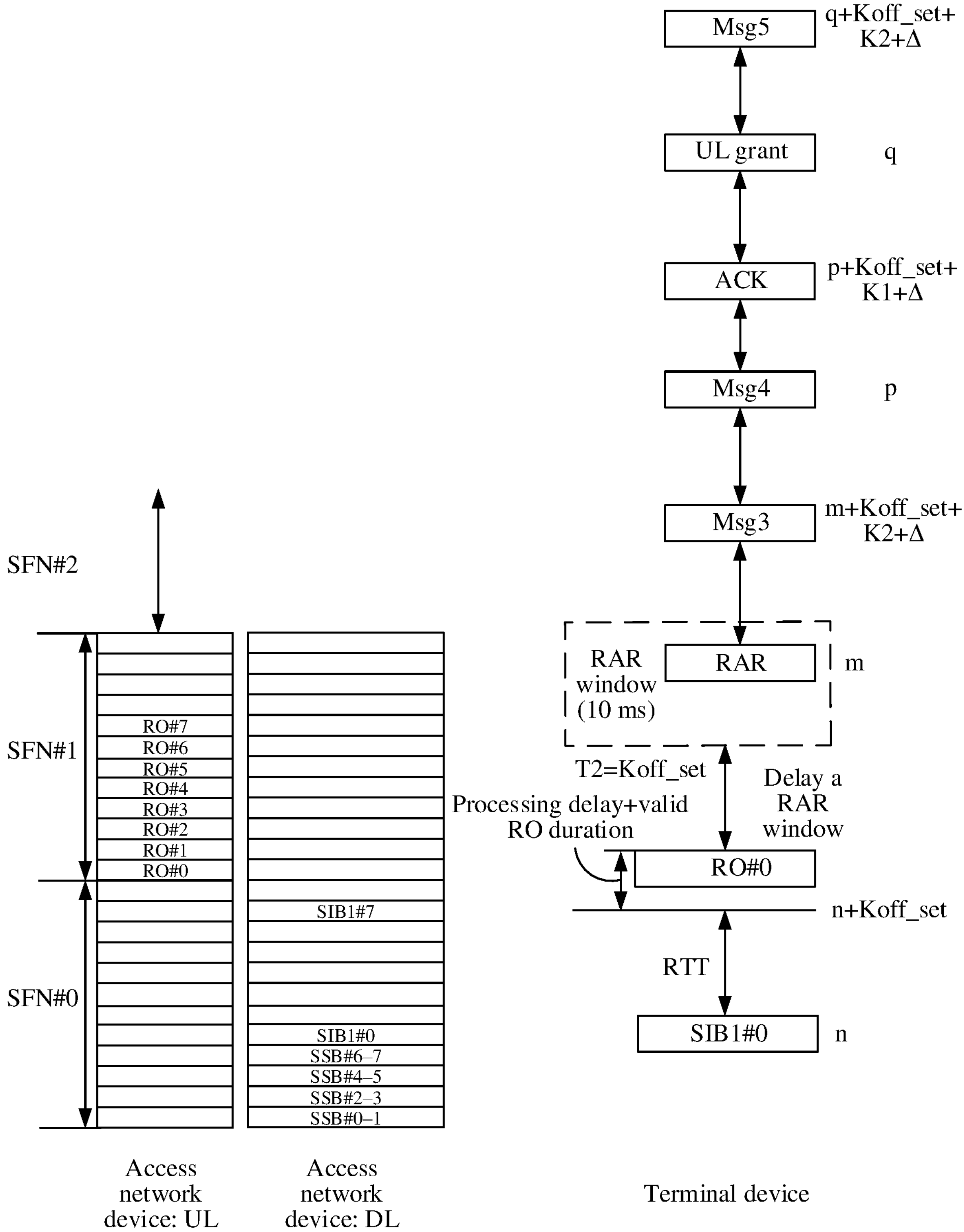
Msg5
q+Koff_set+K2+Δ
UL grant
q
ACK
p+Koff_set+K1+Δ
Msg4
p
Msg3
m+Koff_set+K2+Δ
SFN#2
RAR window (10 ms)
RAR
m
SFN#1
RO#7
RO#6
RO#5
RO#4
RO#3
RO#2
RO#1
RO#0
T2=Koff_set
Delay a RAR window
Processing delay+valid RO duration
RO#0
n+Koff_set
SIB1#7
RTT
SFN#0
SIB1#0
n
SIB1#0
SSB#6–7
SSB#4–5
SSB#2–3
SSB#0–1
Access network device: UL
Access network device: DL
Terminal device

FIG. 22

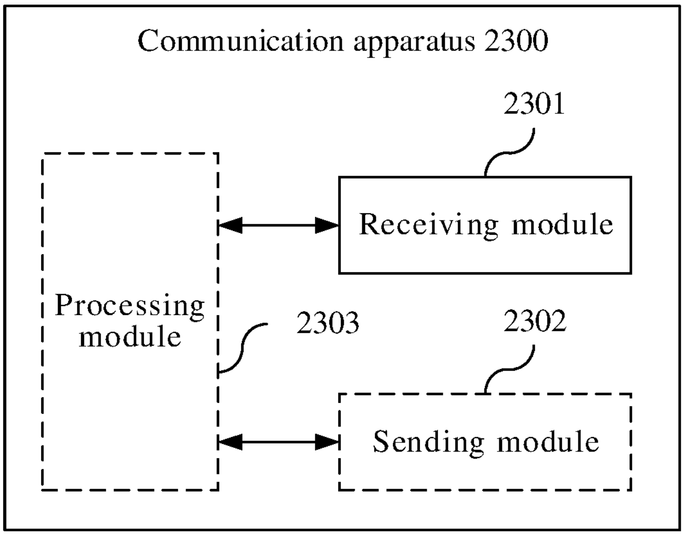
Communication apparatus 2300
2301
Receiving module
Processing module
2303
2302
Sending module

FIG. 23

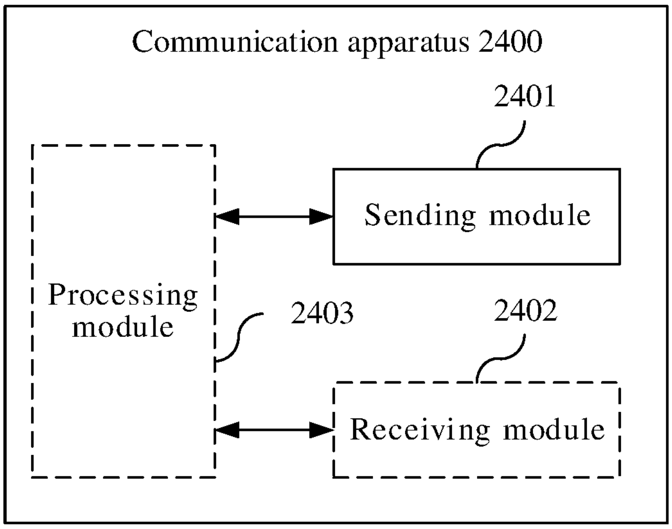
Communication apparatus 2400
2401
Sending module
Processing module
2403
2402
Receiving module

FIG. 24

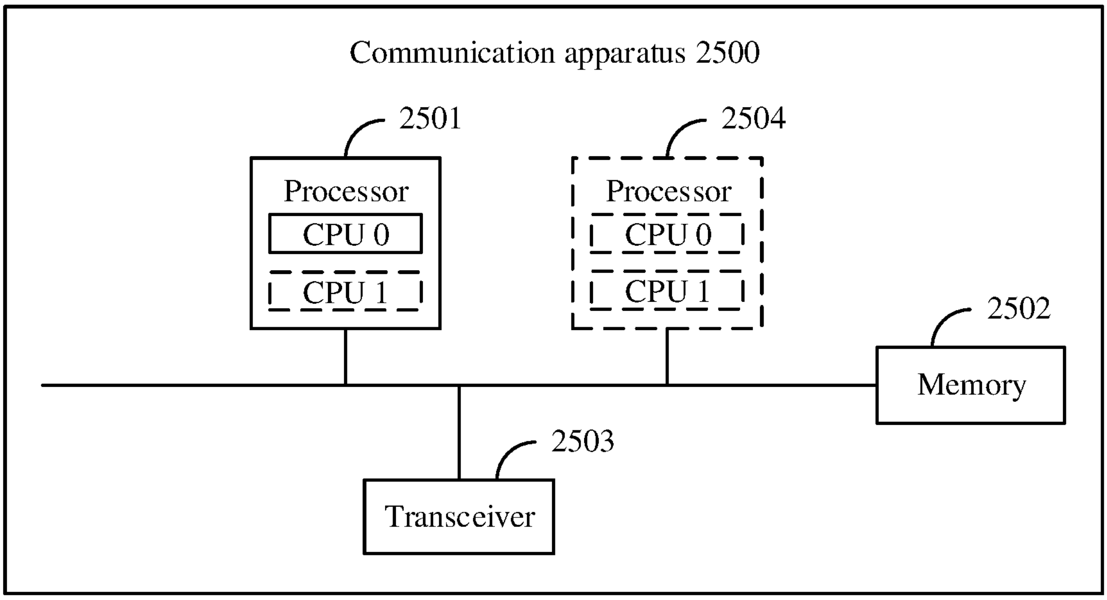
Communication apparatus 2500
2501
2504
Processor
CPU 0
CPU 1
Processor
CPU 0
CPU 1
2502
Memory
2503
Transceiver

FIG. 25

**INTERNATIONAL SEARCH REPORT**

International application No.
**PCT/CN2023/089041**

**A. CLASSIFICATION OF SUBJECT MATTER**

H04W74/08(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP: 同步信号块, 资源, 时域, 时频, 数量, 系统帧号, 大于, SSB, SS block, resource, number, system frame number, SFN, more, 64

**C. DOCUMENTS CONSIDERED TO BE RELEVANT**

| Category* | Citation of document, with indication, where appropriate, of the relevant passages | Relevant to claim No. |
|---|---|---|
| PX | WO 2023007204 A1 (OROPE FRANCE SARL) 02 February 2023 (2023-02-02)<br>description, paragraphs [0005]-[0066] | 1-4, 9-22 |
| X | WO 2021019695 A1 (NTT DOCOMO INC.) 04 February 2021 (2021-02-04)<br>description, paragraphs [0008]-[0201] | 1-4, 9-22 |
| X | WO 2020204657 A1 (SAMSUNG ELECTRONICS CO., LTD.) 08 October 2020 (2020-10-08)<br>description, paragraphs [6]-[141] | 1-4, 9-22 |
| A | CN 110050506 A (LG ELECTRONICS INC.) 23 July 2019 (2019-07-23)<br>entire document | 1-22 |

☐ Further documents are listed in the continuation of Box C.

☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **06 July 2023** | **24 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/089041**

| Patent document cited in search report | | | Publication date (day/month/year) | Patent family member(s) | | | Publication date (day/month/year) |
|---|---|---|---|---|---|---|---|
| WO | 2023007204 | A1 | 02 February 2023 | None | | | |
| WO | 2021019695 | A1 | 04 February 2021 | US | 2022286987 | A1 | 08 September 2022 |
| WO | 2020204657 | A1 | 08 October 2020 | KR | 20200117767 | A | 14 October 2020 |
| CN | 110050506 | A | 23 July 2019 | KR | 20190057205 | A | 28 May 2019 |
| | | | | KR | 102104902 | B1 | 29 May 2020 |
| | | | | US | 2020196356 | A1 | 18 June 2020 |
| | | | | US | 11116014 | B2 | 07 September 2021 |
| | | | | WO | 2019098770 | A1 | 23 May 2019 |
| | | | | JP | 2020507972 | A | 12 March 2020 |
| | | | | JP | 6843252 | B2 | 17 March 2021 |
| | | | | US | 2019208550 | A1 | 04 July 2019 |
| | | | | US | 10609735 | B2 | 31 March 2020 |
| | | | | EP | 3678316 | A4 | 08 July 2020 |
| | | | | KR | 20200018737 | A | 19 February 2020 |
| | | | | KR | 102118057 | B1 | 02 June 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210417982